# EUROPEAN PATENT APPLICATION

(11) **EP 3 893 514 A1**
(43) Date of publication of application: **13.10.2021**
(21) Application number: 19892975.4
(22) Date of filing: 20.11.2019
(51) Int. Cl.: H04N 21/84, H04N 21/845

(54) **INFORMATION PROCESSING DEVICE AND METHOD**

(30) Priority: 03.12.2018 JP 2018226649
(71) Applicant: Sony Group Corporation, Tokyo 108-0075 (JP)
(72) Inventor: KATSUMATA, Mitsuru, Tokyo 108-0075 (JP); HIRABAYASHI, Mitsuhiro, Tokyo 108-0075 (JP); TAKABAYASHI, Kazuhiko, Tokyo 108-0075 (JP); DEWA, Yoshiharu, Tokyo 108-0075 (JP); HAMADA, Toshiya, Tokyo 108-0075 (JP); TAKAHASHI, Ryohei, Tokyo 108-0075 (JP); TSURU, Takumi, Tokyo 108-0075 (JP)
(74) Representative: D Young & Co LLP
(86) International application number: PCT/JP2019/045347
(87) International publication number: WO 2020/116154

(57) **Abstract**

The present disclosure relates to information processing apparatus and method that allow robustness of content reproduction to be improved.

Metadata regarding content is generated, the content expressing a three-dimensional object in a three-dimensional space and enabling a line-of-sight direction and a view-point position to be freely set at a time of reproduction, and the metadata including information enabling a bit rate to be selected at a time of distribution of the content. Metadata that includes, for example, as the above-described information, access information for a control file controlling reproduction of the content, is generated. The present disclosure may be applied to, for example, an image processing apparatus, an image encoding apparatus, or an image decoding apparatus.

## Description

### [Technical Field]

The present disclosure relates to information processing apparatus and method and, in particular, to information processing apparatus and method that enable robustness of content reproduction to be improved.

### [Background Art]

In the related art, there have been proposals for distribution of three-dimensional content (also referred to as 3D content) expressing three-dimensional objects (also referred to as 3D objects) in a three-dimensional space (also referred to as a 3D space). Additionally, as the 3D content, for example, there has been proposed 6DoF content that expresses three-dimensional objects in the three-dimensional space and that enables a line-of-sight direction and a view-point position to be freely set at the time of reproduction.

As a method for distributing 6DoF content, for example, there has been proposed a method in which the 3D space includes a plurality of 3D objects and in which the 6DoF content is transmitted as a plurality of object streams. There has been a proposal to use, in that case, for example, a description method referred to as Scene Description. As the Scene Description, there has been proposed a method (MPEG-4 Scene Description) in which a scene is expressed as a graph of a tree hierarchical structure referred to as a scene graph and in which the scene graph is expressed in a binary format or a text format (see, for example, NPL 1).

### [Citation List]

### [Non Patent Literature]

[NPL 1]
"ISO/IEC 14496-11," Second Edition, 2015-05-29

### [Summary]

### [Technical Problems]

However, in regard to transmission bands, the Scene Description has no function to adaptively distribute content depending on the transmission band. Thus, reproduction is enabled in a case where a sufficient transmission band can be provided for transmission of Scene Description data and media data, but a limited transmission band may prevent clients from acquiring or reproducing data or cause interrupted reproduction.

In view of such circumstances, an object of the present disclosure is to allow robustness of content reproduction to be improved.

### [Solution to Problems]

An information processing apparatus in an aspect of the present technology includes an information processing apparatus including a generation section that generates metadata regarding content expressing a three-dimensional object in a three-dimensional space and enabling a line-of-sight direction and a view-point position to be freely set at a time of reproduction, the metadata including information enabling a bit rate to be selected at a time of distribution of the content.

An information processing method in an aspect of the present technology includes an information processing method including generating metadata regarding content expressing a three-dimensional object in a three-dimensional space and enabling a line-of-sight direction and a view-point position to be freely set at a time of reproduction, the metadata including information enabling a bit rate to be selected at a time of distribution of the content.

The information processing apparatus and method in an aspect of the present technology generate the metadata regarding the content expressing the three-dimensional object in the three-dimensional space and enabling the line-of-sight direction and the view-point position to be freely set at the time of reproduction, the metadata including information enabling the bit rate to be selected at the time of distribution of the content.

### [Brief Description of Drawings]

[FIG. 1]

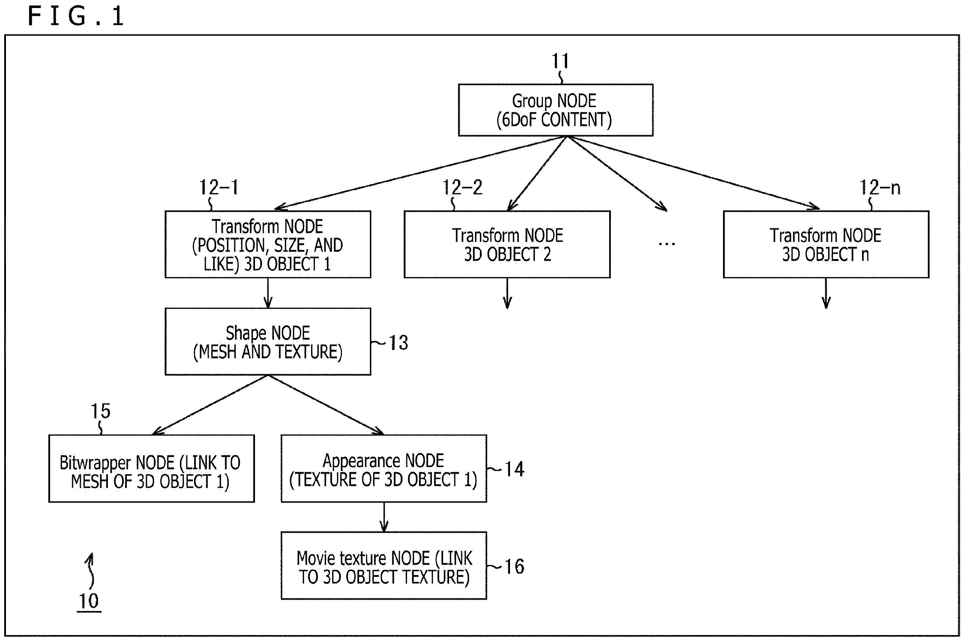

   FIG. 1 is a diagram illustrating an example of a scene graph.
[FIG. 2]

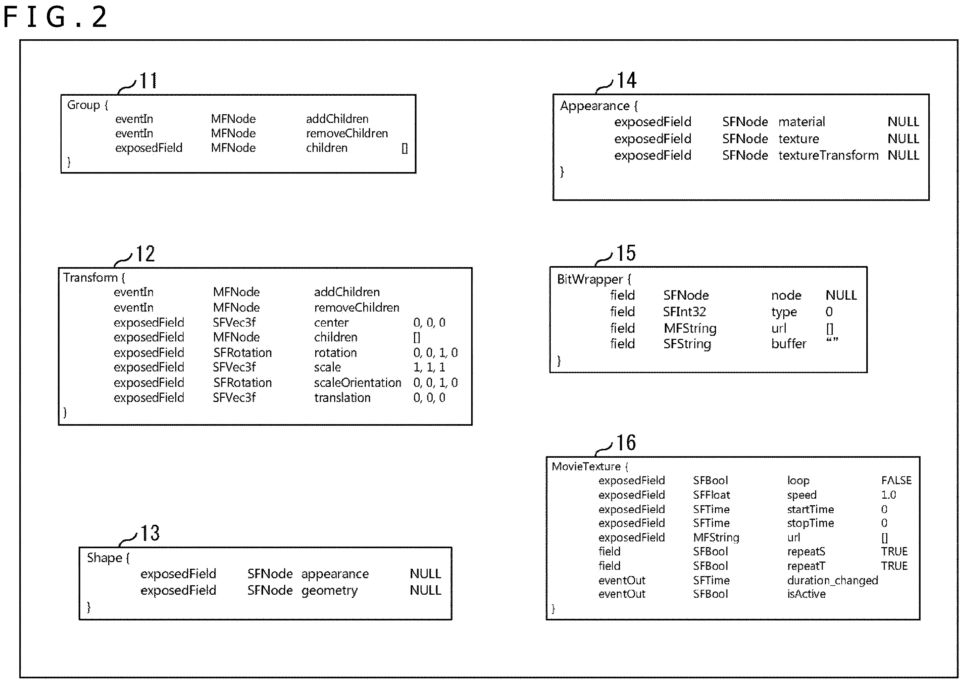

   FIG. 2 is a diagram illustrating an example of nodes.
[FIG. 3]

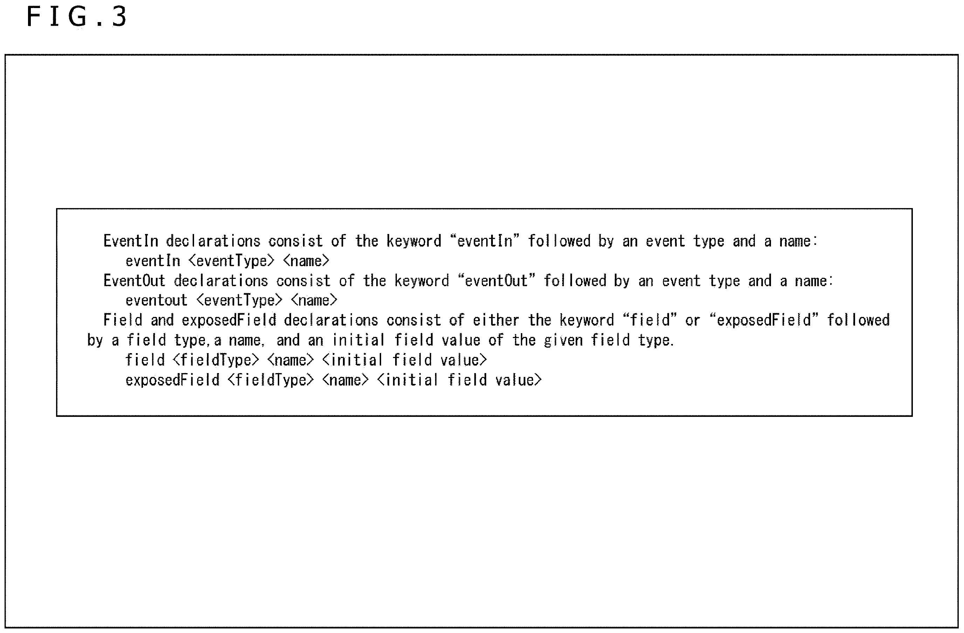

   FIG. 3 is a diagram illustrating an example of a syntax for the nodes.
[FIG. 4]

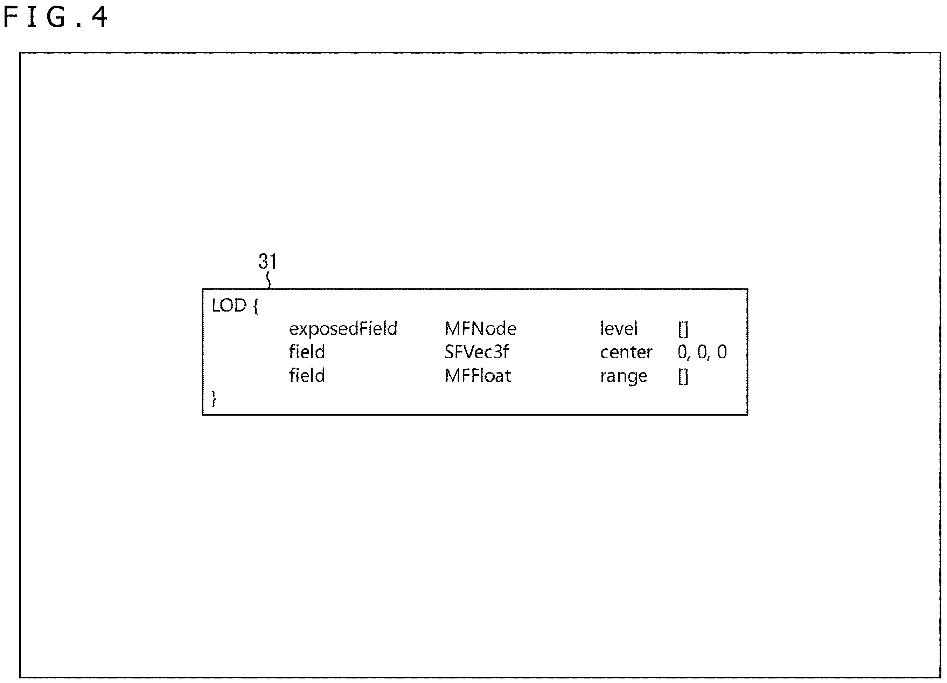

   FIG. 4 is a diagram illustrating an example of an LOD node.
[FIG. 5]

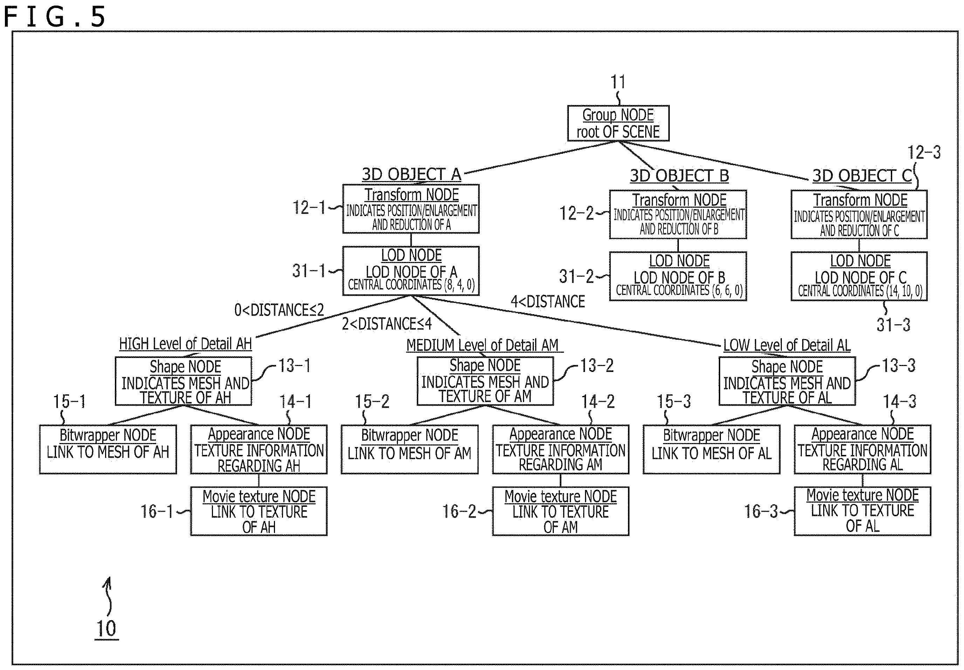

   FIG. 5 is a diagram illustrating an example of a scene graph.
[FIG. 6]

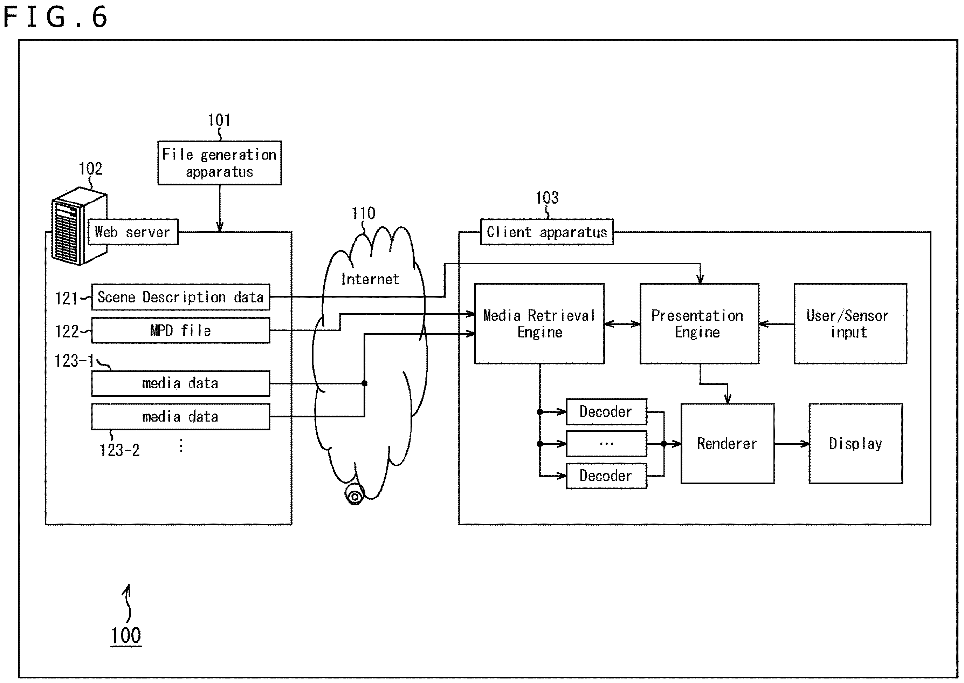

   FIG. 6 is a block diagram depicting a main configuration example of a distribution system.
[FIG. 7]

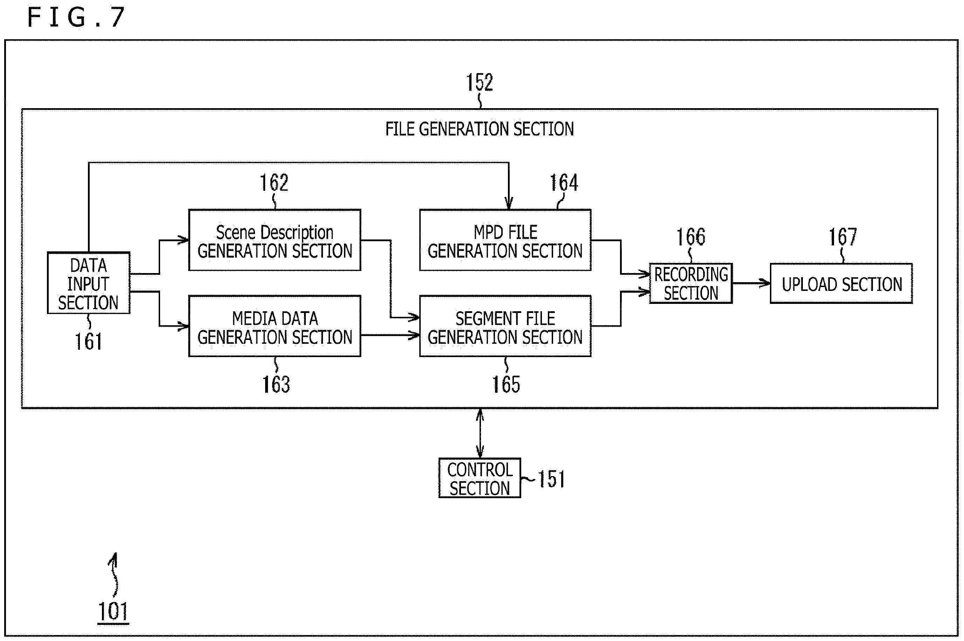

   FIG. 7 is a block diagram depicting a main configuration example of a file generation apparatus.
[FIG. 8]

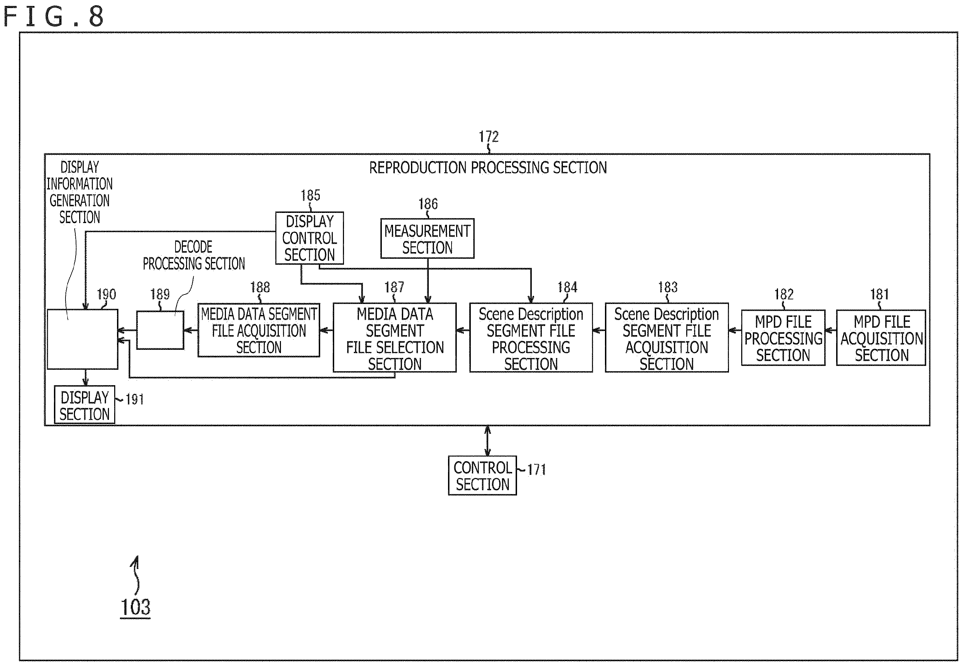

   FIG. 8 is a block diagram depicting a main configuration example of a client apparatus.
[FIG. 9]

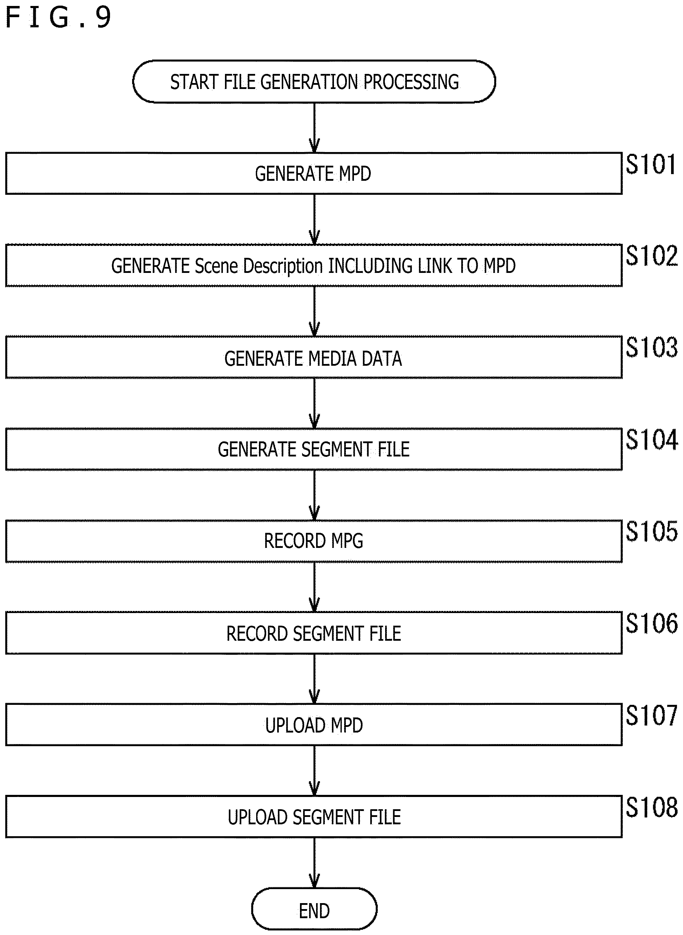

   FIG. 9 is a flowchart illustrating an example of a flow of file generation processing.
[FIG. 10]

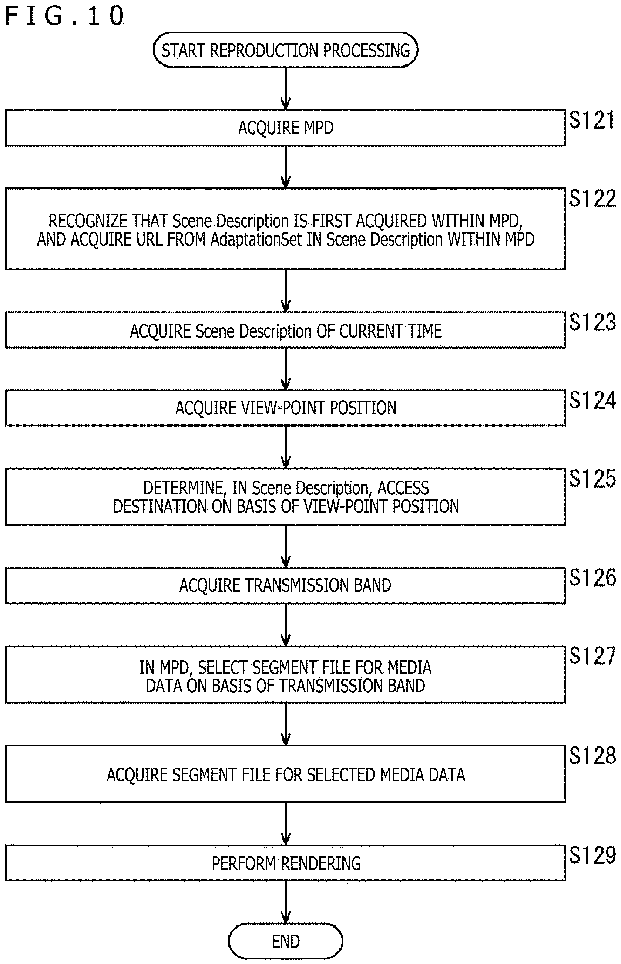

   FIG. 10 is a flowchart illustrating an example of a flow of reproduction processing.
[FIG. 11]

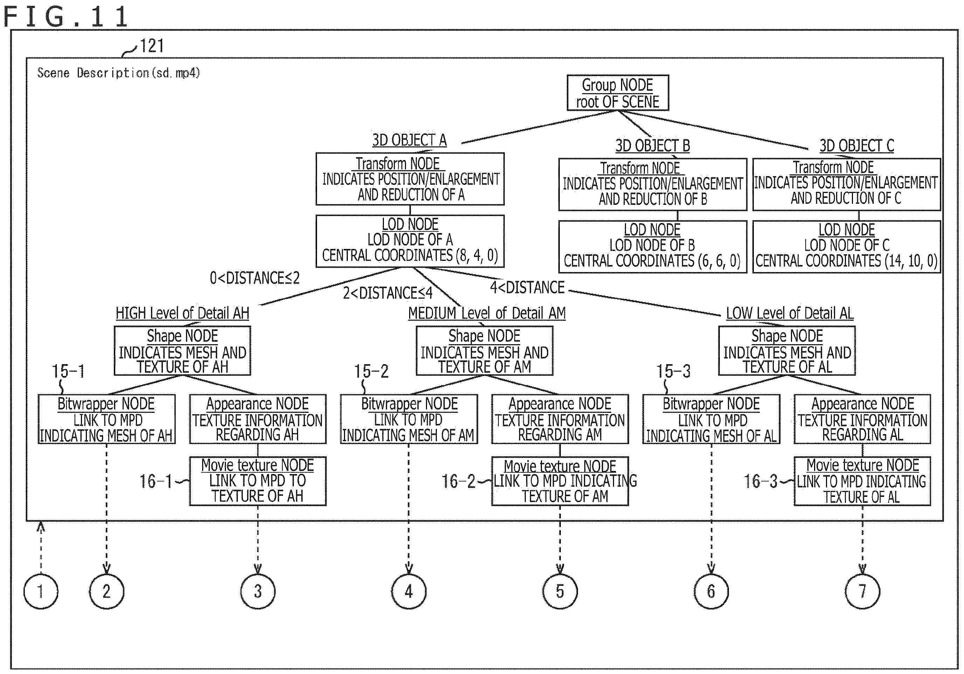

   FIG. 11 is a diagram illustrating an example of Scene Description.
[FIG. 12]

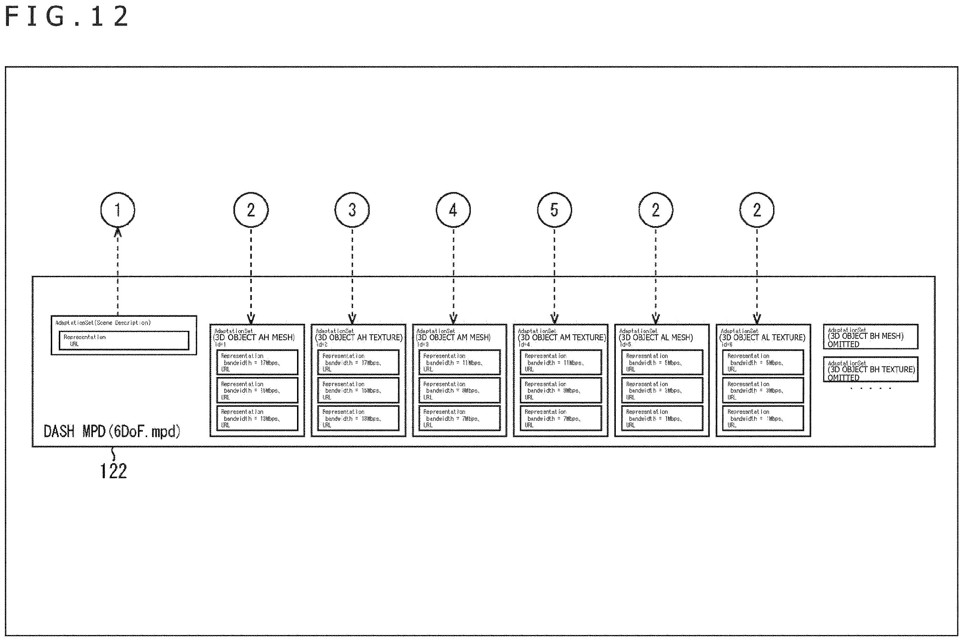

   FIG. 12 is a diagram illustrating an example of an MPD.
[FIG. 13]

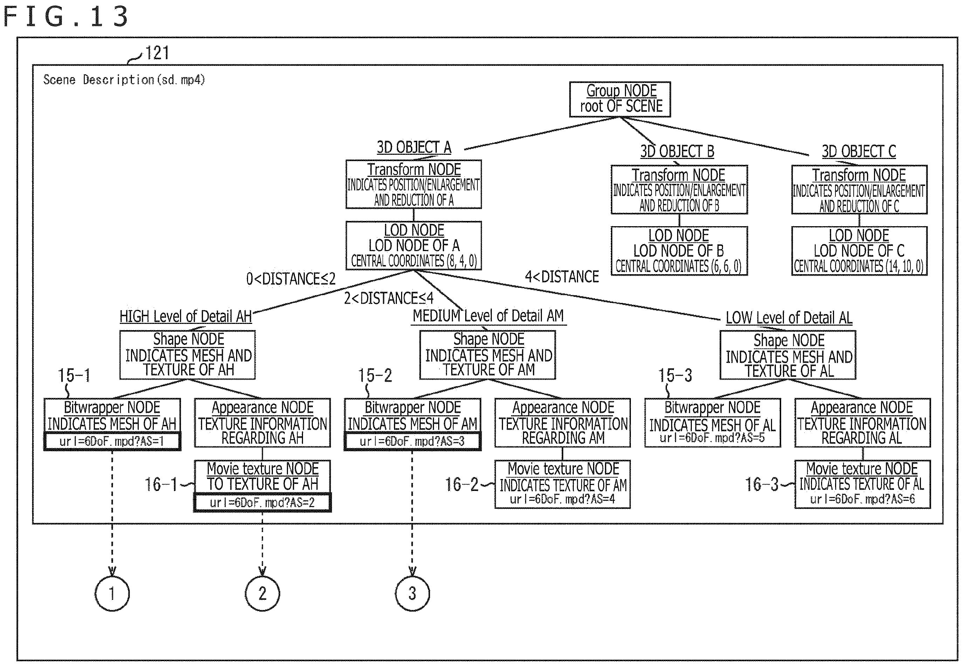

   FIG. 13 is a diagram illustrating an example of Scene Description.
[FIG. 14]

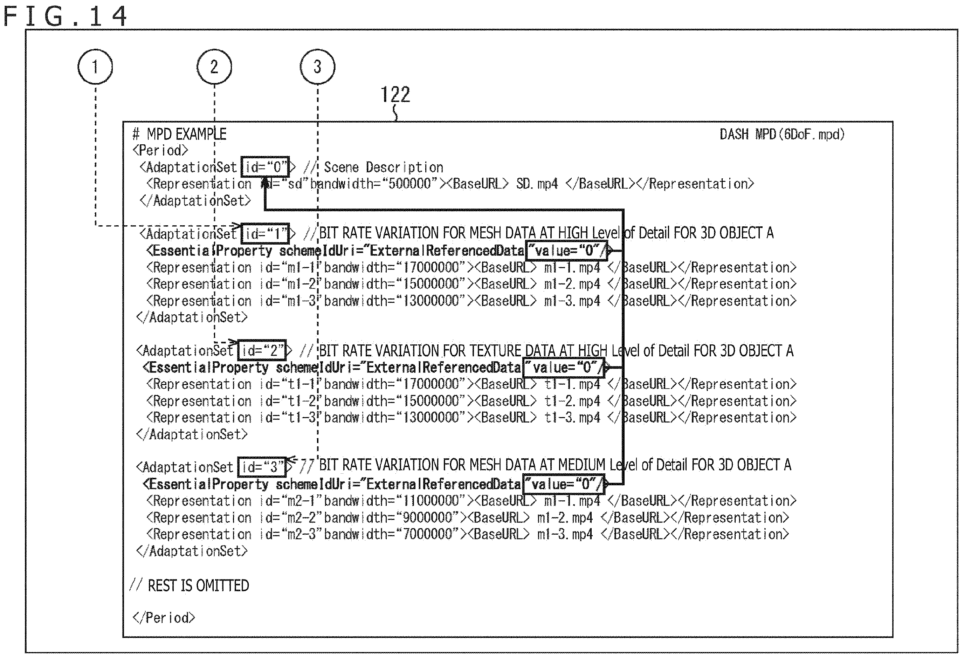

   FIG. 14 is a diagram illustrating an example of an MPD.
[FIG. 15]

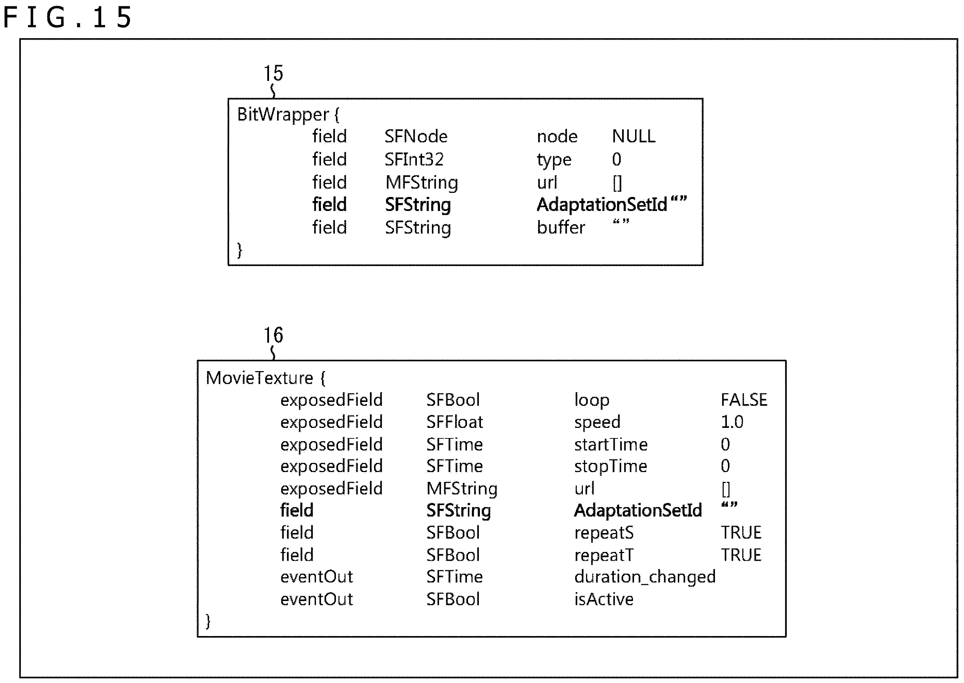

   FIG. 15 is a diagram illustrating an example of a BitWrapper node and a MovieTexture node.
[FIG. 16]

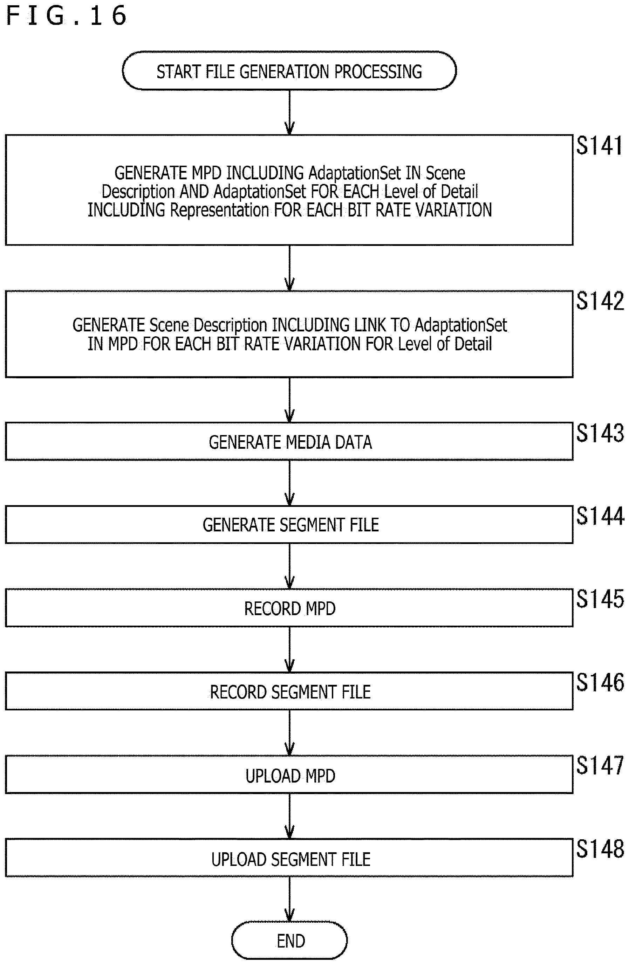

   FIG. 16 is a flowchart illustrating an example of a flow of file generation processing.
[FIG. 17]

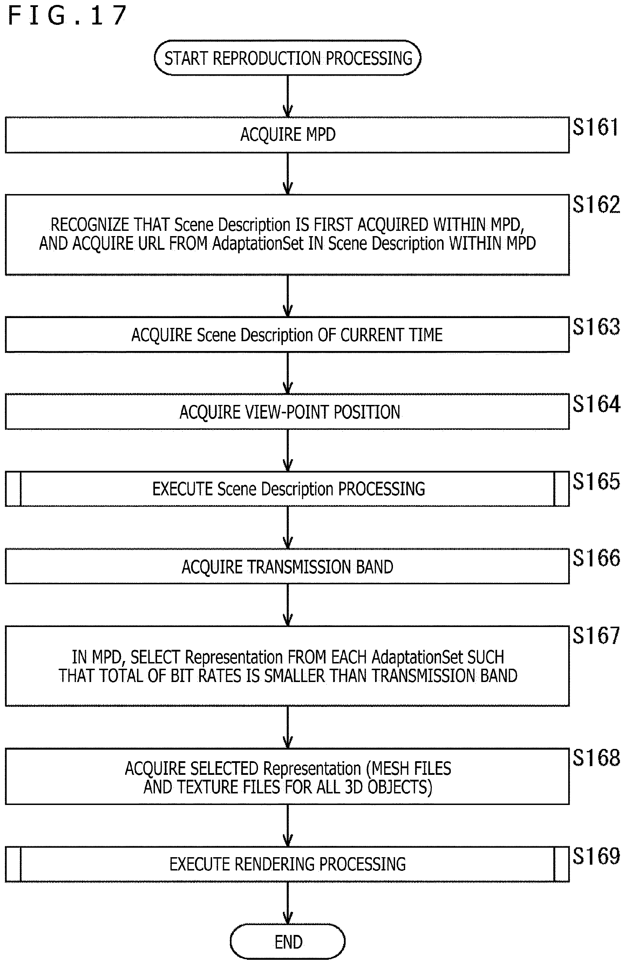

   FIG. 17 is a flowchart illustrating an example of a flow of reproduction processing.
[FIG. 18]

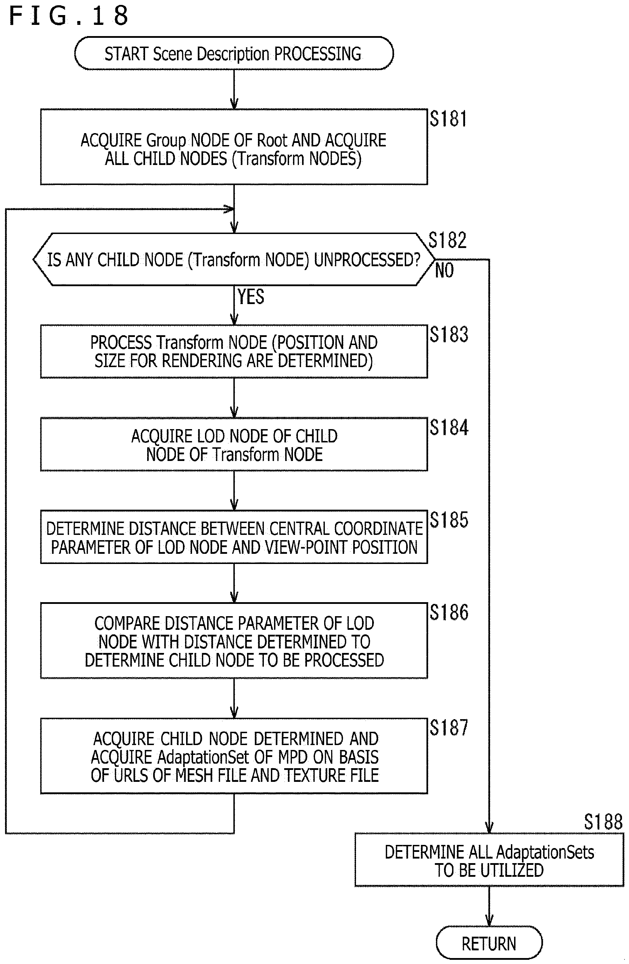

   FIG. 18 is a flowchart illustrating an example of a flow of Scene Description processing.
[FIG. 19]

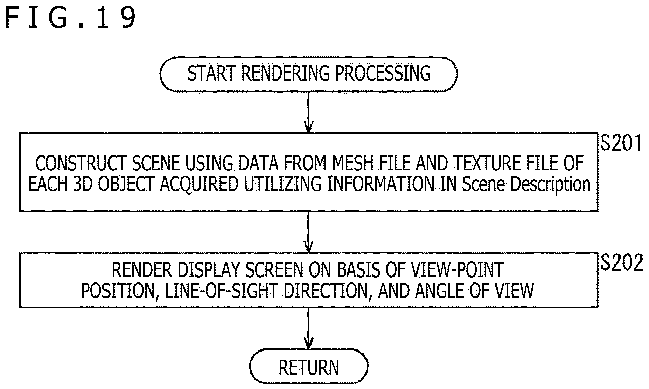

   FIG. 19 is a flowchart illustrating an example of a flow of rendering processing.
[FIG. 20]

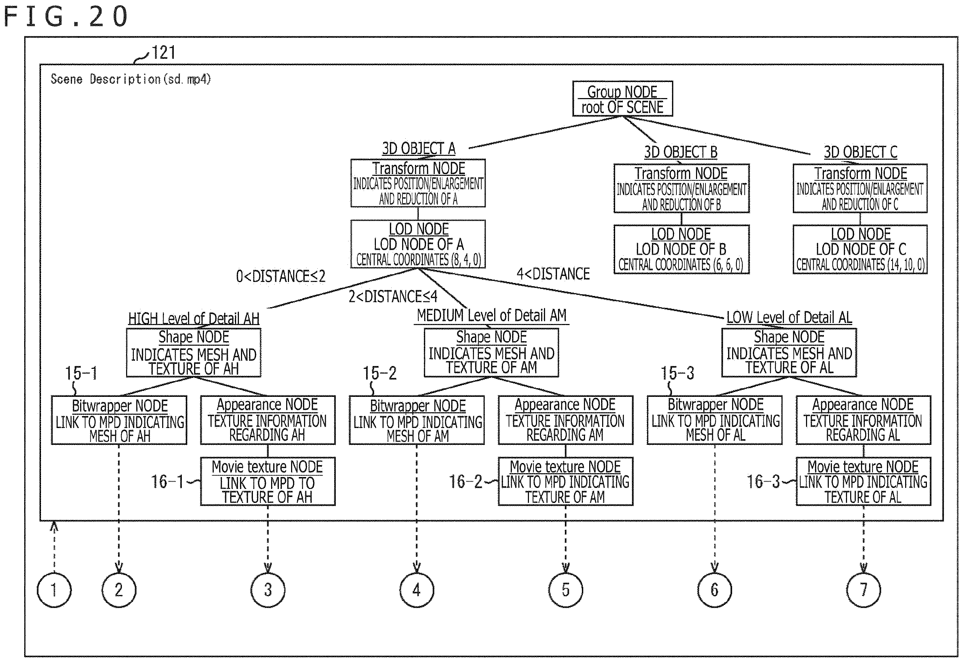

   FIG. 20 is a diagram illustrating an example of Scene Description.
[FIG. 21]

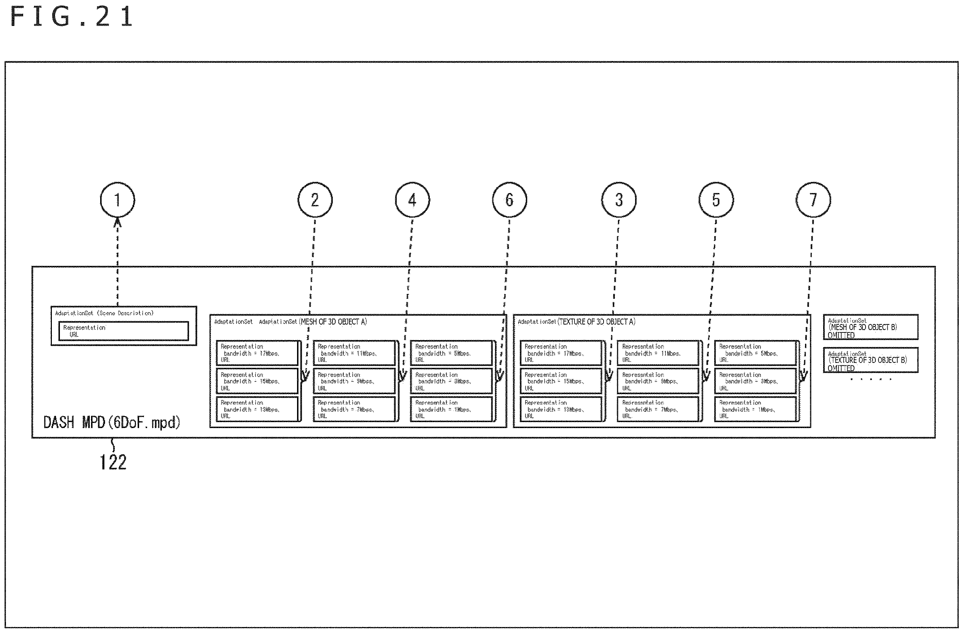

   FIG. 21 is a diagram illustrating an example of an MPD.
[FIG. 22]

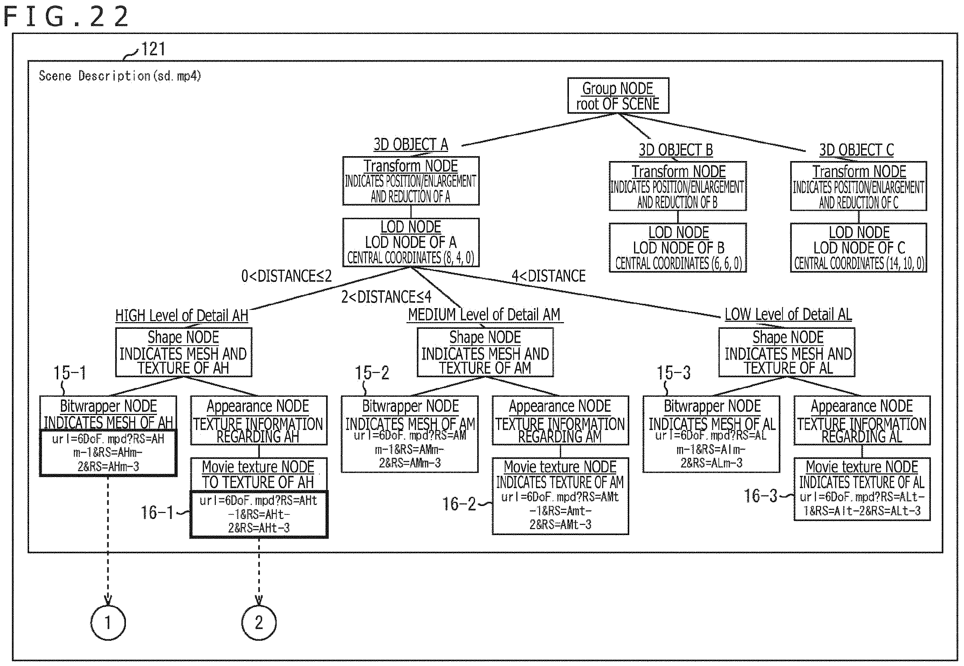

   FIG. 22 is a diagram illustrating an example of Scene Description.
[FIG. 23]

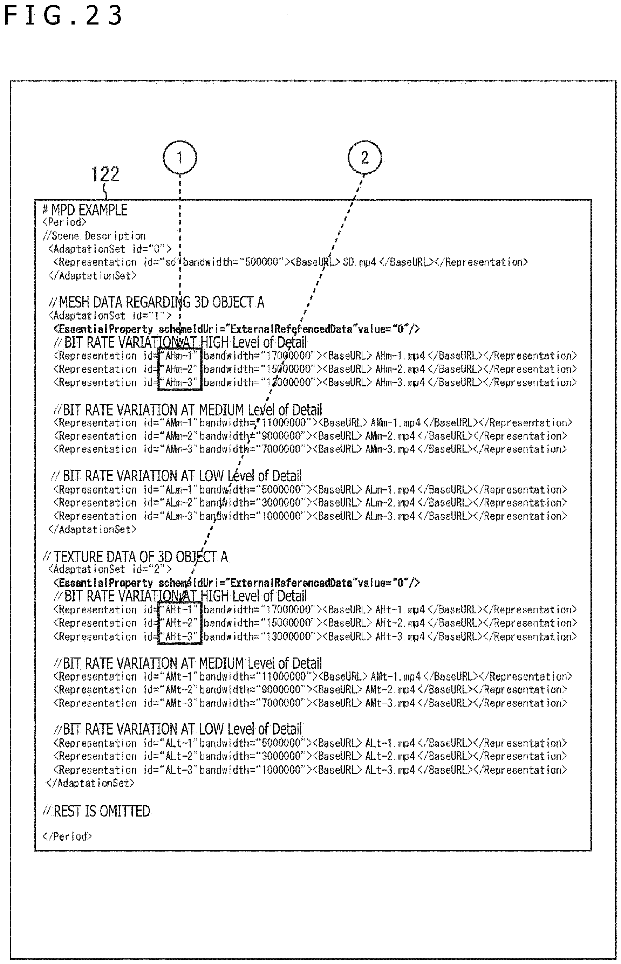

   FIG. 23 is a diagram illustrating an example of an MPD.
[FIG. 24]

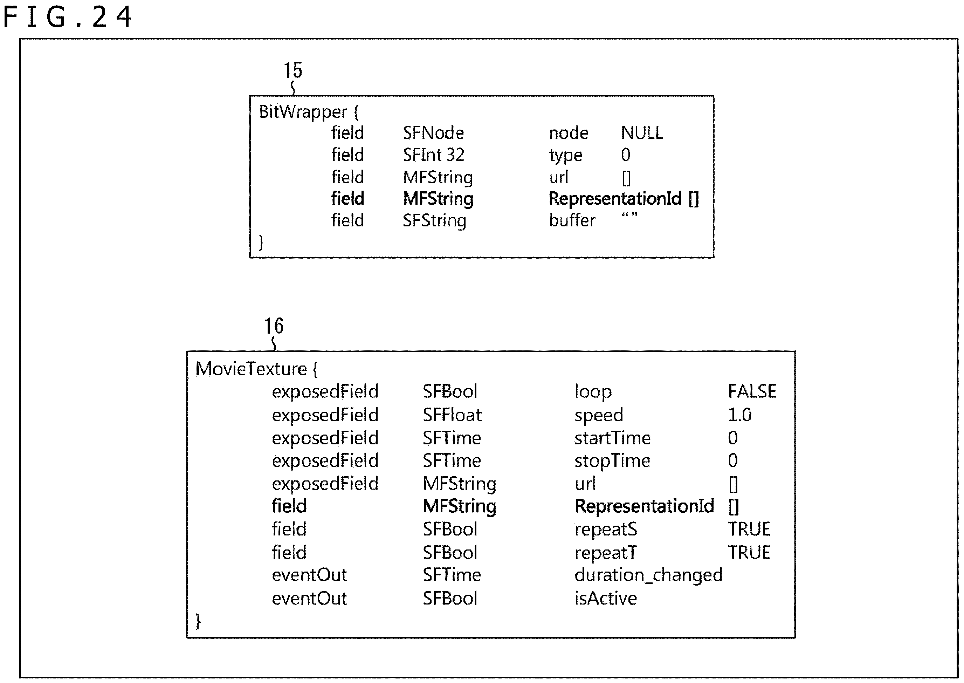

   FIG. 24 is a diagram illustrating an example of a BitWrapper node and a MovieTexture node.
[FIG. 25]

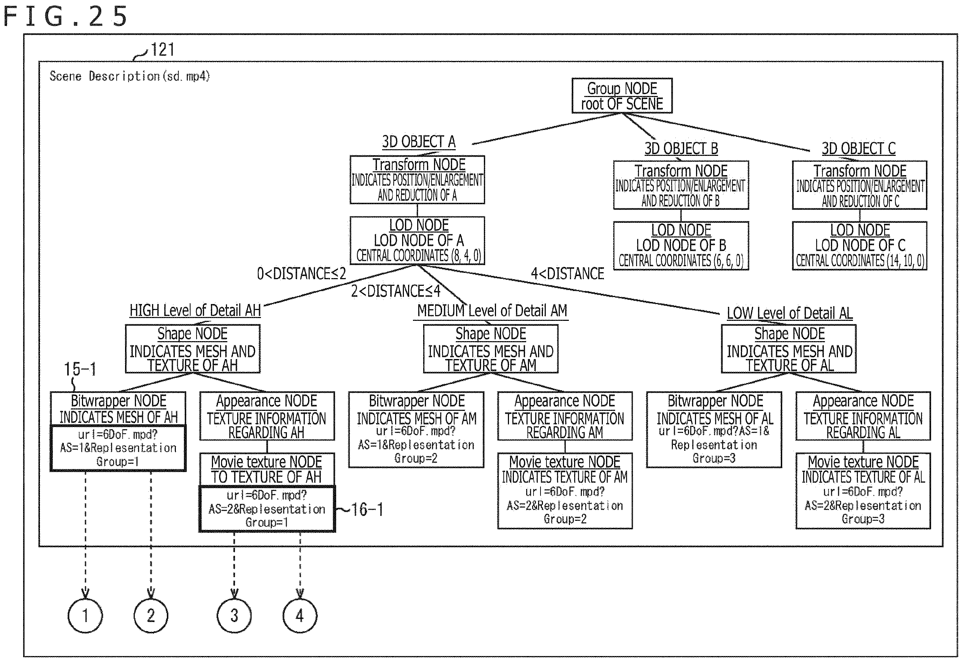

   FIG. 25 is a diagram illustrating an example of Scene Description.
[FIG. 26]

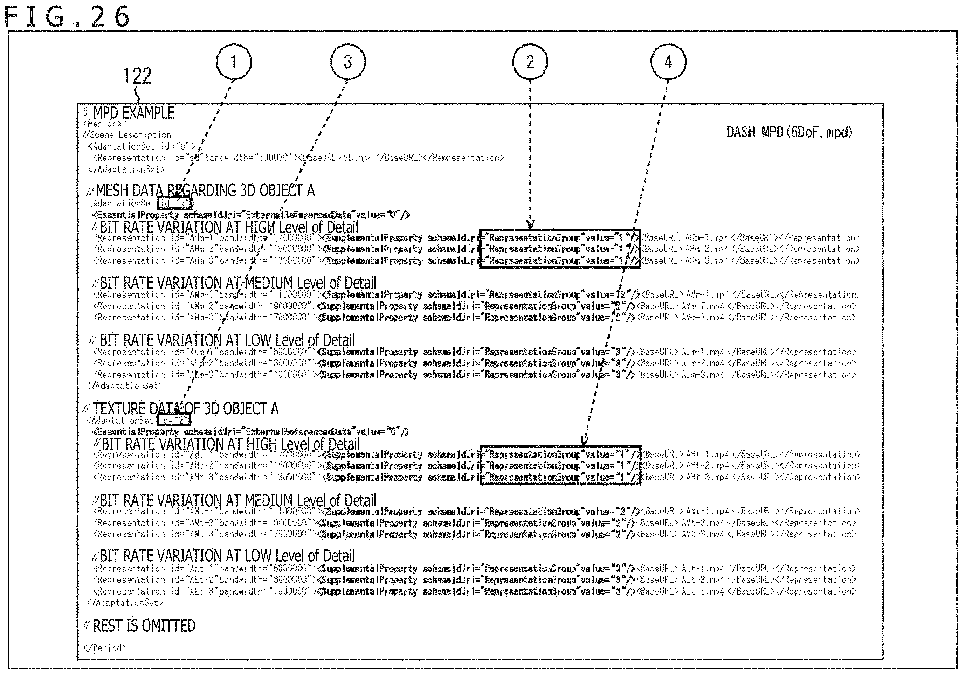

   FIG. 26 is a diagram illustrating an example of an MPD.
[FIG. 27]

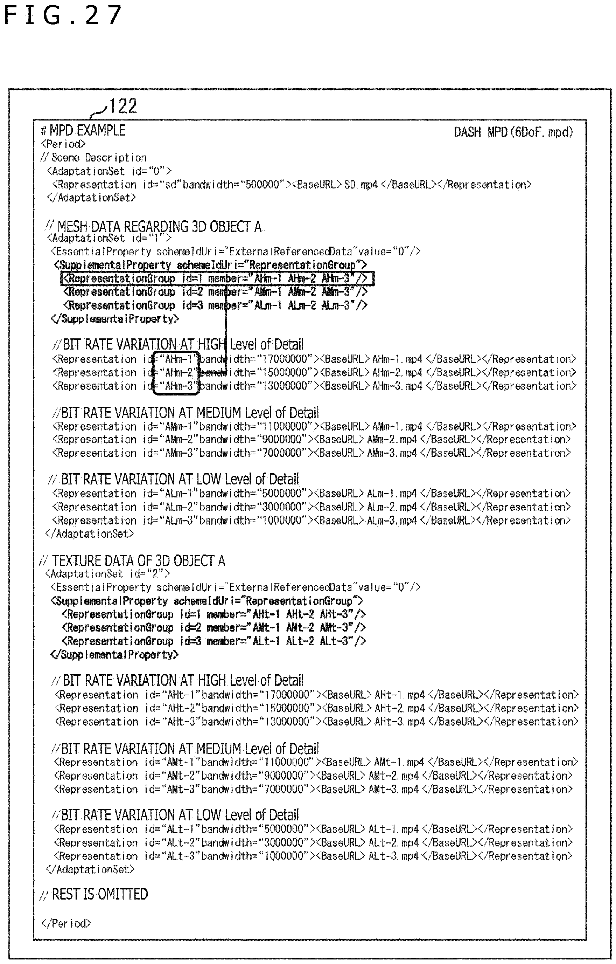

   FIG. 27 is a diagram illustrating an example of an MPD.
[FIG. 28]

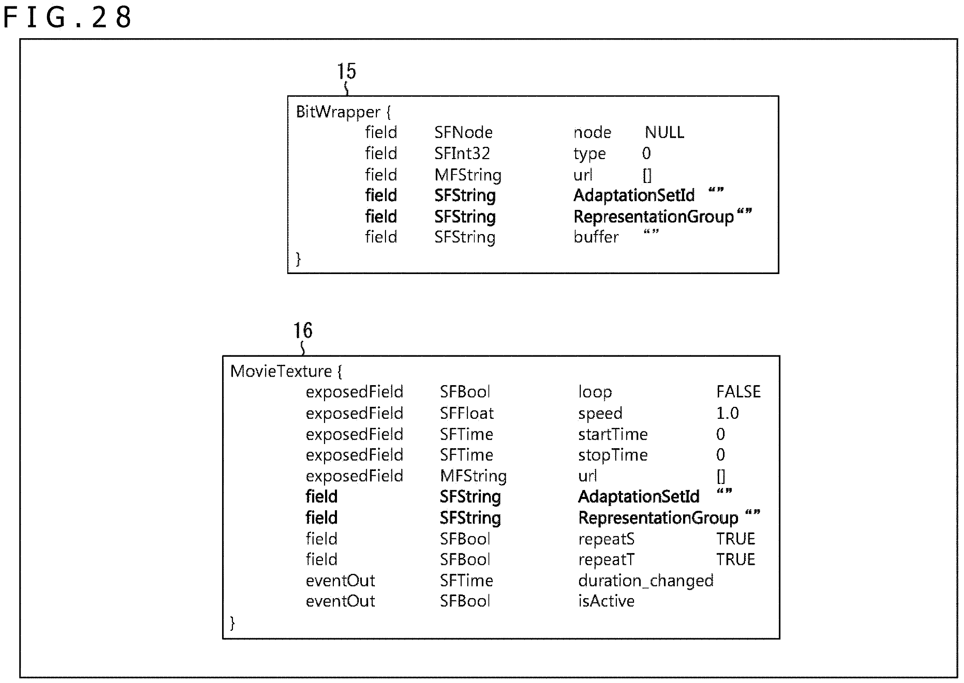

   FIG. 28 is a diagram illustrating an example of a BitWrapper node and a MovieTexture node.
[FIG. 29]

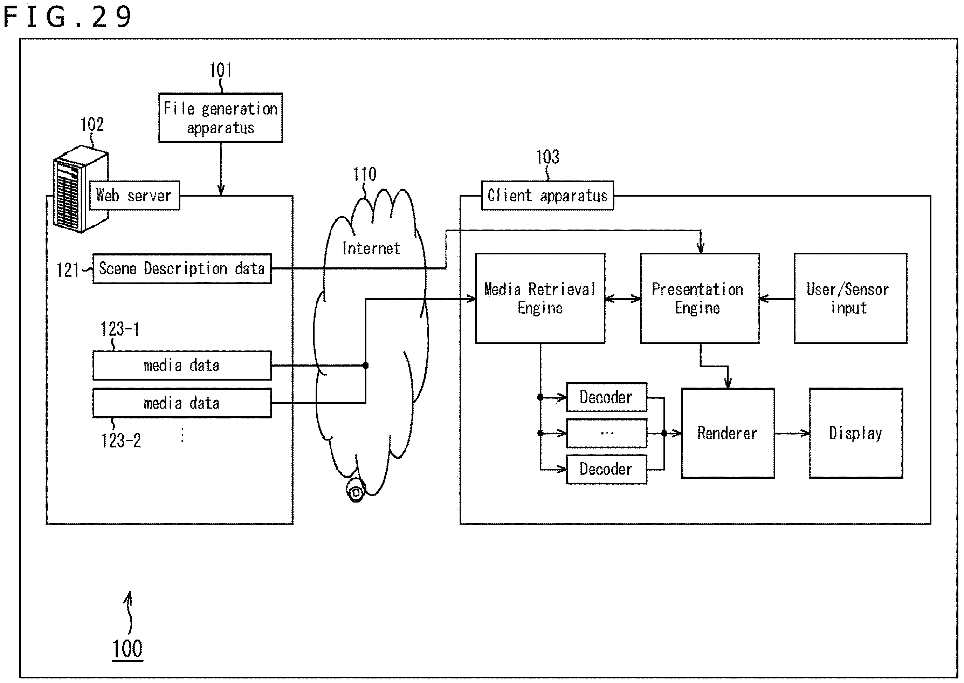

   FIG. 29 is a block diagram depicting a main configuration example of a distribution system.
[FIG. 30]

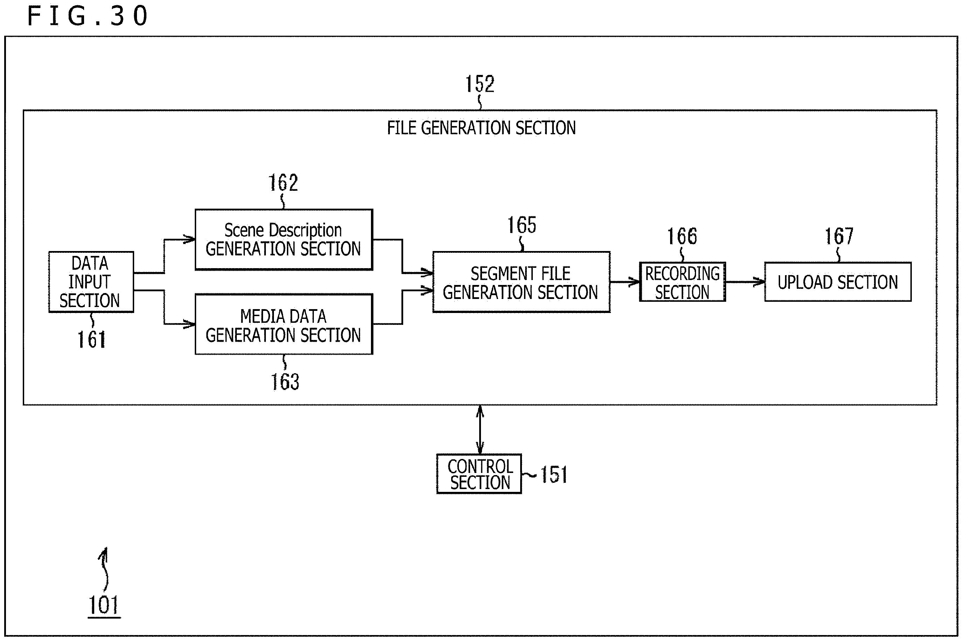

   FIG. 30 is a block diagram depicting a main configuration example of a file generation apparatus.
[FIG. 31]

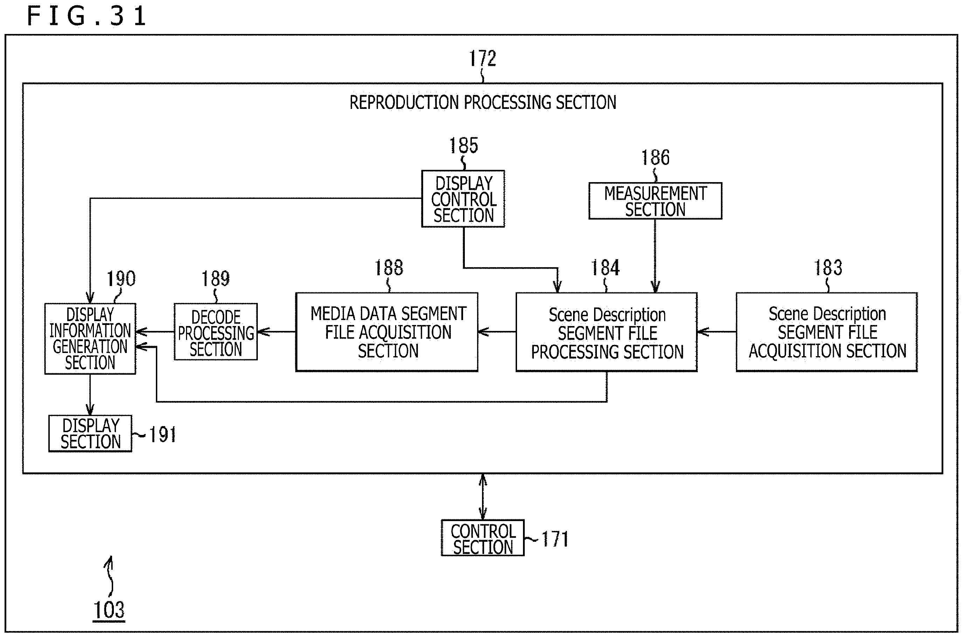

   FIG. 31 is a block diagram depicting a main configuration example of a client apparatus.
[FIG. 32]

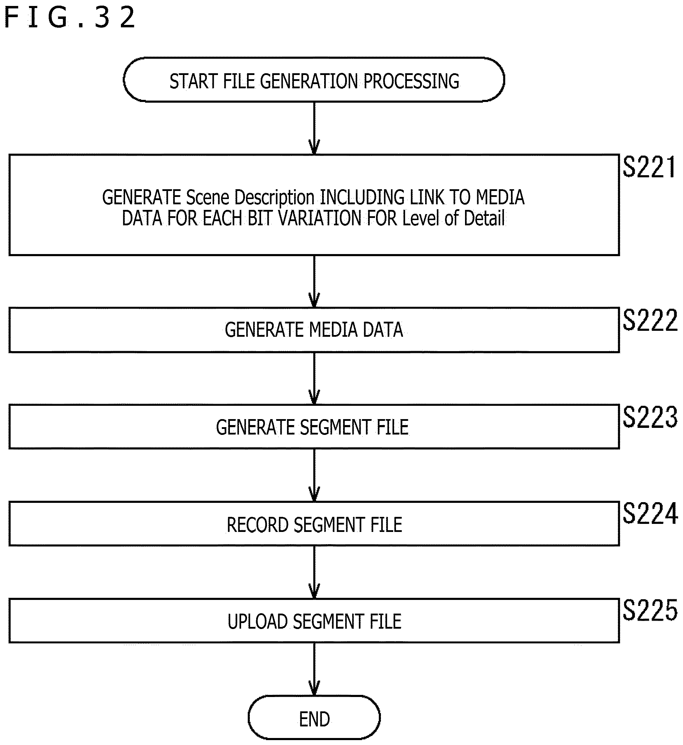

   FIG. 32 is a flowchart illustrating an example of a flow of file generation processing.
[FIG. 33]

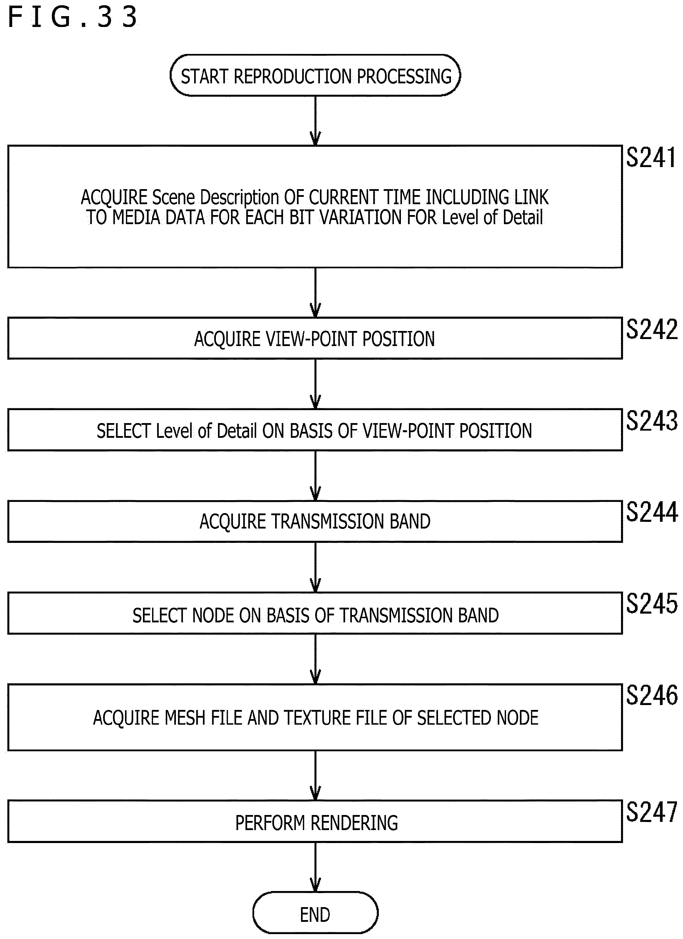

   FIG. 33 is a flowchart illustrating an example of a flow of reproduction processing.
[FIG. 34]

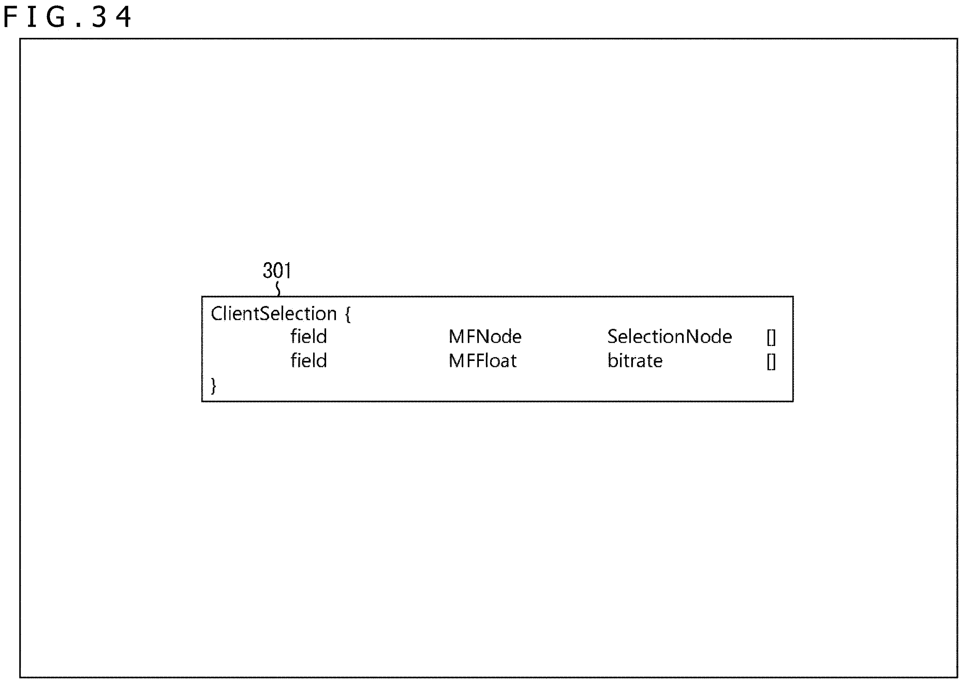

   FIG. 34 is a diagram illustrating an example of a ClientSelection node.
[FIG. 35]

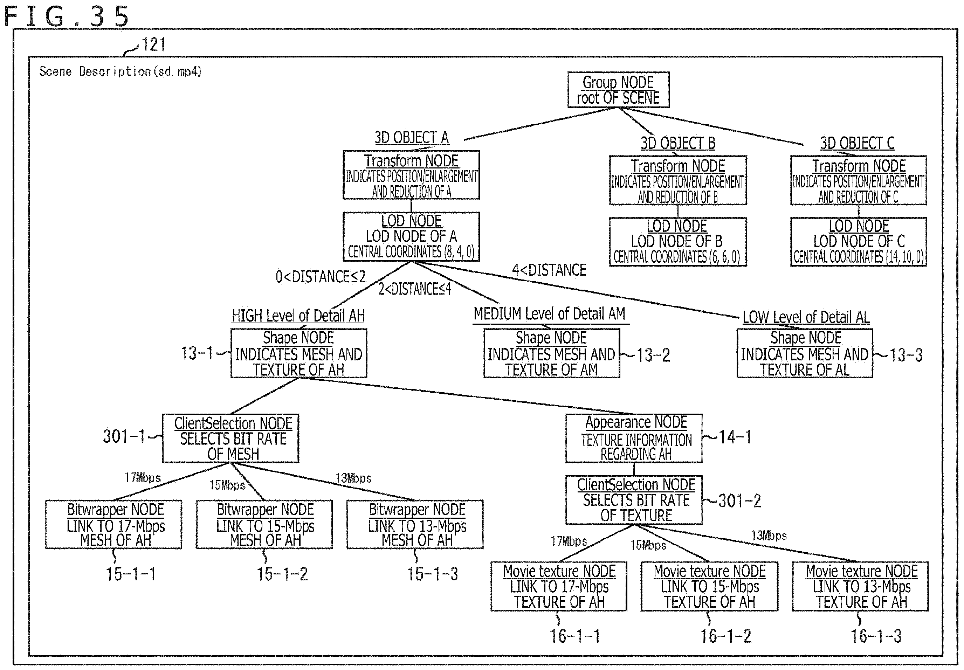

   FIG. 35 is a diagram illustrating an example of Scene Description.
[FIG. 36]

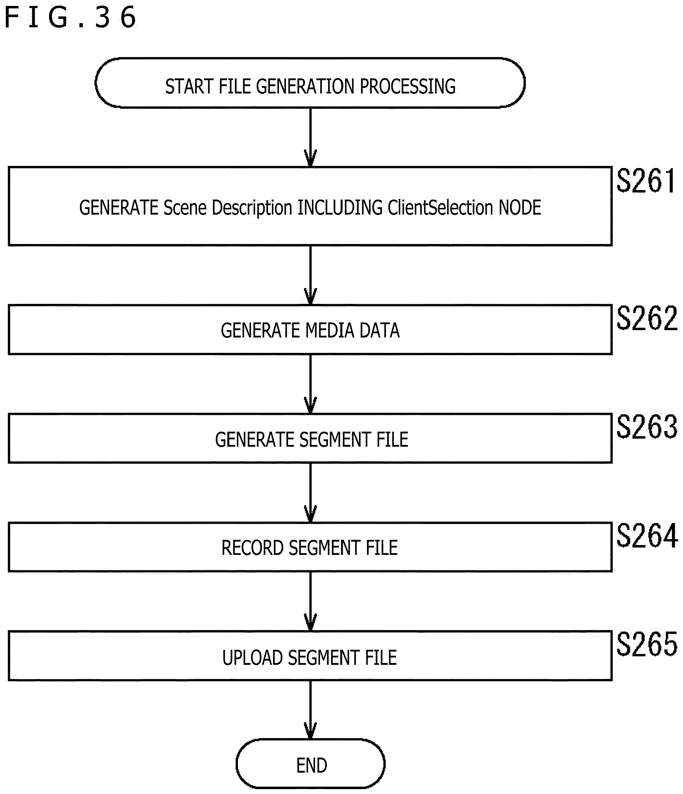

   FIG. 36 is a flowchart illustrating an example of a flow of file generation processing.
[FIG. 37]

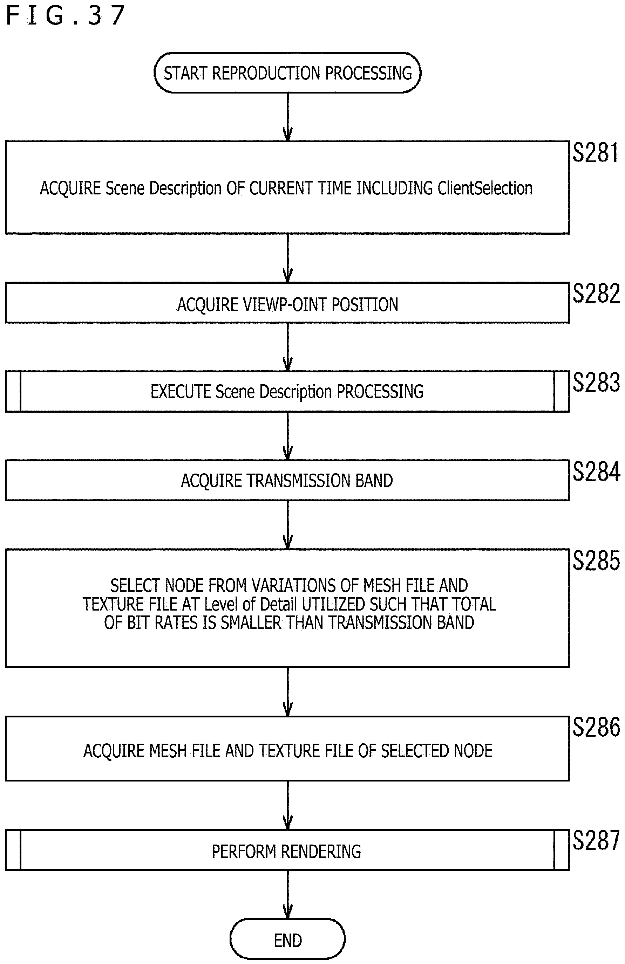

   FIG. 37 is a flowchart illustrating an example of a flow of reproduction processing.
[FIG. 38]

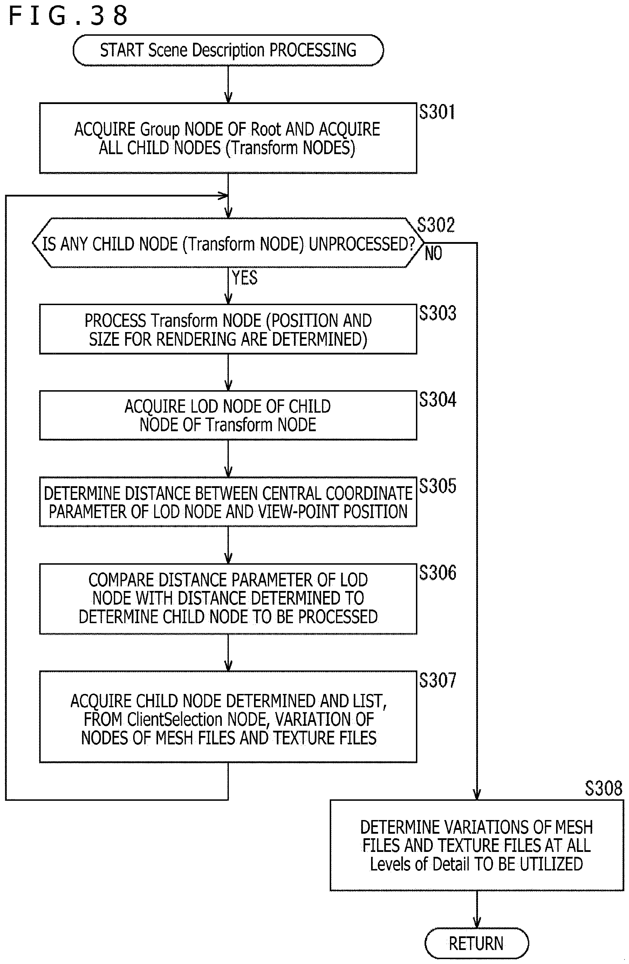

   FIG. 38 is a flowchart illustrating an example of a flow of Scene Description processing.
[FIG. 39]

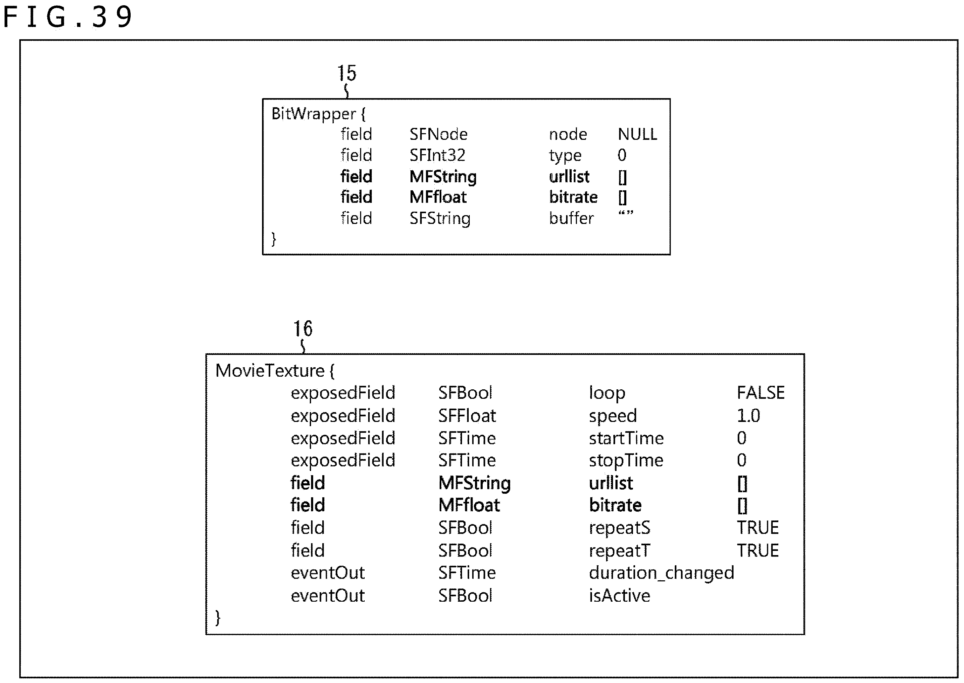

   FIG. 39 is a diagram illustrating an example of a BitWrapper node and a MovieTexture node.
[FIG. 40]

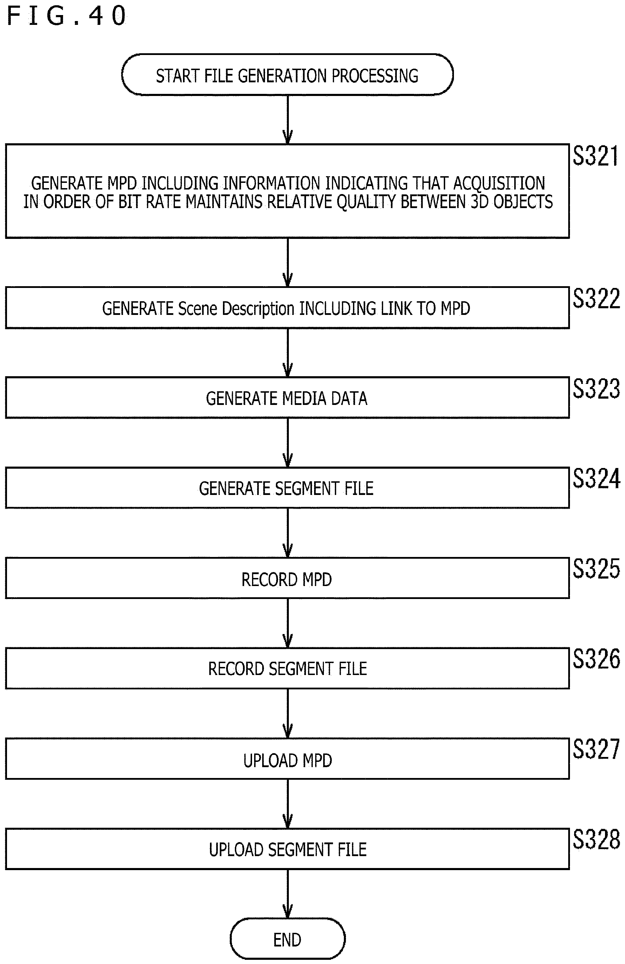

   FIG. 40 is a flowchart illustrating an example of a flow of file generation processing.
[FIG. 41]

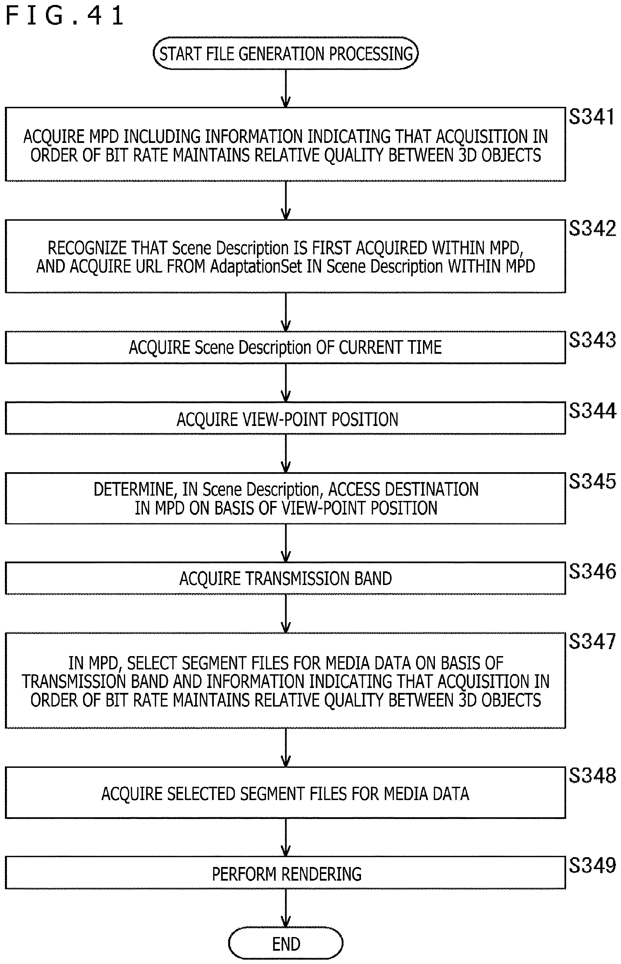

   FIG. 41 is a flowchart illustrating an example of a flow of reproduction processing.
[FIG. 42]

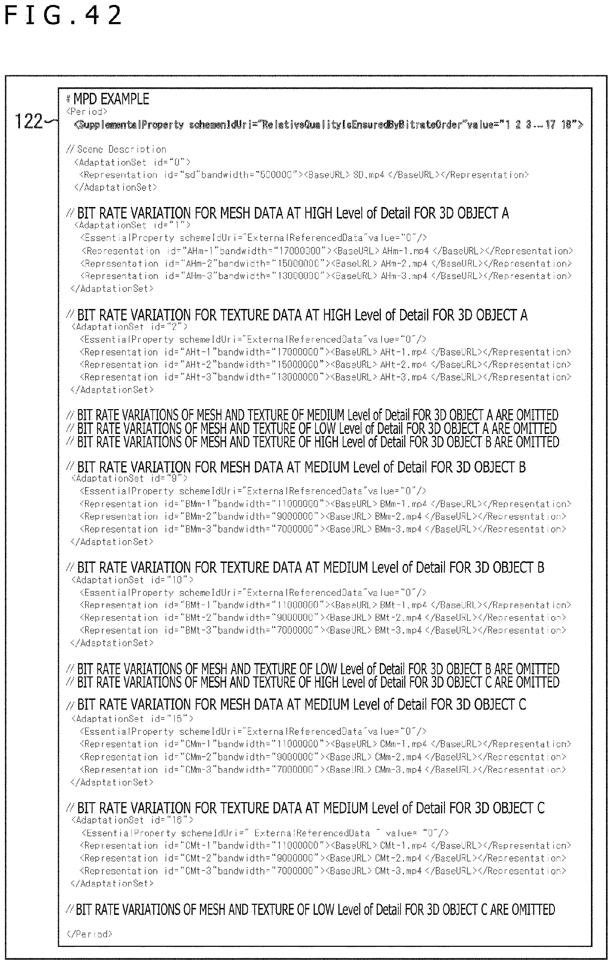

   FIG. 42 is a diagram illustrating an example of an MPD.
[FIG. 43]

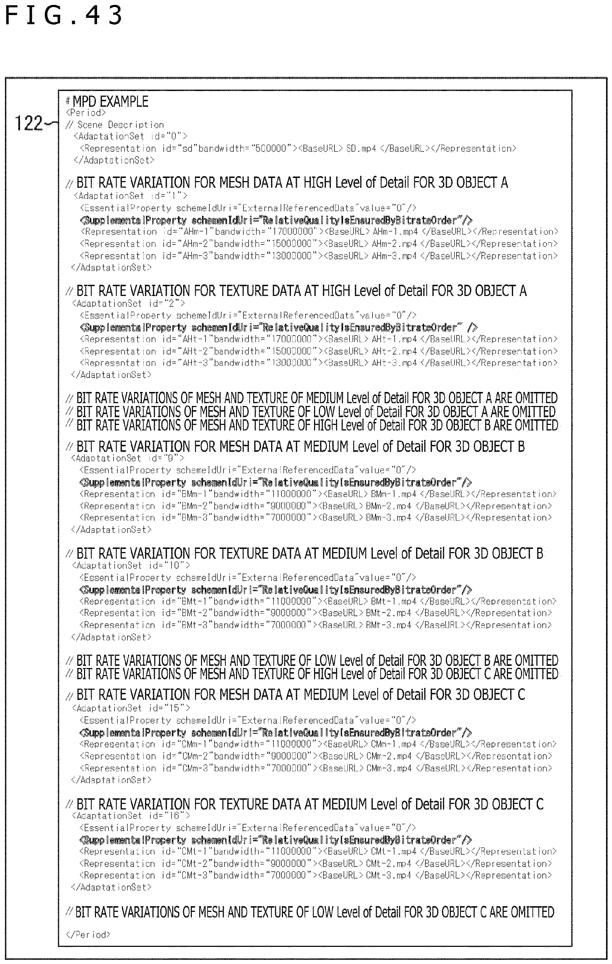

   FIG. 43 is a diagram illustrating an example of an MPD.
[FIG. 44]

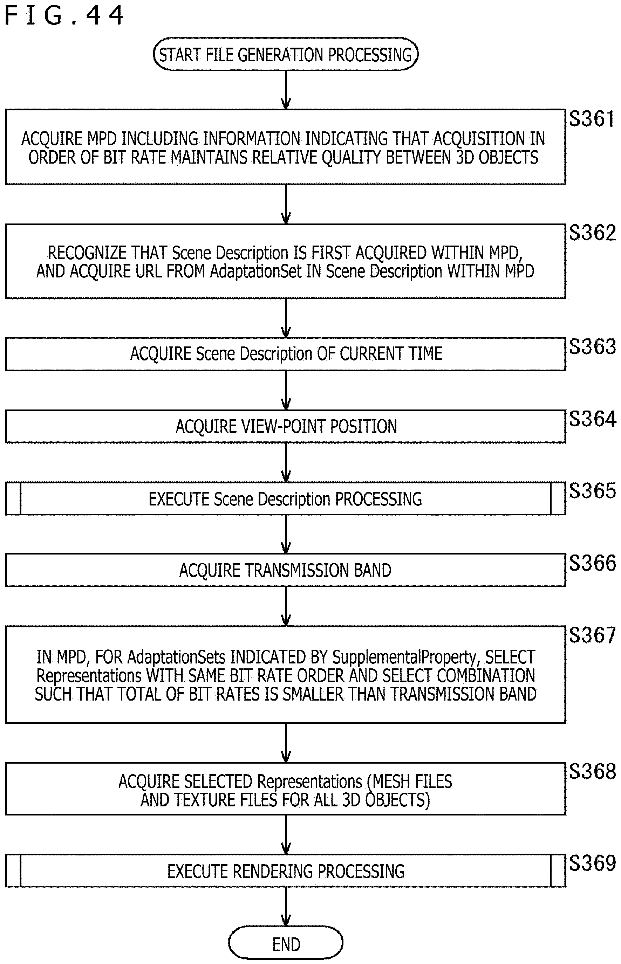

   FIG. 44 is a flowchart illustrating an example of a flow of reproduction processing.
[FIG. 45]

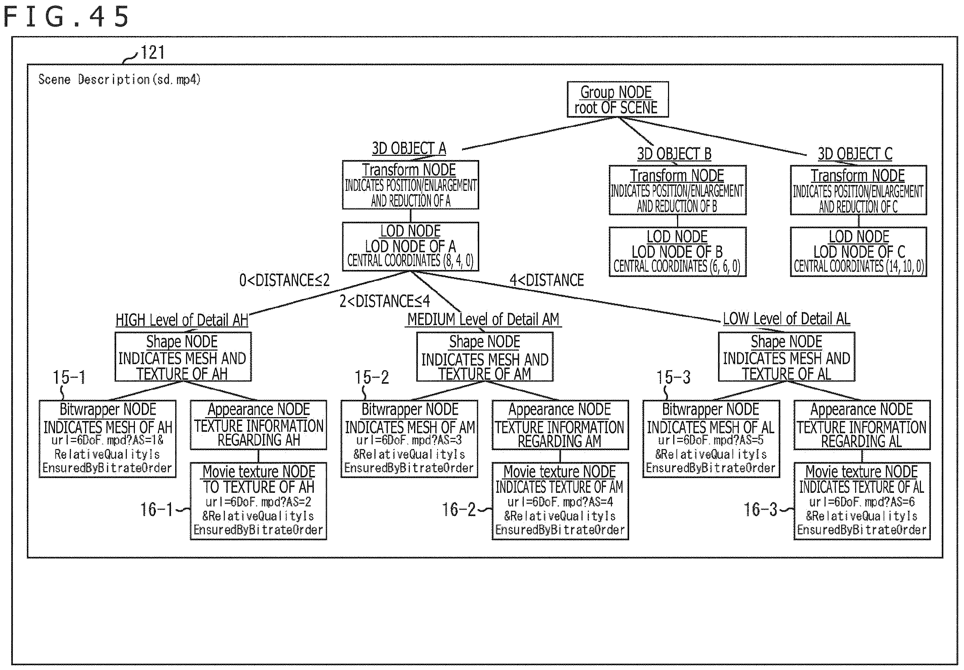

   FIG. 45 is a flowchart illustrating an example of a flow of Scene Description processing.
[FIG. 46]

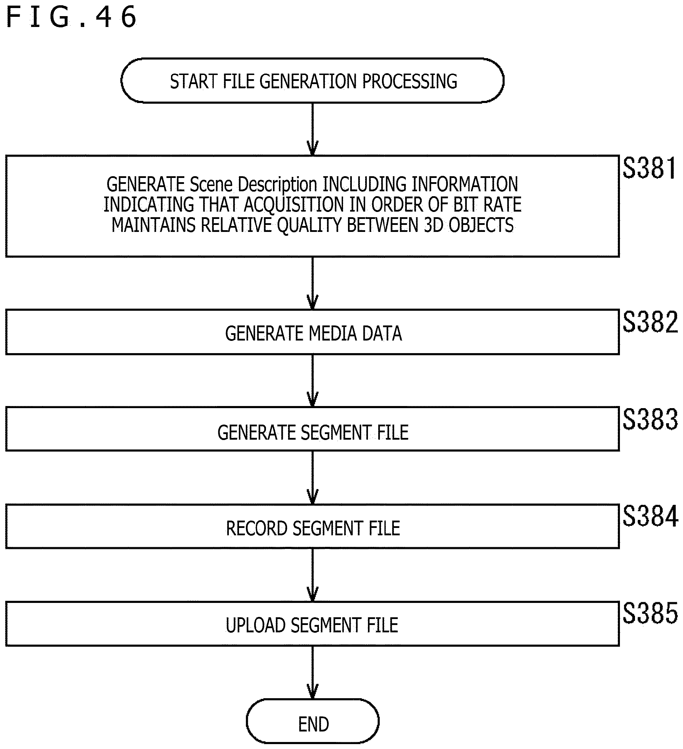

   FIG. 46 is a flowchart illustrating an example of a flow of file generation processing.
[FIG. 47]

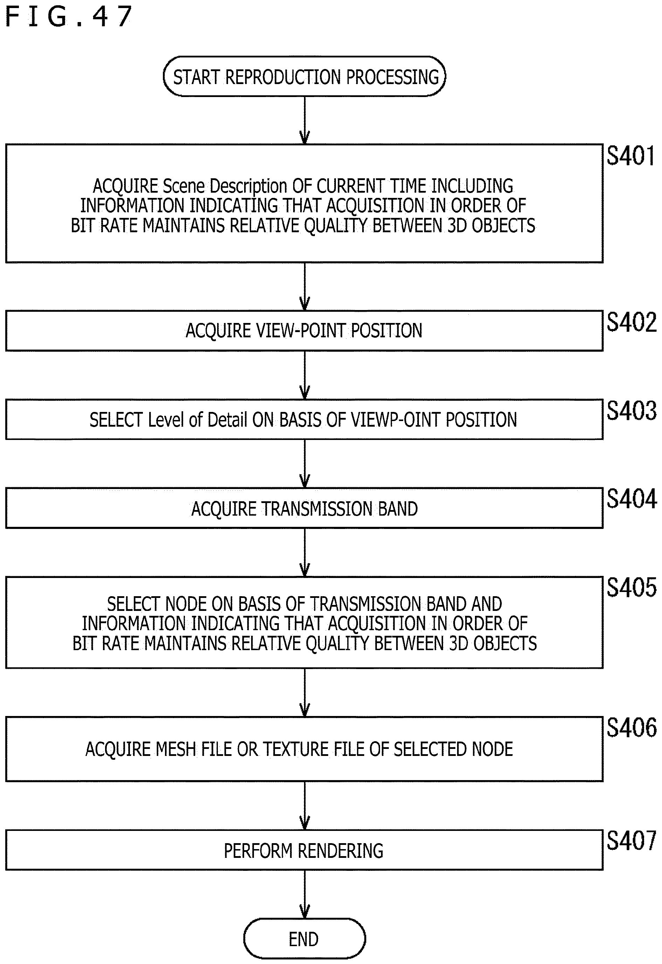

   FIG. 47 is a flowchart illustrating an example of a flow of reproduction processing.
[FIG. 48]

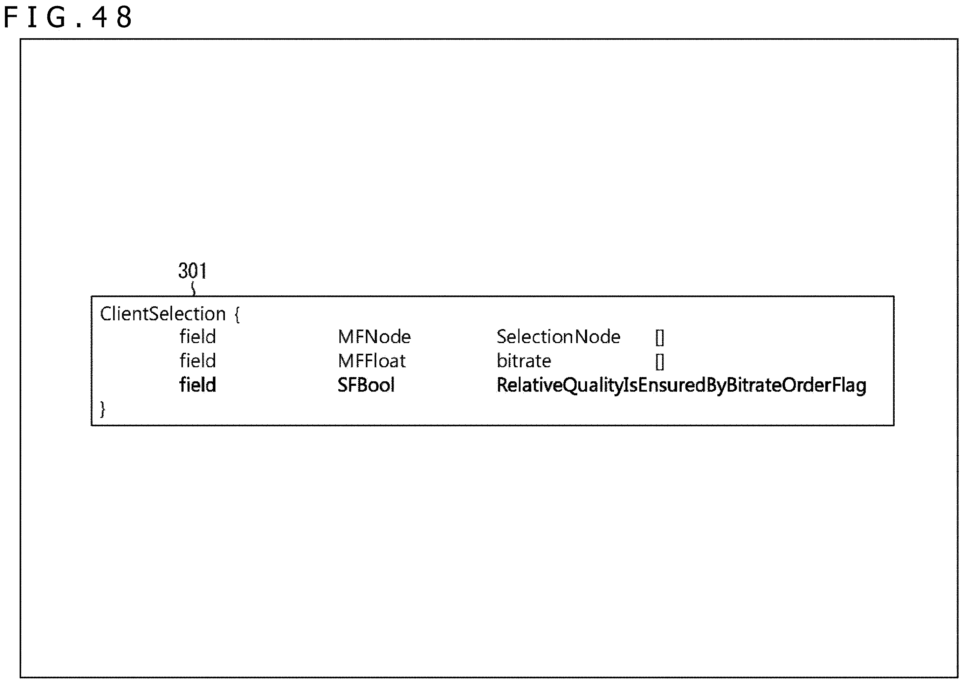

   FIG. 48 is a diagram illustrating an example of a ClientSelection node.
[FIG. 49]

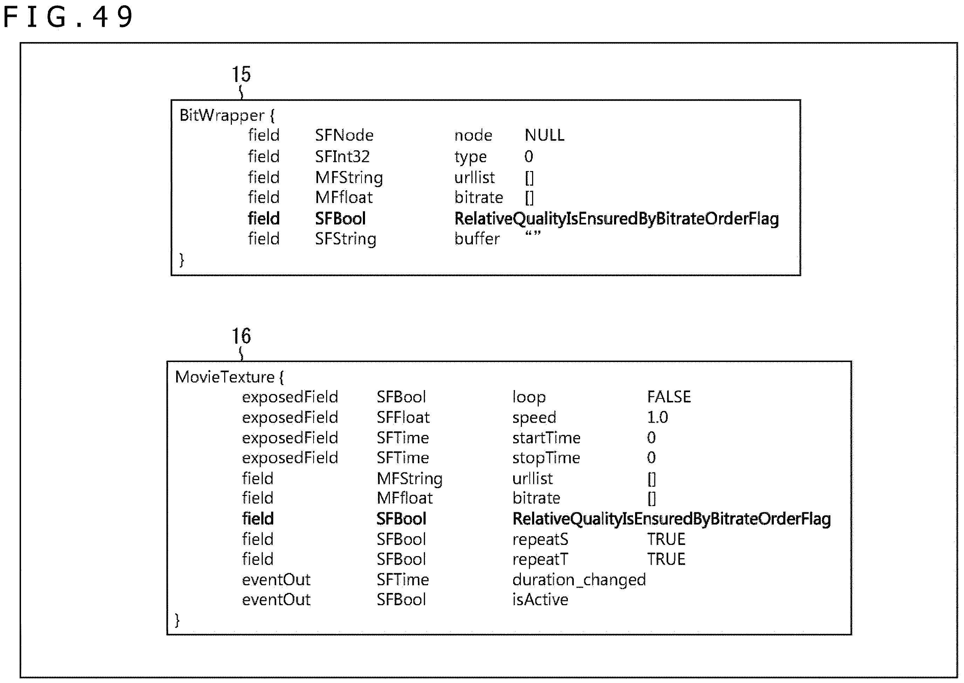

   FIG. 49 is a diagram illustrating an example of a BitWrapper node and a MovieTexture node.
[FIG. 50]

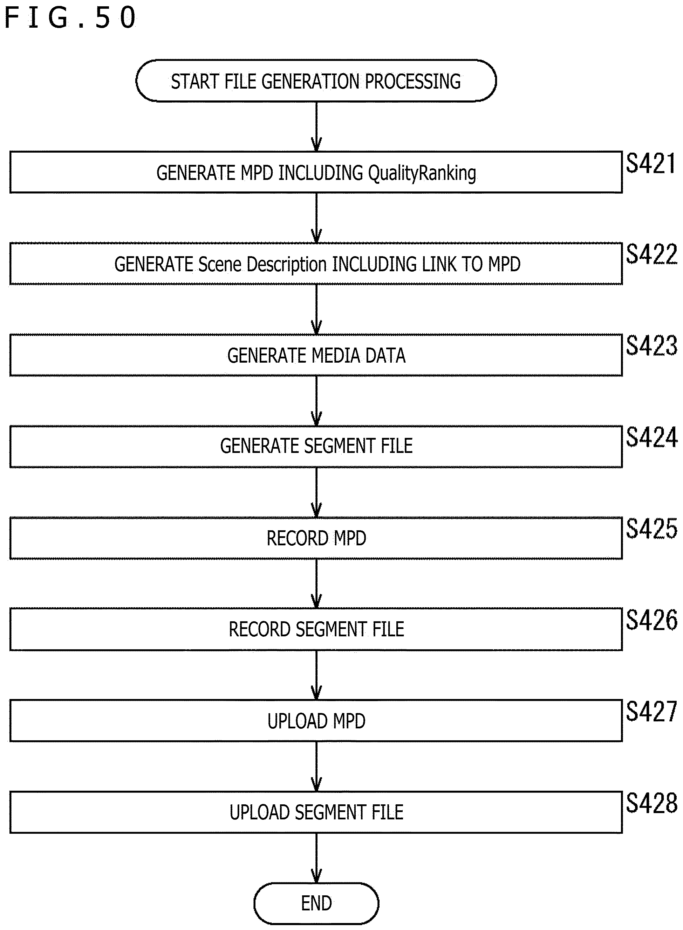

   FIG. 50 is a flowchart illustrating an example of a flow of file generation processing.
[FIG. 51]

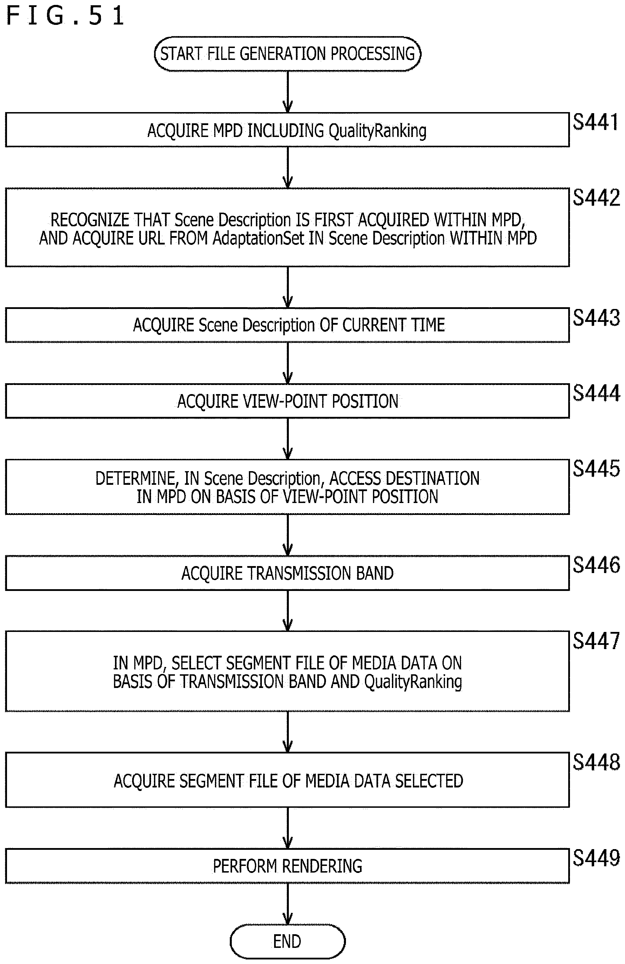

   FIG. 51 is a flowchart illustrating an example of a flow of reproduction processing.
[FIG. 52]

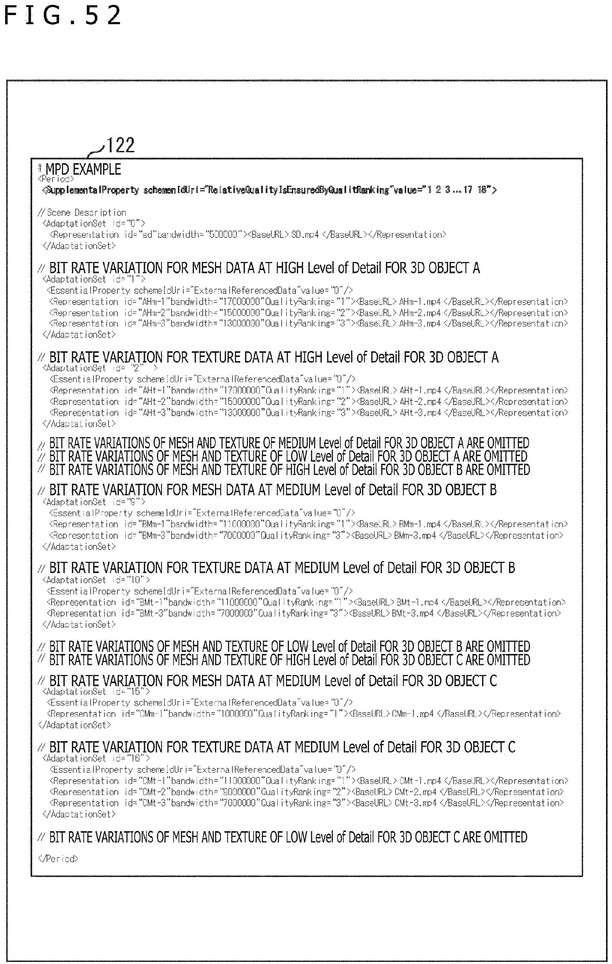

   FIG. 52 is a diagram illustrating an example of an MPD.
[FIG. 53]

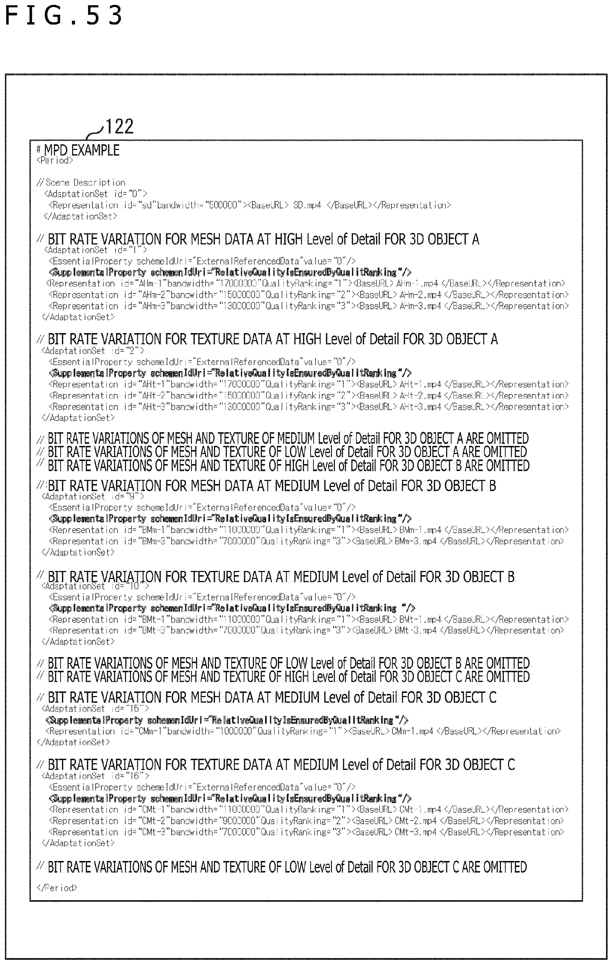

   FIG. 53 is a diagram illustrating an example of an MPD.
[FIG. 54]

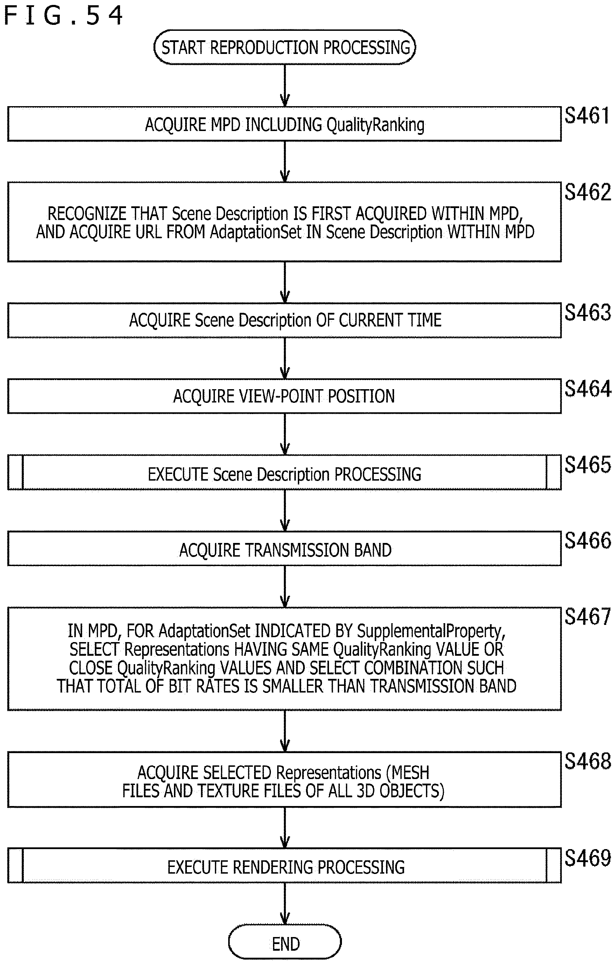

   FIG. 54 is a flowchart illustrating an example of a flow of reproduction processing.
[FIG. 55]

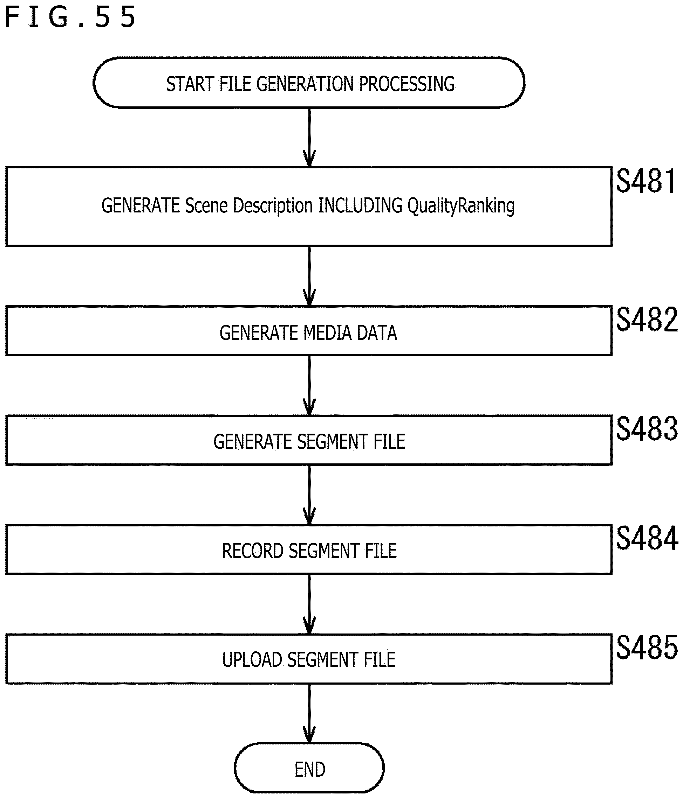

   FIG. 55 is a flowchart illustrating an example of a flow of file generation processing.
[FIG. 56]

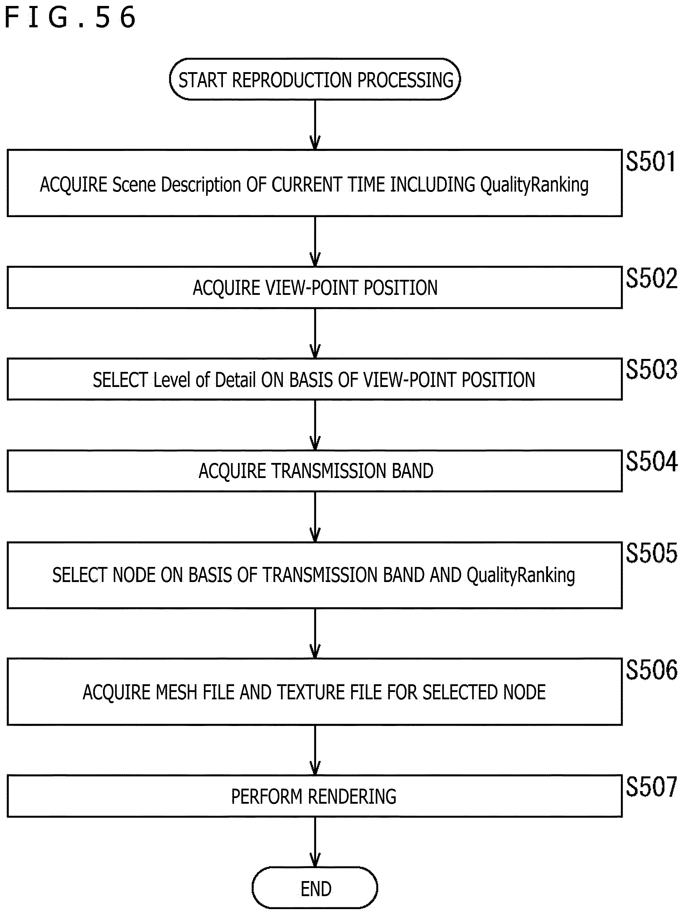

   FIG. 56 is a flowchart illustrating an example of a flow of reproduction processing.
[FIG. 57]

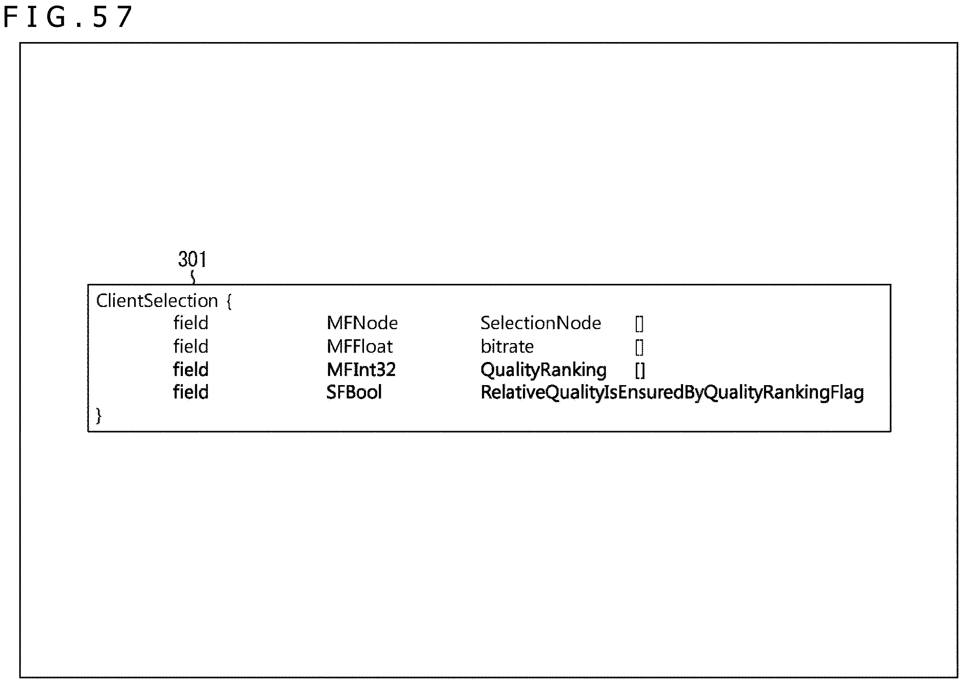

   FIG. 57 is a diagram illustrating an example of a ClientSelection node.
[FIG. 58]

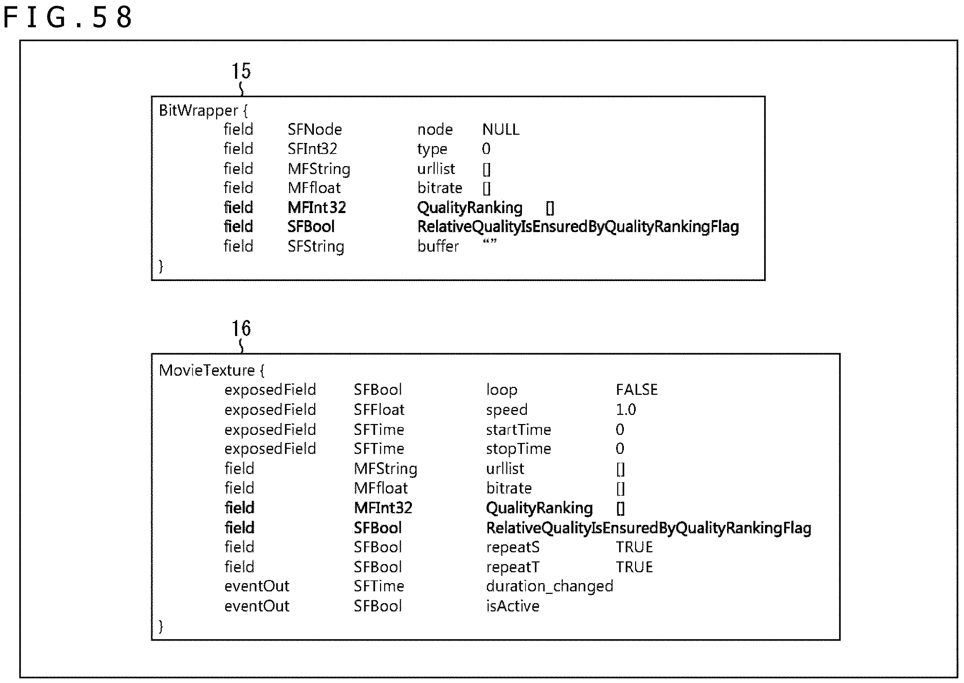

   FIG. 58 is a diagram illustrating an example of a BitWrapper node and a MovieTexture node.
[FIG. 59]

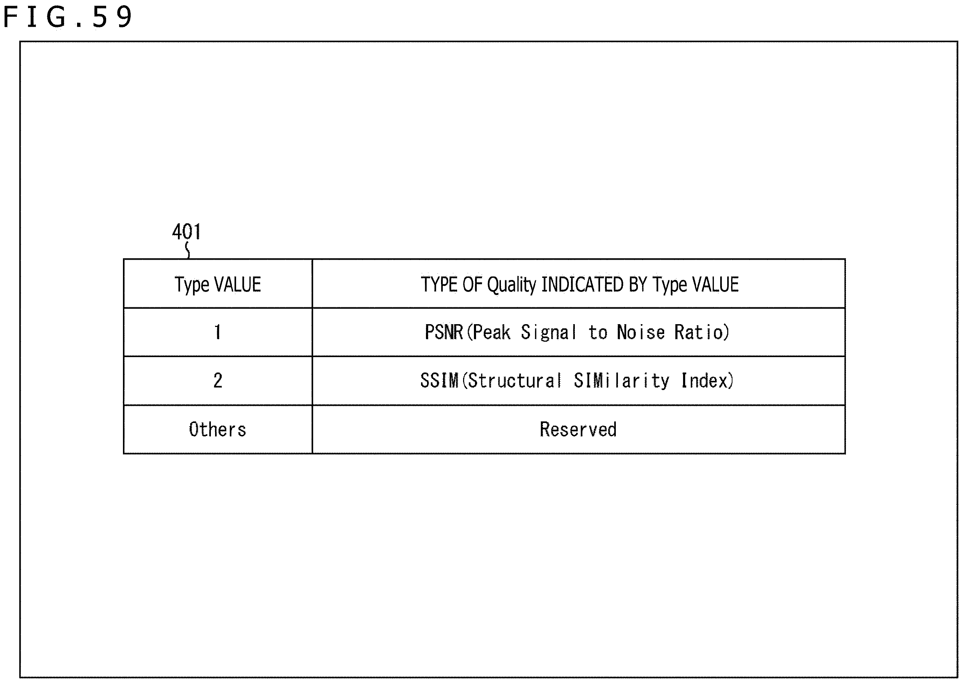

   FIG. 59 is a diagram illustrating an example of types of Quality.
[FIG. 60]

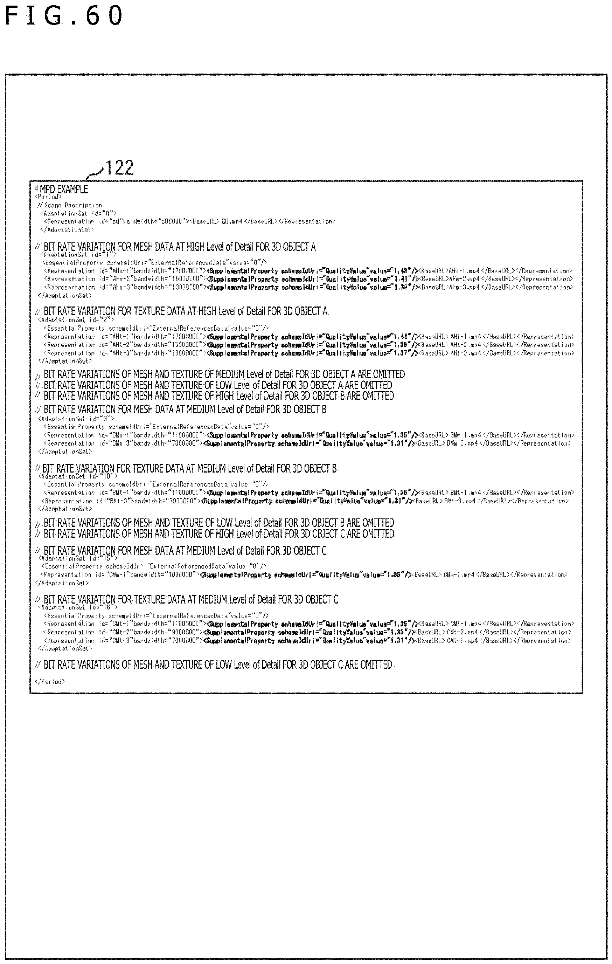

   FIG. 60 is a diagram illustrating an example of an MPD.
[FIG. 61]

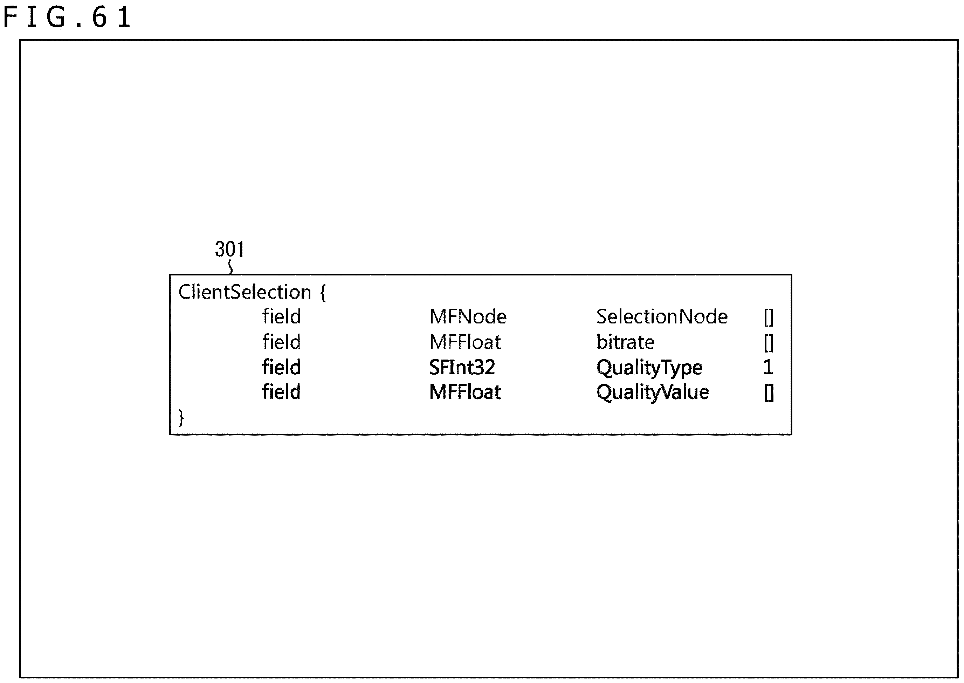

   FIG. 61 is a diagram illustrating an example of a ClientSelection node.
[FIG. 62]

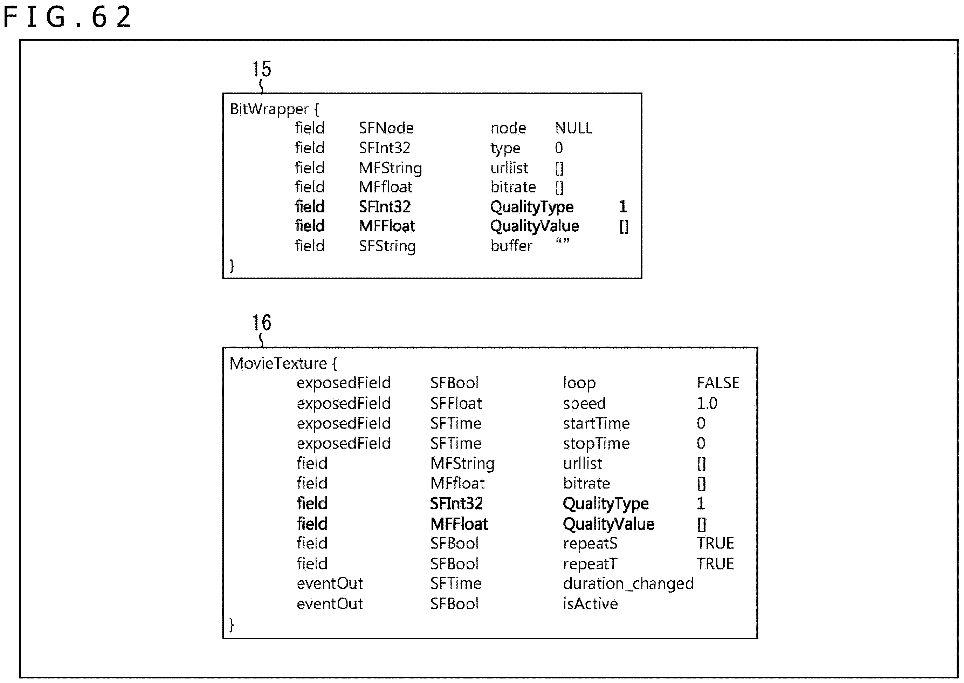

   FIG. 62 is a diagram illustrating an example of a BitWrapper node and a MovieTexture node.
[FIG. 63]

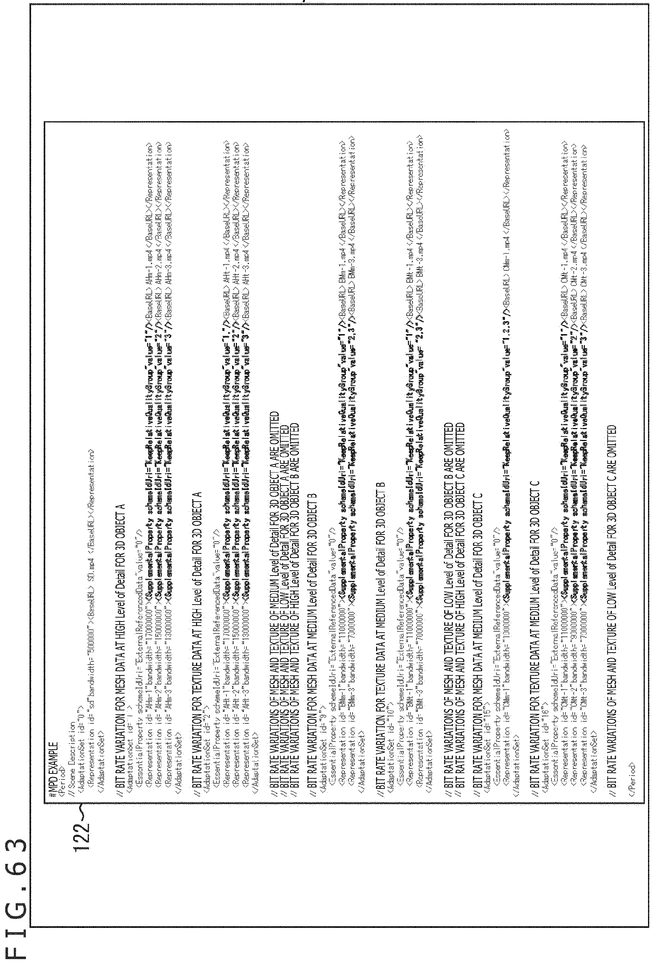

   FIG. 63 is a diagram illustrating an example of an MPD.
[FIG. 64]

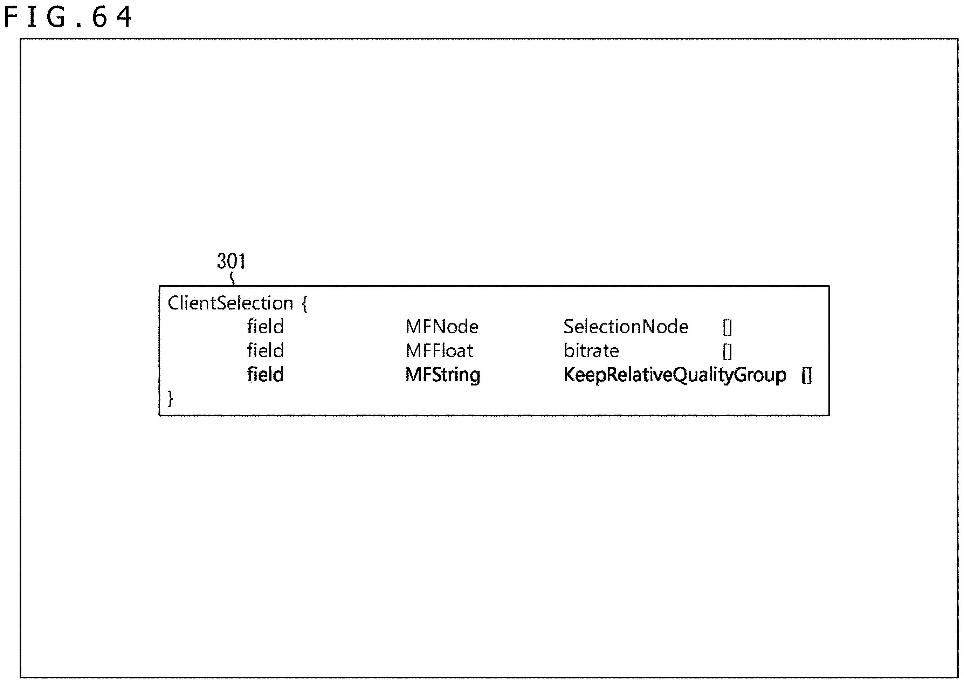

   FIG. 64 is a diagram illustrating an example of a ClientSelection node.
[FIG. 65]

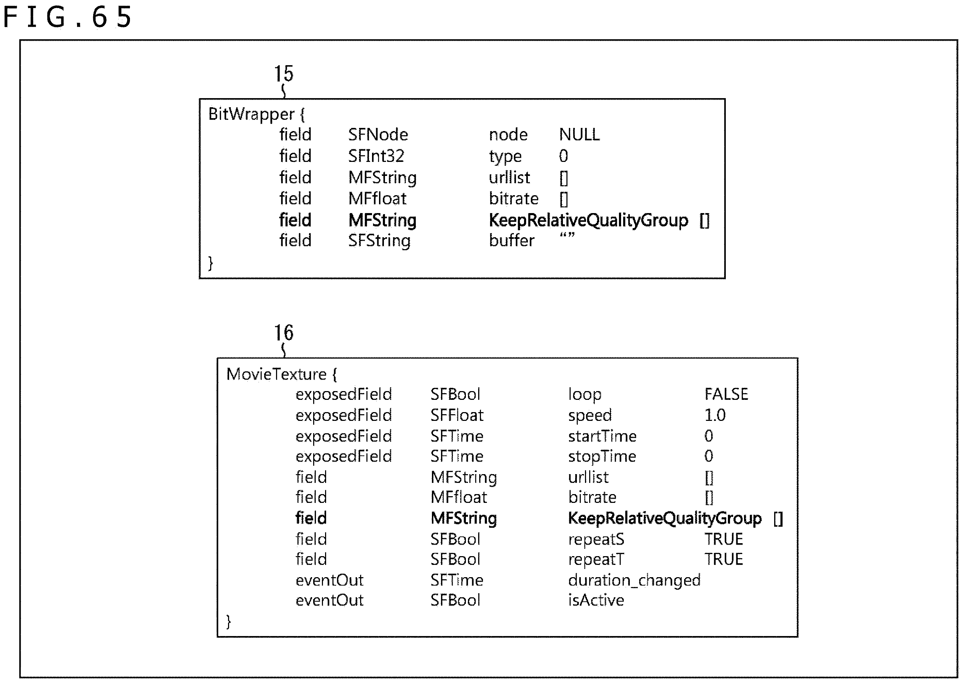

   FIG. 65 is a diagram illustrating an example of a BitWrapper node and a MovieTexture node.
[FIG. 66]

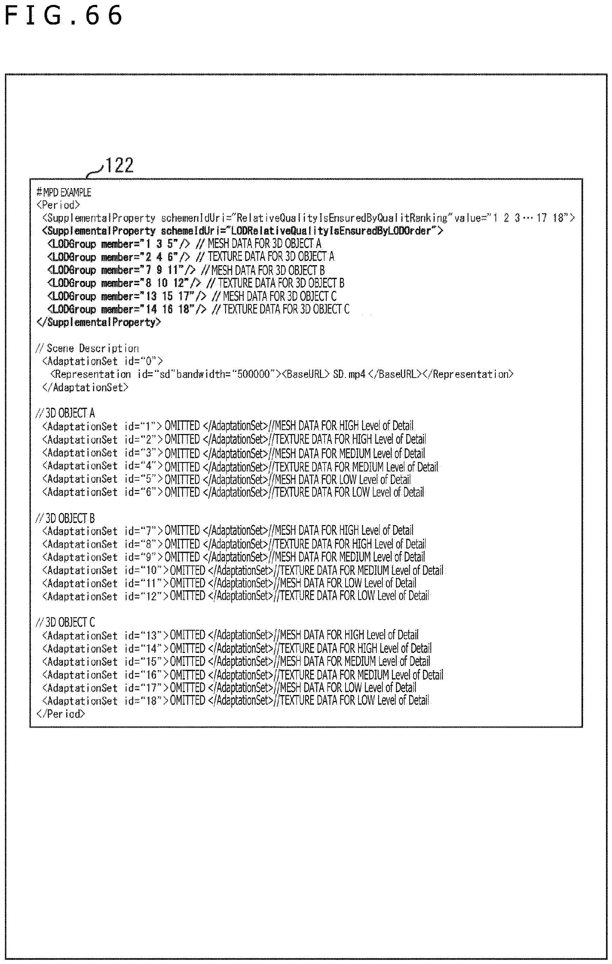

   FIG. 66 is a diagram illustrating an example of an MPD.
[FIG. 67]

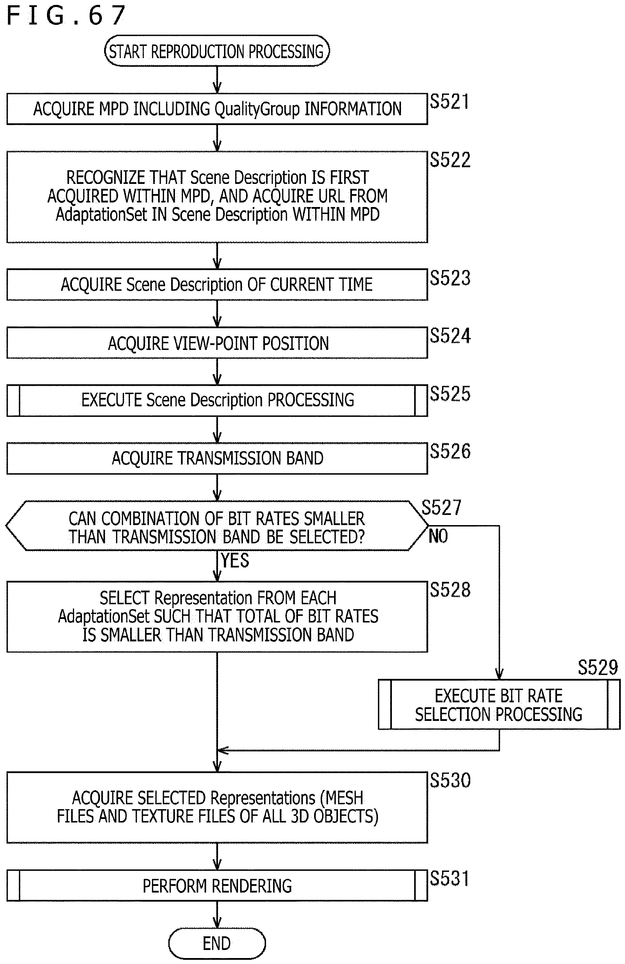

   FIG. 67 is a flowchart illustrating an example of a flow of reproduction processing.
[FIG. 68]

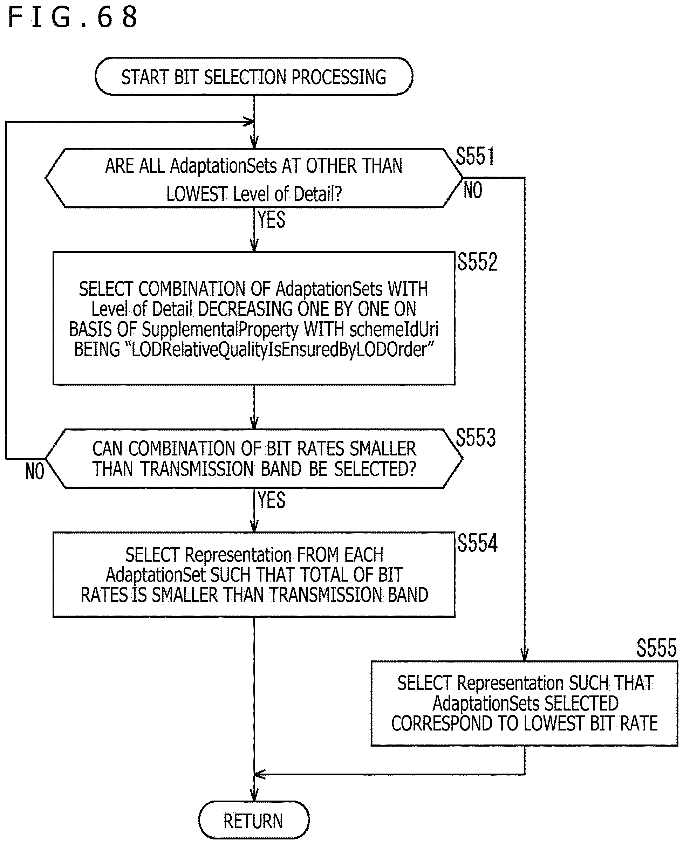

   FIG. 68 is a flowchart illustrating an example of a flow of bit rate selection processing.
[FIG. 69]

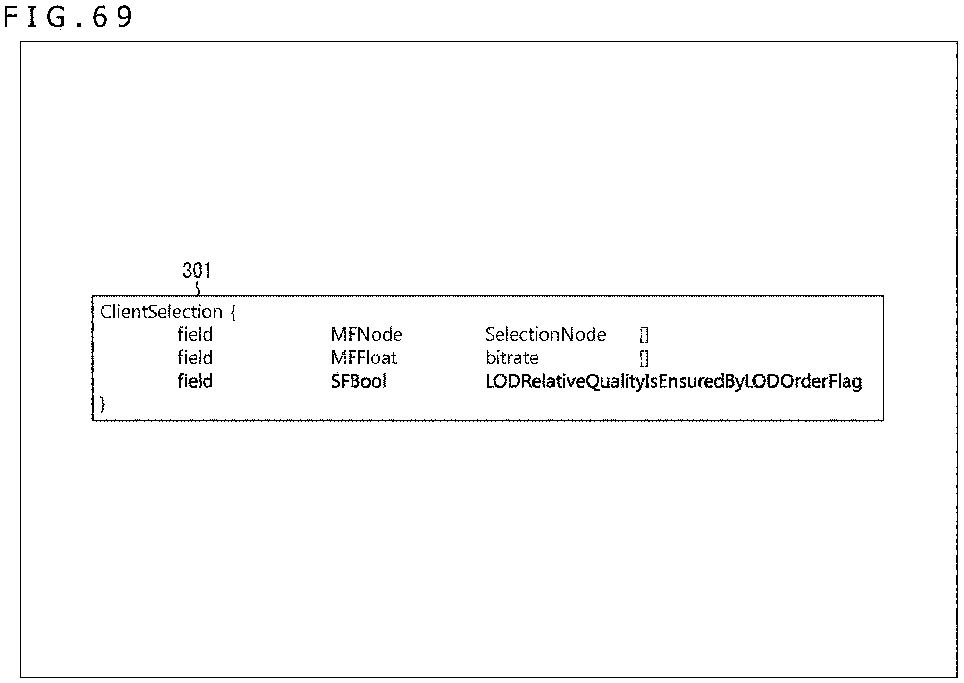

   FIG. 69 is a diagram illustrating an example of a ClientSelection node.
[FIG. 70]

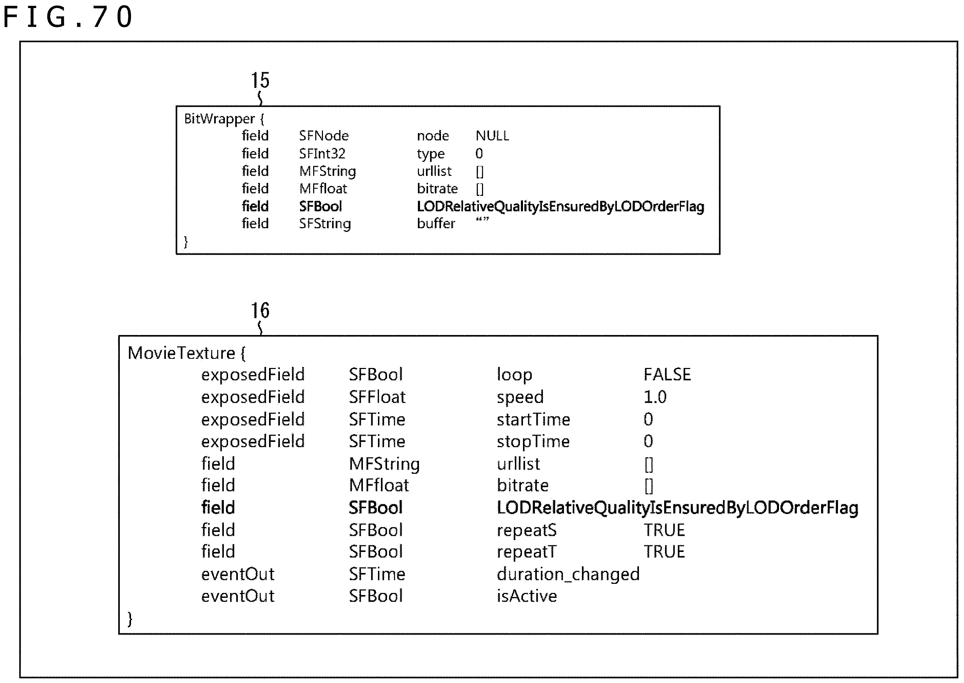

   FIG. 70 is a diagram illustrating an example of a BitWrapper node and a MovieTexture node.
[FIG. 71]

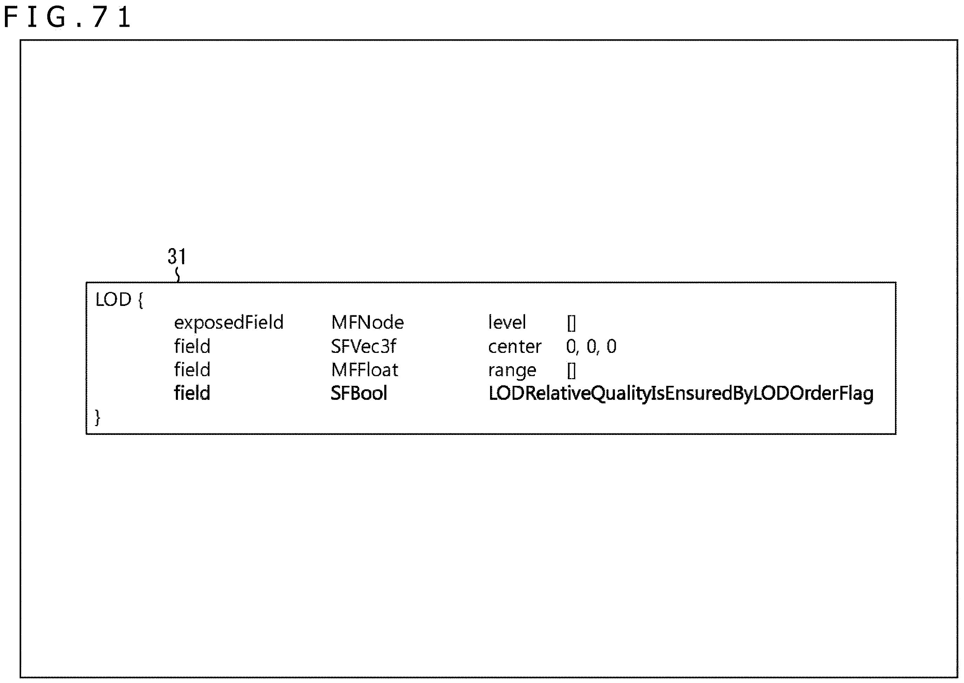

   FIG. 71 is a diagram illustrating an example of an LOD node.
[FIG. 72]

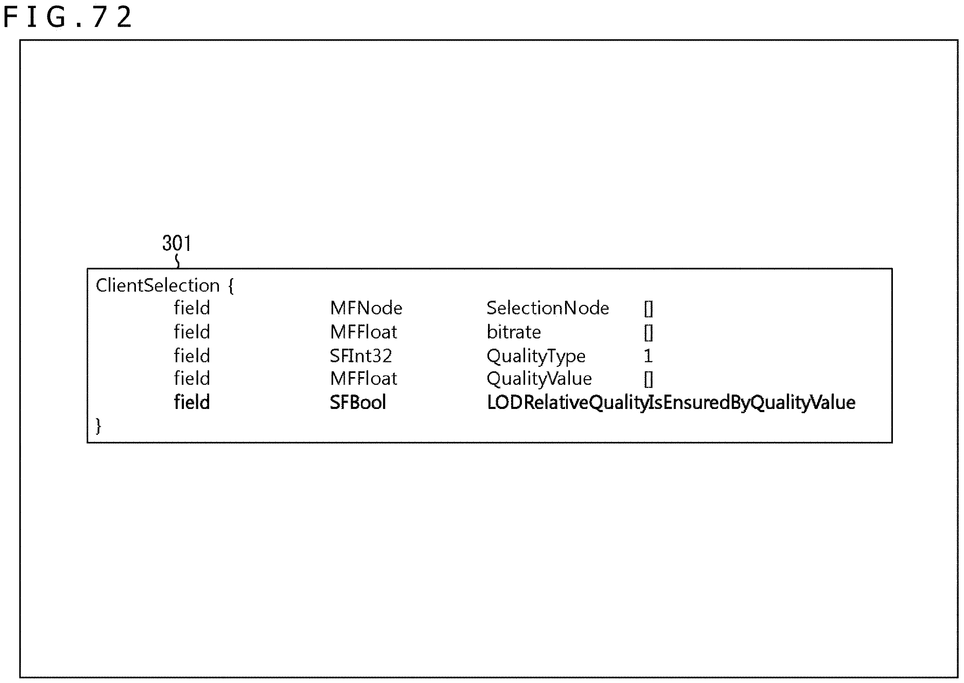

   FIG. 72 is a diagram illustrating an example of a ClientSelection node.
[FIG. 73]

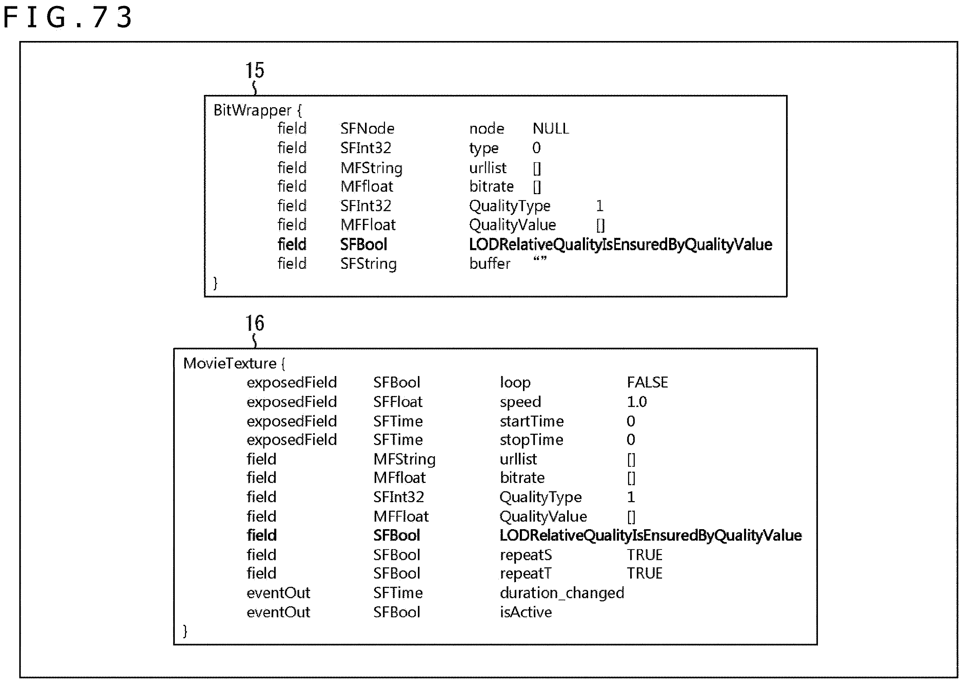

   FIG. 73 is a diagram illustrating an example of a BitWrapper node and a MovieTexture node.
[FIG. 74]

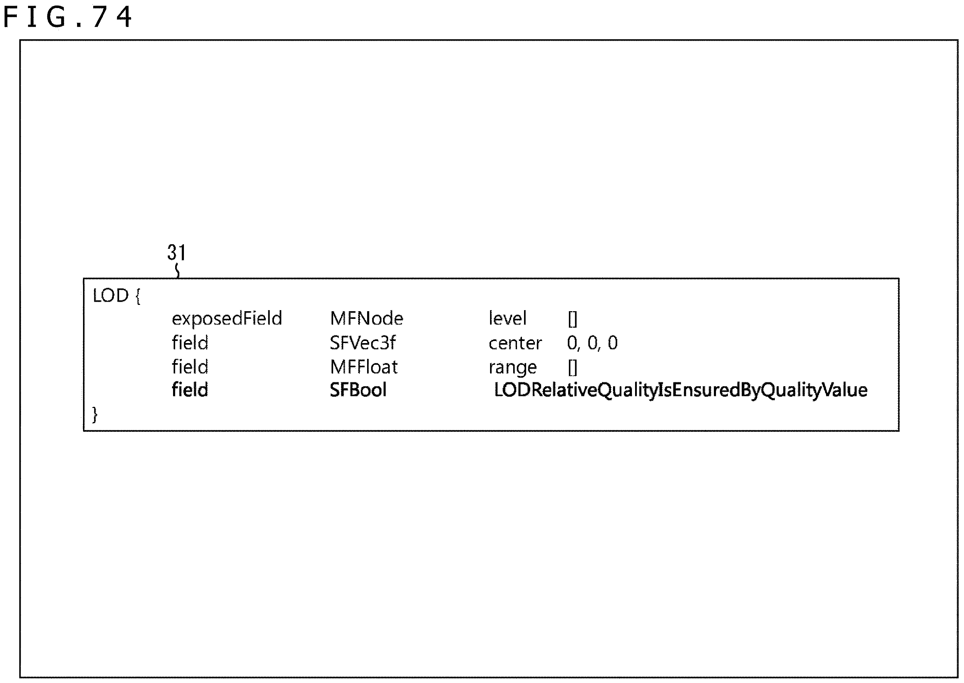

   FIG. 74 is a diagram illustrating an example of an LOD node.
[FIG. 75]

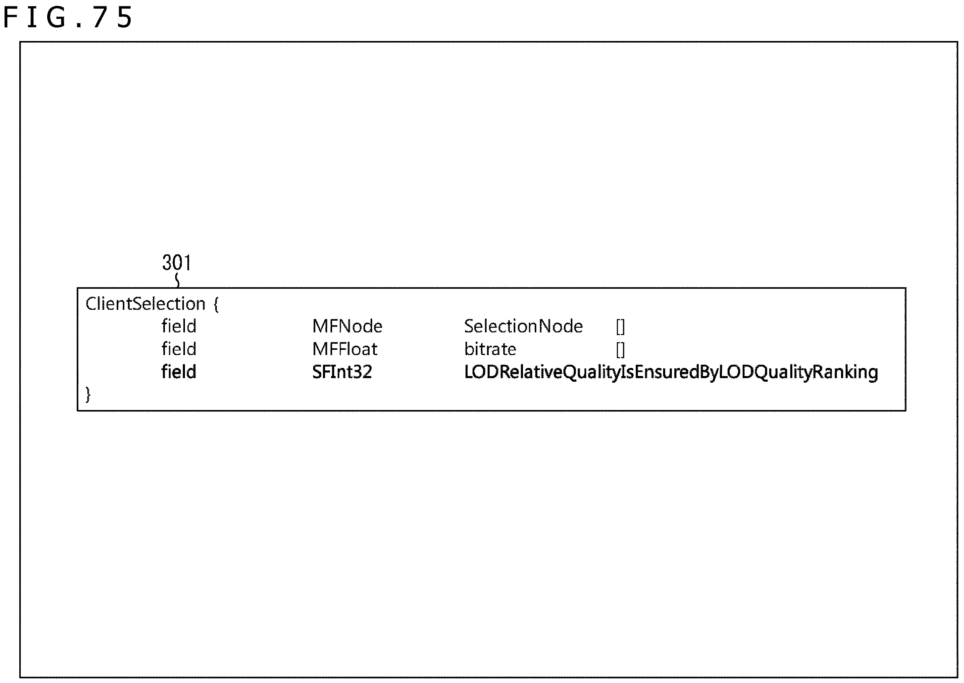

   FIG. 75 is a diagram illustrating an example of a ClientSelection node.
[FIG. 76]

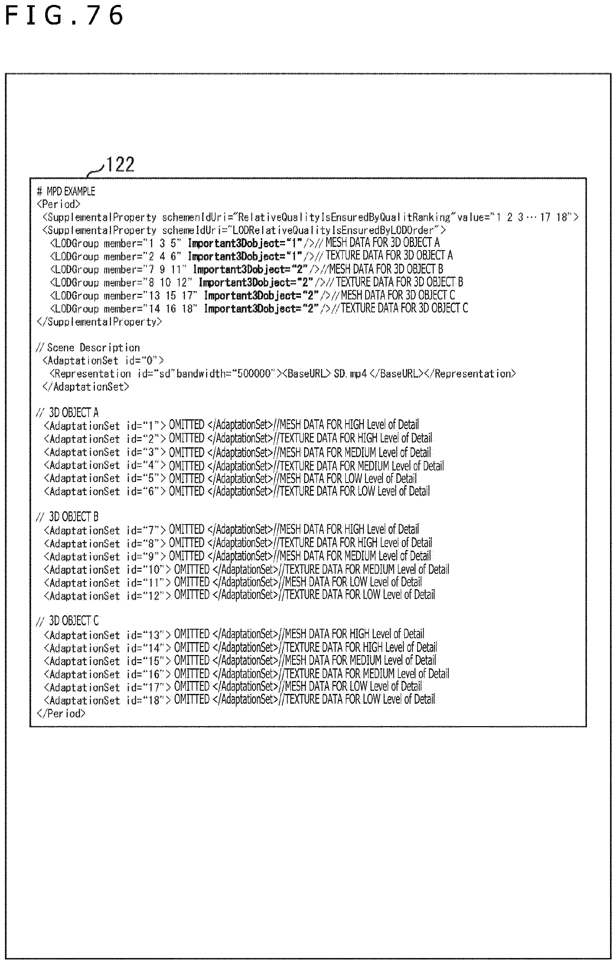

   FIG. 76 is a diagram illustrating an example of an MPD.
[FIG. 77]

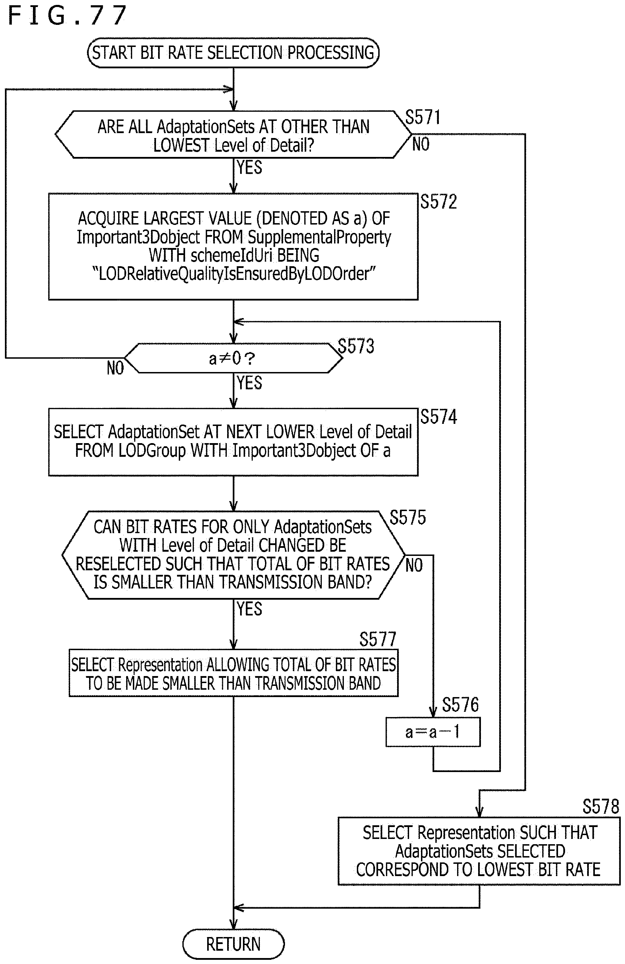

   FIG. 77 is a flowchart illustrating an example of a flow of bit rate selection processing.
[FIG. 78]

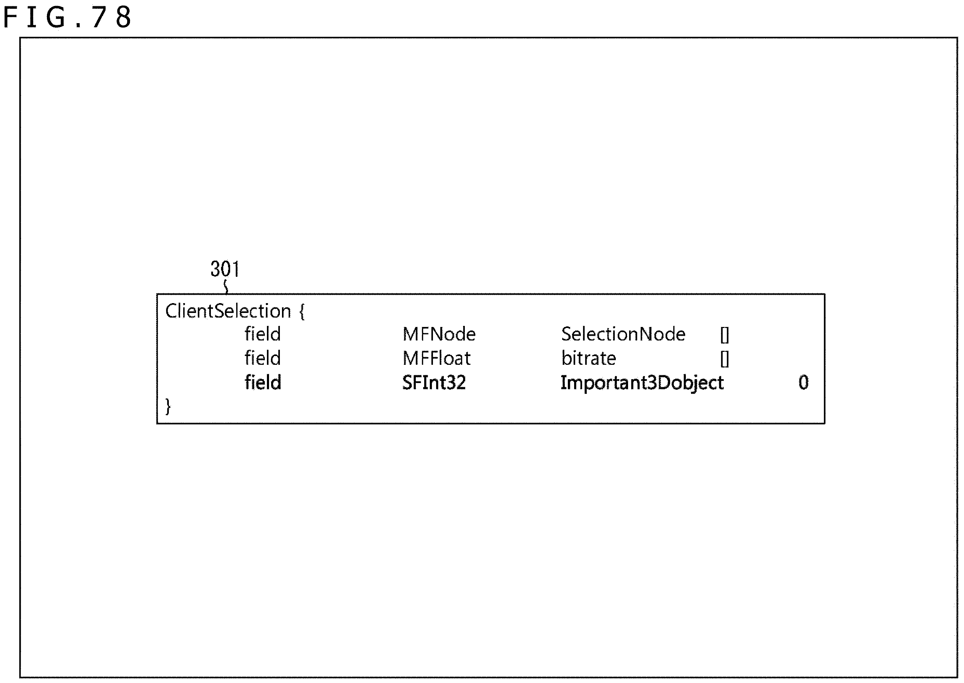

   FIG. 78 is a diagram illustrating an example of a ClientSelection node.
[FIG. 79]

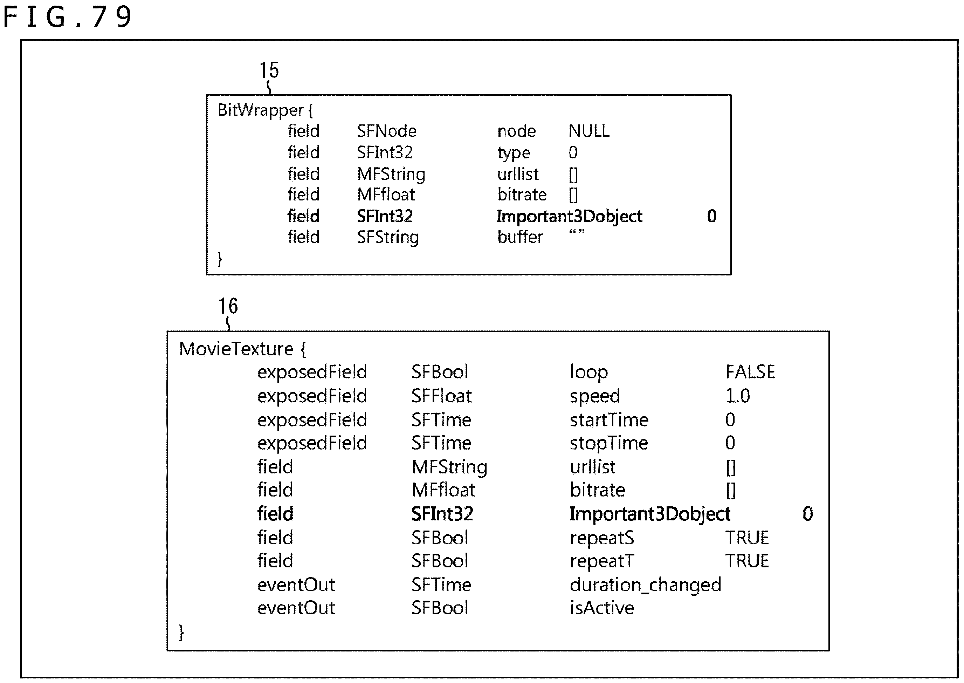

   FIG. 79 is a diagram illustrating an example of a BitWrapper node and a MovieTexture node.
[FIG. 80]

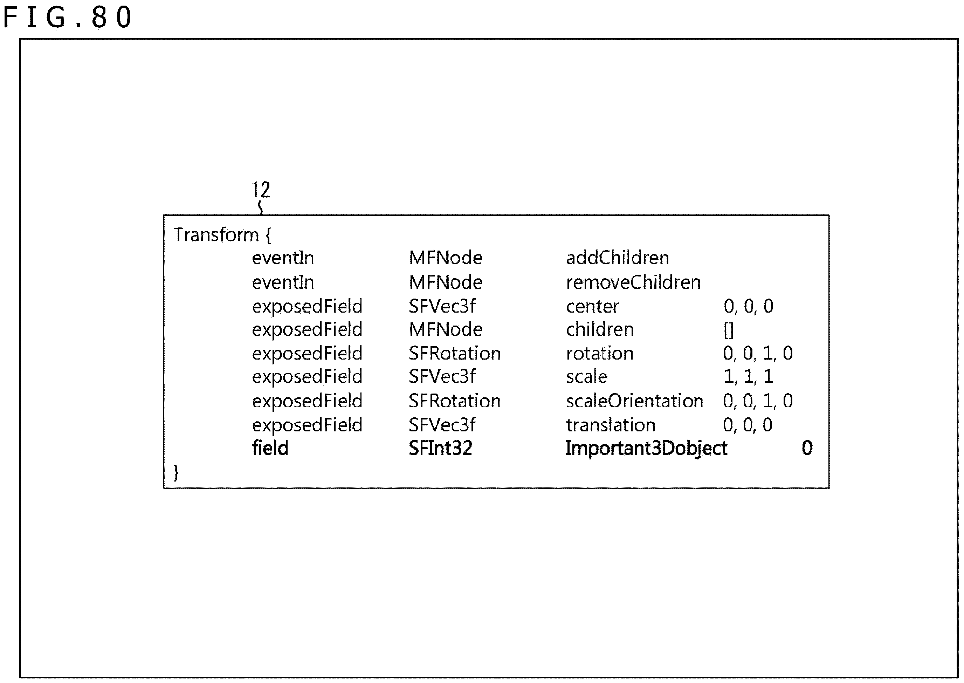

   FIG. 80 is a diagram illustrating an example of a Transform node.
[FIG. 81]

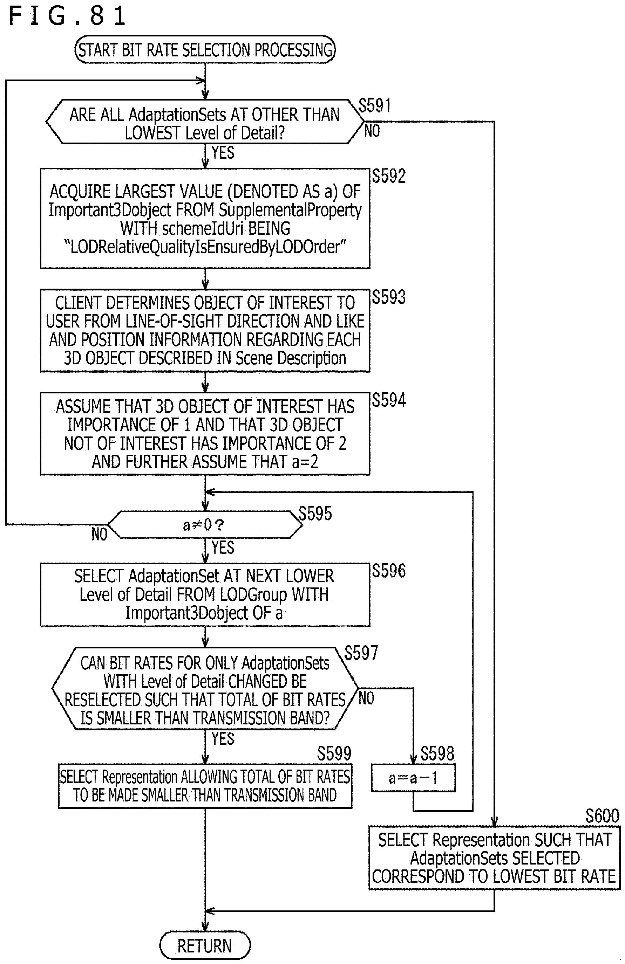

   FIG. 81 is a flowchart illustrating an example of a flow of bit rate selection processing.
[FIG. 82]

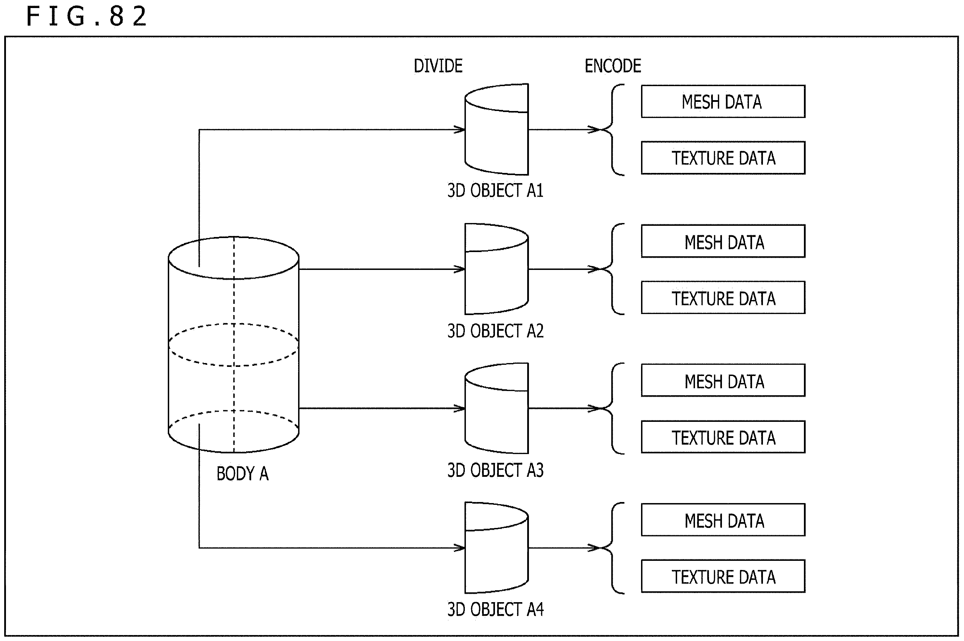

   FIG. 82 is a diagram depicting an example of partial 3D objects.
[FIG. 83]

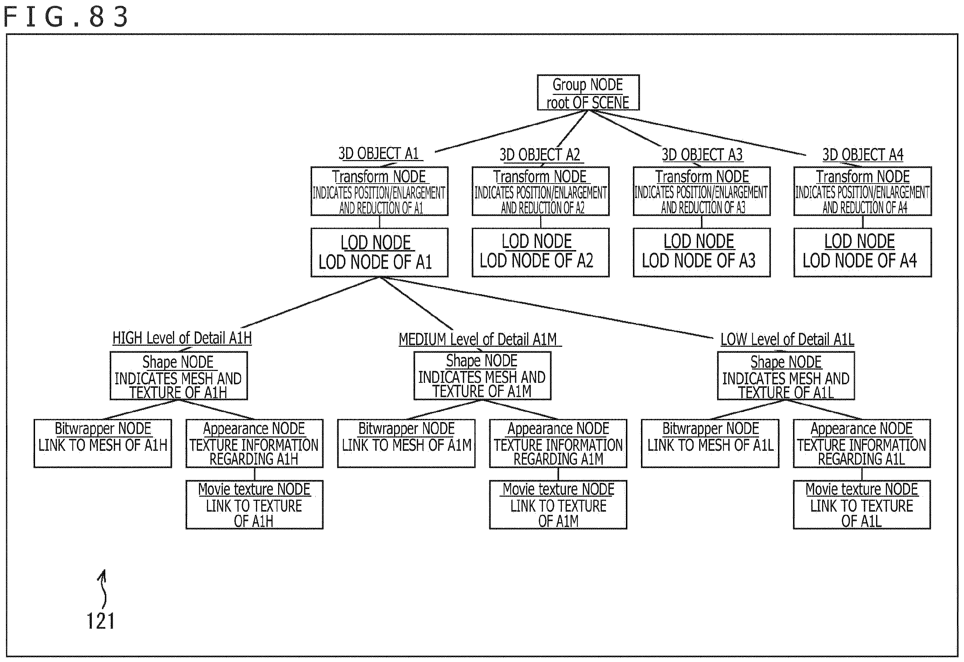

   FIG. 83 is a diagram depicting an example of Scene Description signaling partial 3D objects.
[FIG. 84]

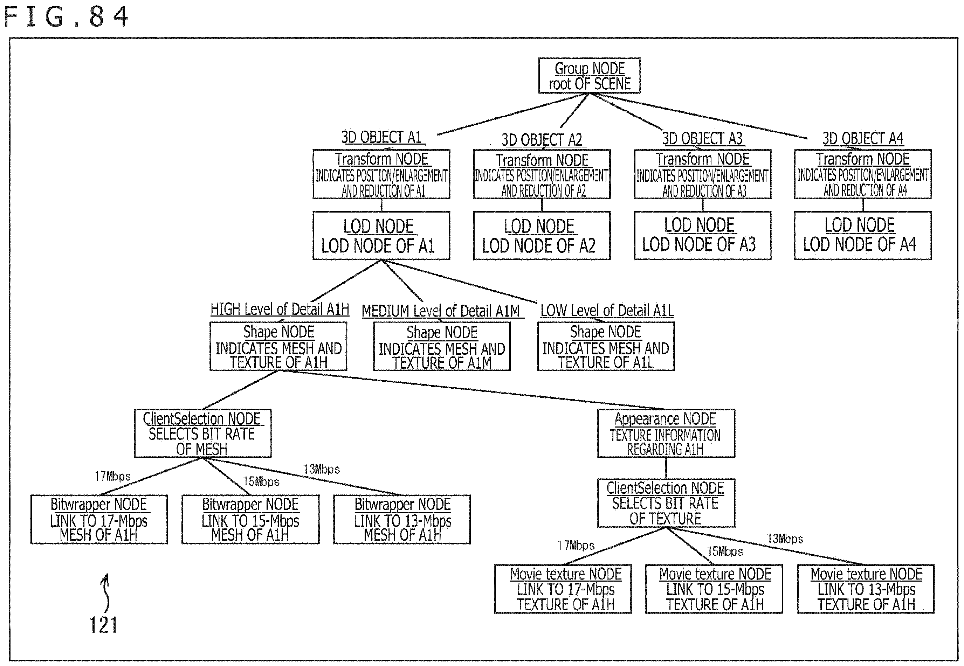

   FIG. 84 is a diagram depicting an example of Scene Description signaling partial 3D objects.
[FIG. 85]

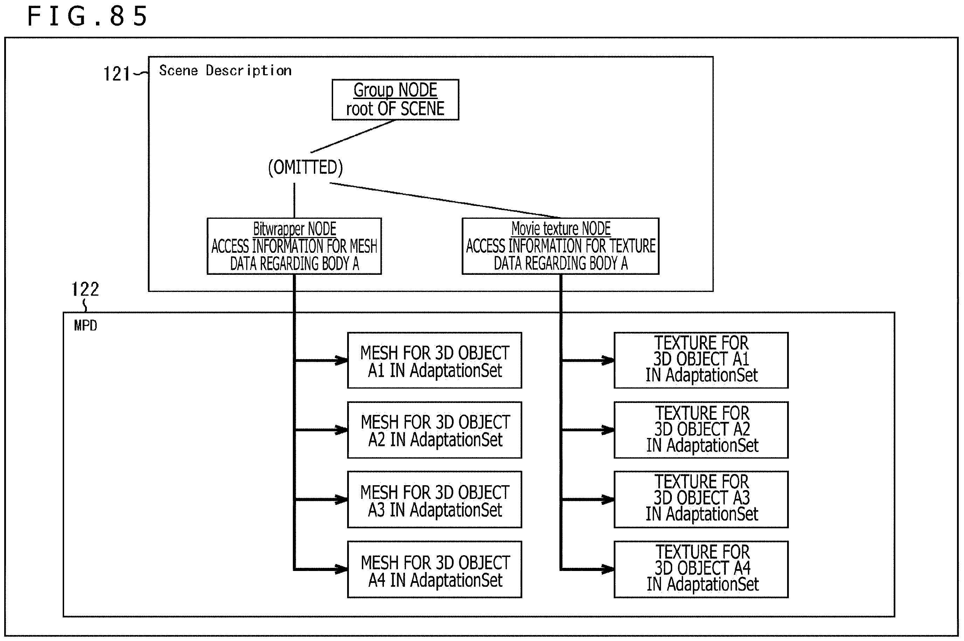

   FIG. 85 is a diagram depicting an example of Scene Description signaling a whole body.
[FIG. 86]

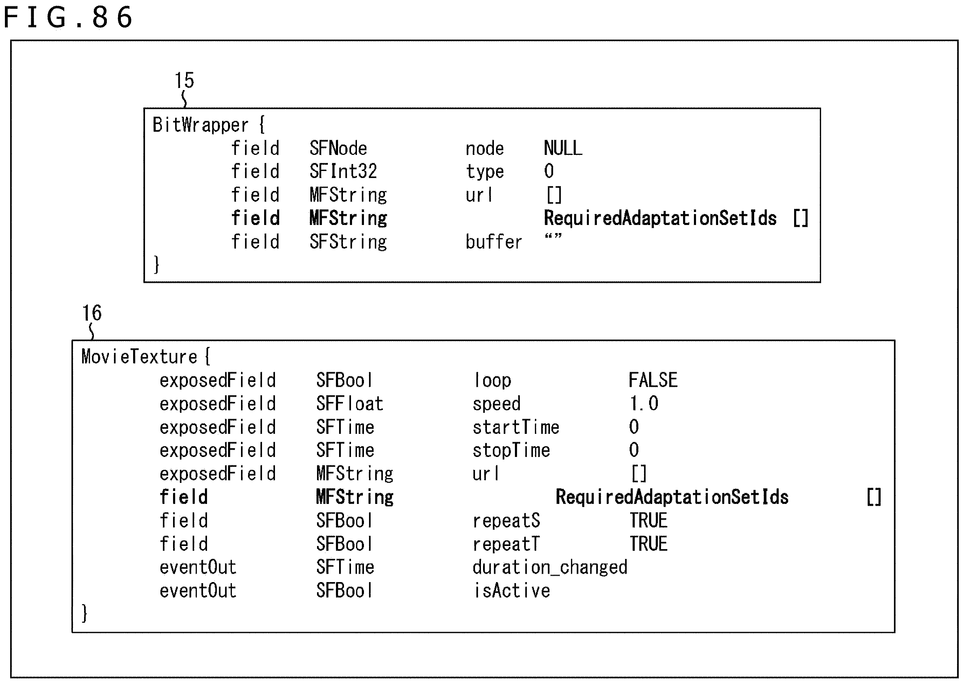

   FIG. 86 is a diagram illustrating an example of a BitWrapper node and a MovieTexture node.
[FIG. 87]

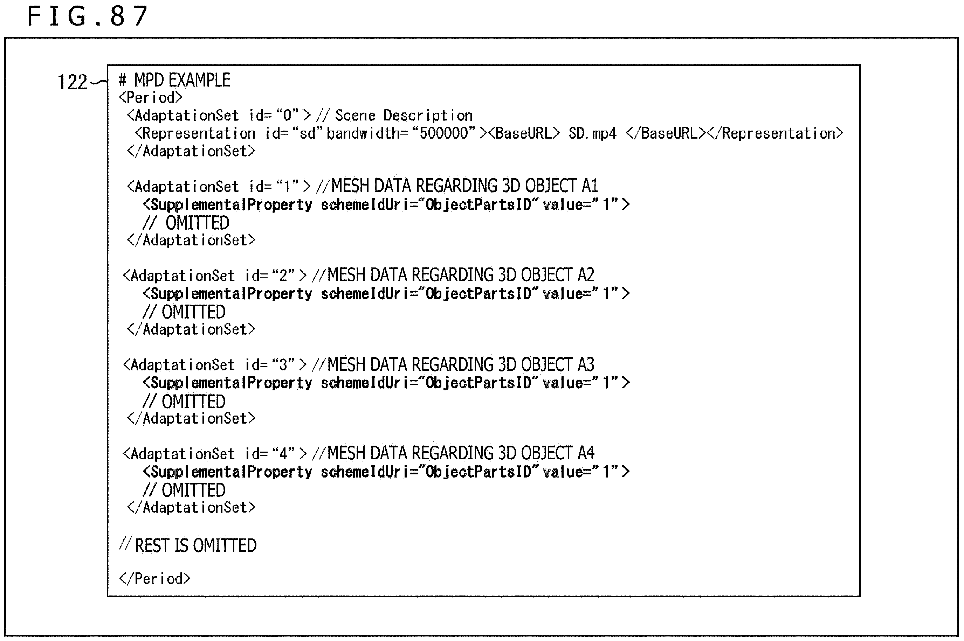

   FIG. 87 is a diagram illustrating an example of an MPD in which a body A includes four partial 3D objects.
[FIG. 88]

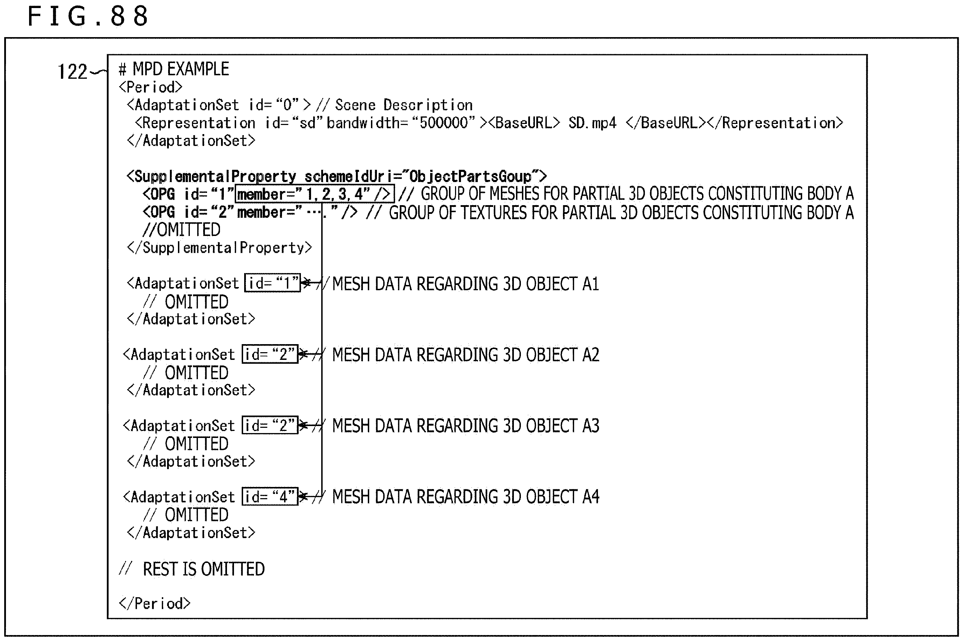

   FIG. 88 is a diagram depicting an example of an MPD signaling AdaptationSets in which a body includes Periods.
[FIG. 89]

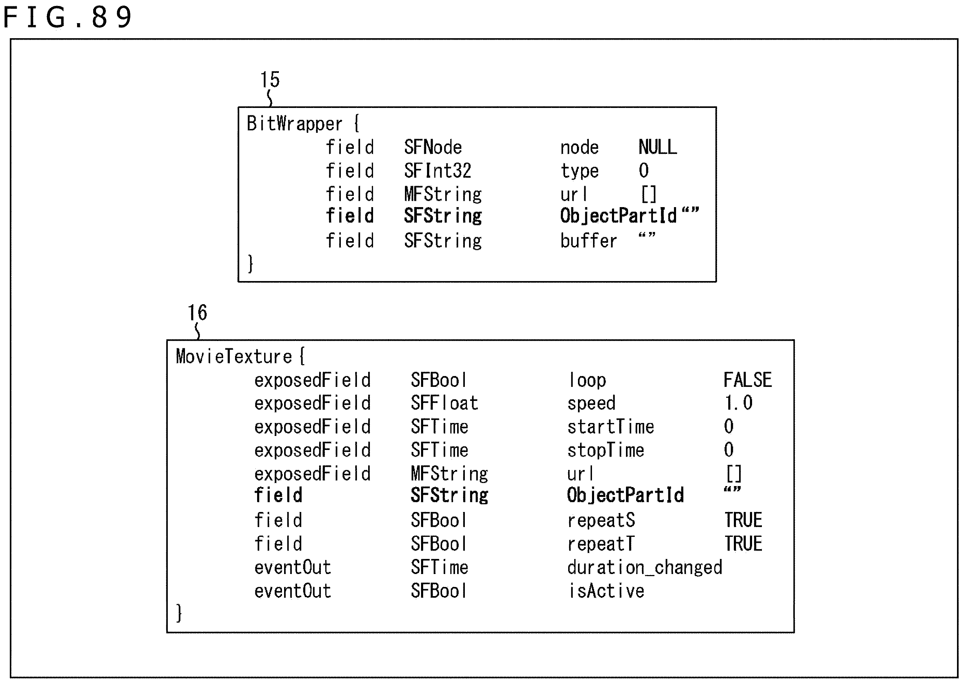

   FIG. 89 is a diagram illustrating an example of a BitWrapper node and a MovieTexture node.
[FIG. 90]

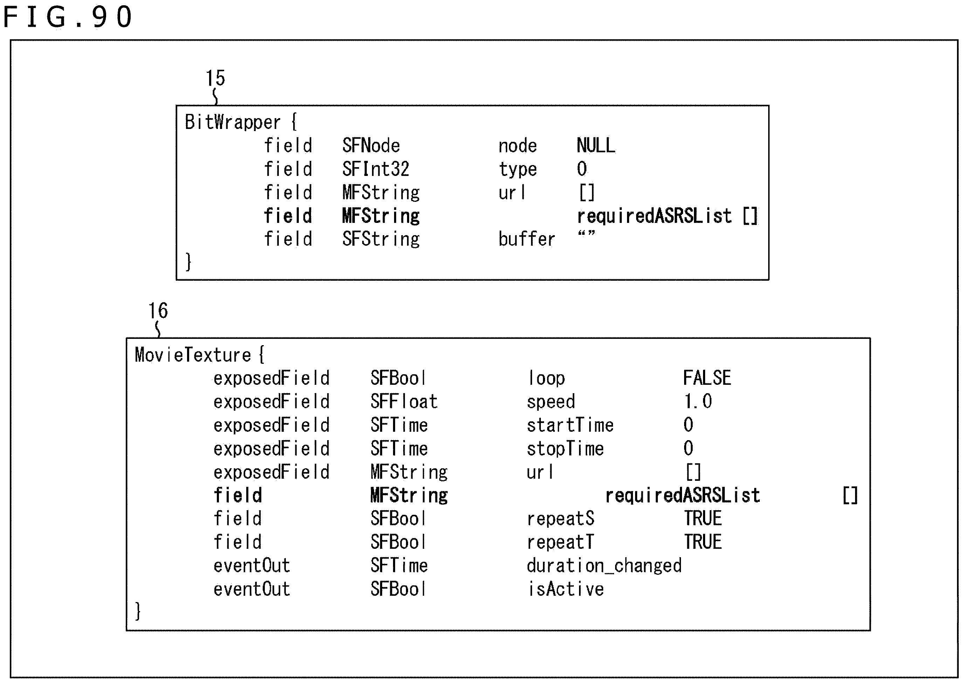

   FIG. 90 is a diagram illustrating an example of a BitWrapper node and a MovieTexture node.
[FIG. 91]

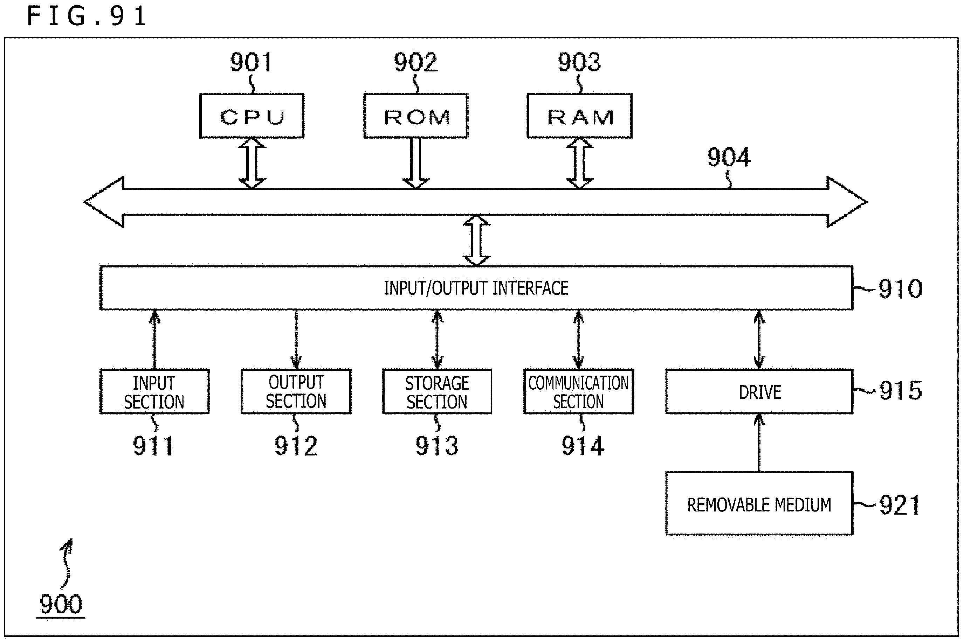

   FIG. 91 is a block diagram depicting a main configuration example of a computer.

### [Description of Embodiments]

Modes for implementing the present disclosure (hereinafter referred to as embodiments) will be described below. The description is in the following order.
1. Documents Supporting Technical Contents and Terms and Like
2. Distribution of 6DoF Content
3. First Embodiment (Bit Rate Adaptation)
4. Second Embodiment (Signaling for Uniformly Controlling Bit Rate)
5. Third Embodiment (Signaling Indicting Combination of Bit Rates to Be Acquired)
6. Fourth Embodiment (Signaling for Selecting Bit Rate by Controlling Level of Detail)
7. Fifth Embodiment (Signaling Indicating Intent of Content Author or Like)
8. Sixth Embodiment (Implementation Method for Maintaining Level of Detail of Object of Interest)
9. Seventh Embodiment (Signaling for Object Including Partial 3D Objects)
10. Supplementary Feature

### <1. Documents Supporting Technical Contents and Terms and Like>

The scope disclosed in the present technology includes contents described in the pieces of Non Patent Literature listed below and well known at the time of filing, as well as contents described in the embodiments.

NPL 1: (described above)
NPL 2: R. Mekuria, Student Member IEEE, K. Blom, P. Cesar., Member, IEEE, "Design, Implementation and Evaluation of a Point Cloud Codec for Tele-Immersive Video," tcsvt_paper_submitted_february.pdf
NPL 3: TELECOMMUNICATION STANDARDIZATION SECTOR OF ITU (International Telecommunication Union), "Advanced video coding for generic audiovisual services," H.264, 04/2017
NPL 4: TELECOMMUNICATION STANDARDIZATION SECTOR OF ITU (International Telecommunication Union), "High efficiency video coding," H.265, 12/2016
NPL 5: Jianle Chen, Elena Alshina, Gary J. Sullivan, Jens-Rainer, Jill Boyce, "Algorithm Description of Joint Exploration Test Model 4," JVET-G1001_v1, Joint Video Exploration Team (JVET) of ITU-T SG 16 WP 3 and ISO/IEC JTC 1/SC 29/WG 11 7th Meeting: Torino, IT, 13-21 July 2017

In other words, the contents described in the pieces of Non Patent Literature listed above also constitute grounds when support requirements are determined. For example, even in a case where the embodiments include no direct description of a Quad-Tree Block Structure described in NPL 4 and a QTBT (Quad Tree Plus Binary Tree) Block Structure described in NPL 5, the Quad-Tree Block Structure and the QTBT (Quad Tree Plus Binary Tree) Block Structure are assumed to be within the disclosure range of the present technology and to satisfy support requirements for claims. Additionally, for example, also for technical terms such as parsing, syntax, and semantics, even in a case where the embodiments include no direct description of the terms, the terms are assumed to be within the disclosure range of the present technology and to satisfy the support requirements for claims.

### <2. Distribution of 6DoF Content>

### <2-1: Content>

In the current video distribution, distribution of two-dimensional videos (also referred to as 2D content) prevails. The two-dimensional videos are utilized in distribution of movies and the like. Further, 360-degree video distribution, which allows a viewer to look around in all directions, is underway. 360-degree videos are also referred to as 3DoF (Degree of Freedom) videos or 3DoF content. For both 2D content and 3DoF content, two-dimensionally encoded videos are basically distributed and displayed at clients.

Additionally, content referred to as 3DoF+ content is available. The 3DoF+ content enable the viewer to look around in all directions like the 3DoF content and further enable a view-point position to be slightly moved. The range within which the view-point position is movable is assumed to correspond to the degree that the viewer can move the head while sitting. The 3DoF+ content enable movement of the view-point position by using one or more two-dimensionally encoded videos.

In contrast, 6DoF videos (also referred to as 6DoF content) are also available. The 6DoF videos allow the viewer to look around in all directions (allow the line-of-sight direction to be freely selected) and further allow the viewer to walk around in a space (allow the view-point position to be freely selected). The 6DoF content express a three-dimensional space (also referred to as a 3D space) for each point of time using one or more three-dimensional objects (also referred to as 3D objects). In other words, the 6DoF content is content expressing a three-dimensional object in the three-dimensional space and enabling the line-of-sight direction and the view-point position to be freely set at the time of reproduction.

A 3D object indicates any one of (1) one body in the 3D space, (2) a part of the body in (1), or (3) a set of plural bodies in the 3D space. Data regarding the 3D object involves a configuration with mesh data allowing an object to be expressed as geometric data for polygons and texture data corresponding to data attached to the surfaces of polygons, or a configuration with a set of plural points (point cloud).

Possible methods for transmitting 6DoF content include a method for configuring a 3D space using one 3D object and transmitting the content in one object stream and a method for configuring the 3D space using plural 3D objects and transmitting the content in plural object streams.

For expression of the 3D space, 6DoF content have expression properties in that, in a case where 6DoF content is displayed on a 2D display or an HMD (Head Mounted Display), a body farther from the view-point position is displayed smaller, whereas a body closer to the view-point position is displayed larger. A body displayed smaller may be displayed at a lower resolution. However, in a case where the 6DoF content in a large area is transmitted in one object stream as in the former case, the 6DoF content as a whole is displayed at a uniform resolution regardless of the display properties as described above. The uniform overall resolution may lead to the presence of appropriate resolutions in some portions and unnecessarily high resolutions in other portions in a case where the display screen is rendered. The portions with unnecessarily high resolutions require excess decode and rendering processing. In other words, an unwanted increase in loads may result.

In the method in which the 3D space includes plural 3D objects and in which the content is transmitted in plural object streams as in the latter case, a description method referred to as Scene Description is used. The Scene Description indicates information used to configure the 6DoF content using plural object streams and to appropriately display the 6DoF content according to a distance from the view-point position.

Plural standards are available for the Scene Description. Basically, a scene is expressed as a graph of a tree hierarchical structure referred to as a scene graph, and the scene graph is expressed in a binary format or a text format. Here, the scene graph is spatial display control information based on the view-point position and is configured by using nodes as constituent units to define information related to display of an 3D object at the view-point position and combining plural nodes in a hierarchical manner. The nodes include nodes for position information and size information regarding 3D objects, nodes for access information for mesh data and texture data, and nodes for information for appropriate display according to the distance from the view-point position. These nodes are used for each 3D object.

Note that the 6DoF content is assumed to be configured using Scene Description data (stream data of Scene Description) corresponding to metadata regarding the 6DoF content and media data regarding plural 3D objects (combination of mesh data and texture data regarding the 3D objects for expression). For the media data regarding the 3D object, another format such as a Point Cloud can be applied. Additionally, the Scene Description data is assumed to be compliant with MPEG-4 Scene Description (ISO/IEC 14496-11).

The MPEG-4 Scene Description data is obtained by binarizing a scene graph in a format referred to as a BIFS (Binary Format for Scenes). The scene graph can be converted into the BIFS using a predetermined algorithm. Additionally, storage in an ISO base media file format allows a scene to be defined for each point of time, enabling expression of a moving body and the like.

Expression of 6DoF content leads to, for example, a scene graph as depicted in FIG. 1. The 6DoF content expressed by a scene graph 10 in FIG. 1 includes plural 3D objects. FIG. 1 depicts only the configuration of a 3D object 1 in detail (a child node of a Transform node 12-1 of the 3D object 1 and the subsequent nodes), and detailed configurations of a 3D object 2 to a 3D object n (child nodes of a Transform node 12-2 of the 3D object 2 to a Transform node 12-n of a 3D object n and the subsequent nodes) are omitted.

A Group node 11 at the root includes a Transform node 12 as a child node. The Transform node 12 includes organized information including the position and size of the 3D object. In other words, each Transform node 12 organizes information regarding each 3D object in the 3D space. The Transform node 12 includes a Shape node 13 as a child node. The Shape node 13 includes organized information related to the shape of the 3D object. The Shape node 13 includes an Appearance node 14 and a BitWrapper node 15 as child nodes. The Appearance node 14 includes organized information for texture data. The BitWrapper node 15 includes organized information for mesh data. The BitWrapper node 15 includes access information for mesh data configured as a separate file. The Appearance node 14 includes a MovieTexture node 16 as a child node. The MovieTexture node 16 includes access information for texture data configured as a separate file.

FIG. 2 depicts an example of information included in each node. These nodes include fields set for the respective pieces (types) of information, and in each of the fields, information corresponding to the field is stored. FIG. 3 depicts an example of syntax for the nodes.

One of the functions of Scene Description is having data of plural Levels of Detail for one 3D object and allowing switching among the Levels of Detail depending on the state of display. The Level of Detail is, for example, data varying in at least either one of the number of vertexes in mesh data or the resolution of the texture data. For example, the Level of Detail increases consistently with the number of vertexes in the mesh data or the resolution of the texture data.

This function utilizes, for expression of the 3D space, the expression property of 6DoF content that, when a 3D object is displayed on a 2D Display or an HMD, a 3D object farther from the view-point position is displayed smaller, whereas a 3D object closer to the view-point position is displayed larger. For example, the 3D object closer to the view-point position is displayed larger, and thus requires data with a high Level of Detail (mesh data with a large number of vertexes and texture data with a high resolution). In contrast, the 3D object farther from the view-point position is displayed smaller, and thus the use of data with a low Level of Detail (mesh data with a small number of vertexes and texture data with a low resolution) is sufficient for this 3D object.

This function is implemented by an LOD node in Scene Description. FIG. 4 depicts an example of information included in the LOD node. As depicted in FIG. 4, an LOD node 31 includes information used to switch the Level of Detail of the 3D object. The LOD node 31 includes, for example, a "central point of the 3D object used to determine distances" (center field in FIG. 4), a "distance between the view-point position and the 3D object" (range field in FIG. 4), and "data regarding the 3D object to be utilized on a distance-by-distance basis" (level field in FIG. 4).

The use of the function of the LOD node enables the appropriate Level of Detail to be selected for the 3D object according to the view-point position, allowing appropriate display quality to be maintained, while enabling a reduction in the amount of processing. This function is hereinafter referred to as adaptation depending on the view-point position.

For example, the LOD node 31 is positioned between the Transform node 12 and the Shape node 13. The "data regarding the 3D object to be utilized on a distance-by-distance basis" (level field in FIG. 4) of the LOD node 31 is assumed to address the Shape node 13 to be selected.

FIG. 5 depicts an example of a scene graph 10 using LOD nodes. As depicted in FIG. 5, the scene graph 10 is provided with an LOD node 31 as a child node of each Transform node 12. The LOD node 31 switches the Level of Detail using the distance between the view-point position and the 3D object. The LOD node 31 includes the coordinates of the central position utilized to determine the distance to the 3D object and includes, as a child node, the Shape node 13 (Shape node 13-1 to Shape node 13-3) indicating data regarding the 3D object utilized on a distance-by-distance basis. For each Shape node 13, information is set that relates to nodes having access information for mesh data and texture data with a different assigned level.

This allows data with a high Level of Detail to be used for a close distance, data with a medium Level of Detail to be used for medium distance, and data with a low Level of Detail to be used for a far distance. Data with the appropriate Level of Detail can be used depending on the view-point.

Now, distribution of 6DoF content is considered. The 6DoF content can be reproduced by acquiring, via a network, Scene Description data and media data (mesh data and texture data) referenced from the Scene Description data. In contrast, the reproduction of 6DoF content using Scene Description involves prerequisites described below.

- A network environment or a storage that allows a sufficient transmission band to be provided in which, for example, a 6DoF content distribution server is mainly locally present, is present.
- Clients have sufficient processing capabilities. In other words, decoding and display processing (rendering) of all meshes and textures acquired can be performed within a predetermined time.

For the amount of processing by clients, the Scene Description enables a reduction in the amount of processing by using adaptation depending on the view-point position. However, for the transmission band, the Scene Description has no function to perform adaptive distribution depending on the transmission band. Thus, reproduction is enabled in a case where a sufficient transmission band can be provided for transmission of Scene Description data and media data, but a limited transmission band may prevent clients from acquiring or reproducing data or cause interrupted reproduction.

Note that, for the 6DoF content, correlation of quality between the 3D objects needs to be maintained in order to suppress degradation of quality at the time of reproduction. Consequently, even if a bit rate-adaptive distribution technique such as 2D content is used, no means is available for maintaining the correlation of quality between 3D objects depending on the view-point position in a case where the bit rate is adaptively manipulated. This may prevent appropriate distribution depending on the situation of the client.

### <2-2: Concept>

Thus, signaling that enhances the Scene Description and that enables the bit rate adaptation is performed bit rate (first embodiment (also referred to as Embodiment 1). Accordingly, it is possible to suppress the effect of the limited transmission band on reproduction in the 6DoF content distribution using the Scene Description, allowing robustness of content reproduction to be improved.

Additionally, signaling that indicates that quality can be maintained by uniformly reducing the bit rates for all meshes and textures may be added (second embodiment (also referred to as Embodiment 2)). Accordingly, the client can definitely determine which bit rates to be selected, allowing maintenance of the relative quality between 3D objects optimum for the view-point position.

Further, meta-information that indicates which bit rates are simultaneously acquired for the respective textures and meshes to allow quality to be maintained may be added (third embodiment (also referred to as Embodiment 3)). Accordingly, even in a case where the bit rate adaptation with a uniform reduction in bit rates has difficulty in maintaining the relative quality between 3D objects, the relative quality between 3D objects can be maintained.

Additionally, signaling that lowers the Level of Detail of each 3D object to reduce the transmission band may be added (fourth embodiment (also referred to as Embodiment 4)). Accordingly, for example, even in a case where, in spite of selection of meshes and textures all involving the minimum bit rates, the transmission band is narrower than the total bit rate, interrupted reproduction can be suppressed.

Further, signaling of importance information regarding the 3D object may be added (fifth embodiment (also referred to as Embodiment 5)). Accordingly, it is possible to maintain the Level of Detail of the 3D object that is important according to the intent of a content author or the like.

Additionally, a 3D object of interest may be identified, and the Level of Detail of the 3D object may be maintained (sixth embodiment (also referred to as Embodiment 6)). Accordingly, it is possible to maintain the Level of Detail of the 3D object of interest to the user.

Embodiments will be described below. Note that MPEG-4 Scene Description is hereinafter applied as the Scene Description. However, any standard may be used for the Scene Description, and the available standard may include, for example, VRML (Virtual Reality Modeling Language), Open Scene Graph (http://www.openscenegraph.org/), Universal Scene Description (https://graphics.pixar.com/usd/docs/index.html), X3D (ISO/IEC 19775-1), and glTF (https://www.khronos.org/gltf/).

### <3. First Embodiment (Embodiment 1)>

In a first embodiment, signaling is enhanced to enable bit rate adaptation for each Level of Detail of each 3D object. For example, metadata regarding content is generated, the content expressing a three-dimensional object in a three-dimensional space and enabling a line-of-sight direction and a view-point position to be freely set at a time of reproduction, the metadata including information enabling a bit rate to be selected at the time of distribution of the content. For example, an information processing apparatus includes a generation section generating metadata regarding content expressing a three-dimensional object in a three-dimensional space and enabling a line-of-sight direction and a view-point position to be freely set at the time of reproduction, the metadata including information enabling a bit rate to be selected at the time of distribution of the content.

Accordingly, it is possible to suppress the effect of the limited transmission band on reproduction in the 6DoF content distribution using the Scene Description, allowing robustness of content reproduction to be improved.

### <3-1: Embodiment 1-1>

As information enabling the bit rate to be selected at the time of distribution of content, metadata that includes access information for a control file controlling the reproduction of the content may be generated. In other words, for example, the bit rate adaptation may be achieved by a configuration using an MPD file for DASH and Scene Description data. For the current 2D content and the 3DoF content, a mechanism that uses DASH (Dynamic Adaptive Streaming over HTTP, ISO/IEC 23009-1) to switch between data with different bit rates is available, enabling reproduction to be achieved without interruption even in a case where the transmission band is narrowed. In this method, data with different bit rates in AdaptationSets in the MPD file corresponding to a manifest file for DASH is signaled in Representation.

Thus, the mechanism of the bit rate adaptation implemented using the MPD as described above is utilized and combined with the Scene Description to suppress interruption of reproduction and the like. For example, the AdaptationSet in the MPD file may be allowed to be referenced using access information in external media data of the Scene Description (Embodiment 1-1-1). In this case, a client apparatus 103 selects a bit rate from the AdaptationSet in an MPD indicated as external media data.

In a case where an LOD node is present in the Scene Description, the Level of Detail appropriate for each 3D object is determined depending on the view-point position. Thus, in the present Embodiment 1-1, a bit rate variation is provided for each Level of Detail, thus enabling the bit rate adaptation for each Level of Detail.

### <Distribution System>

FIG. 6 is a block diagram depicting an example of a main configuration of a distribution system corresponding to an aspect of a system to which the present technology is applied. A distribution system 100 depicted in FIG. 6 is a system distributing 6DoF content from a server to clients.

As depicted in FIG. 6, the distribution system 100 includes a file generation apparatus 101, a Web server 102, and a client apparatus 103. The Web server 102 and the client apparatus 103 are connected via the Internet 110. Note that FIG. 6 depicts a single apparatus for each apparatus but that the distribution system 100 can include any number of apparatuses for each apparatus. In other words, plural the file generation apparatuses 101, plural Web servers 102, and plural client apparatuses 103 may be provided.

The file generation apparatus 101 generates Scene Description data 121, an MPD file 122, and media data 123 (media data 123-1, media data 123-2, ...). The file generation apparatus 101 uploads the data generated to the Web server 102.

The client apparatus 103 requests the Scene Description data 121, the MPD file 122, the media data 123, and the like to the Web server 102 and causes the Web server 102 to distribute the data to the client apparatus 103. The client apparatus 103 acquires the data distributed, and then performs rendering to generate an image for display and causes a monitor (display) to display the image.

### <File Generation Apparatus>

FIG. 7 is a block diagram depicting a main configuration example of the file generation apparatus 101. As depicted in FIG. 7, the file generation apparatus 101 includes a control section 151 and a file generation section 152.

The control section 151 executes processing related to control of the file generation section 152. The file generation section 152 executes, under the control of the control section 151, processing related to generation of data such as the Scene Description data 121 (also referred to as Scene Description), the MPD file 122 (also referred to as the MPD), and the media data 123. The file generation section 152 includes a data input section 161, a Scene Description generation section 162, a media data generation section 163, an MPD file generation section 164, a segment file generation section 165, a recording section 166, and an upload section 167.

The data input section 161 receives input of data. The data input section 161 supplies the received data to the Scene Description generation section 162, the media data generation section 163, and the MPD file generation section 164.

The Scene Description generation section 162 executes processing related to generation of the Scene Description data 121. For example, the Scene Description generation section 162 generates the Scene Description data 121 on the basis of the data supplied from the data input section 161 and supplies the Scene Description data 121 generated to the segment file generation section 165.

The media data generation section 163 executes processing related to generation of the media data 123. For example, the media data generation section 163 generates the media data 123 on the basis of the data supplied from the data input section 161 and supplies the media data 123 to the segment file generation section 165.

The MPD file generation section 164 executes processing related to generation of the MPD file 122. For example, the MPD file generation section 164 generates the MPD file 122 on the basis of the data supplied from the data input section 161 and supplies the MPD file 122 to the recording section 166.

The segment file generation section 165 executes processing related to generation of segment files. For example, the segment file generation section 165 acquires the Scene Description data 121 supplied from the Scene Description generation section 162 and makes the Scene Description data 121 into a file on a segment-by-segment basis to generate segment files for the Scene Description data 121 (also referred to as Scene Description segment files). Additionally, the segment file generation section 165 acquires the media data 123 supplied from the media data generation section 163 and makes the media data 123 into a file on a segment-by-segment basis to generate segment files for the media data 123 (also referred to as media data segment files). The segment file generation section 165 supplies the recording section 166 with the Scene Description segment files and media data segment files generated.

The recording section 166 records, in a recording medium included in the recording section 166, the MPD file 122 supplied from the MPD file generation section 164 and the Scene Description segment files and the media data segment files supplied from the segment file generation section 165. Additionally, at a predetermined timing or on the basis of a request of a user or the like, the recording section 166 reads out the files recorded in the recording medium and supplies the files to the upload section 167.

The upload section 167 acquires the MPD file 122, the Scene Description segment files, and the media data segment files from the recording section 166 and uploads (transmits) the files to the Web server 102.

### <Client Apparatus>

FIG. 8 is a block diagram depicting a main configuration example of the client apparatus 103. As depicted in FIG. 8, the client apparatus 103 includes a control section 171 and a reproduction processing section 172. The control section 171 executes processing related to control of the reproduction processing section 172. The reproduction processing section 172 executes processing related to reproduction of 6DoF content under the control of the control section 171. The reproduction processing section 172 includes an MPD file acquisition section 181, an MPD file processing section 182, a Scene Description segment file acquisition section 183, a Scene Description segment file processing section 184, a display control section 185, a measurement section 186, a media data segment file selection section 187, a media data segment file acquisition section 188, a decode processing section 189, a display information generation section 190, and a display section 191.

The MPD file acquisition section 181 executes processing related to acquisition of the MPD file 122. For example, the MPD file acquisition section 181 accesses the Web server 102, requests the MPD file 122 to the Web server 102, and acquires the MPD file 122. The MPD file acquisition section 181 supplies the MPD file 122 acquired to the MPD file processing section 182.

The MPD file processing section 182 executes processing related to the MPD file. For example, the MPD file processing section 182 acquires the MPD file 122 supplied from the MPD file acquisition section 181, parses the MPD file, and supplies the MPD file 122 and the results of parsing of the MPD file 122 to the Scene Description segment file acquisition section 183.

The Scene Description segment file acquisition section 183 executes processing related to acquisition of the Scene Description segment files. For example, the Scene Description segment file acquisition section 183 acquires the information supplied from the MPD file processing section 182 (the MPD file 122 and the results of parsing of the MPD file 122) and accesses the Web server 102 on the basis of the information to acquire the Scene Description segment files. The Scene Description segment file acquisition section 183 supplies the Scene Description segment files acquired to the Scene Description segment file processing section 184.

The Scene Description segment file processing section 184 executes processing related to the Scene Description segment files. For example, the Scene Description segment file processing section 184 acquires the Scene Description segment files supplied from the Scene Description segment file acquisition section 183. Additionally, the Scene Description segment file processing section 184 acquires, from the display control section 185, information indicating the view-point position. The Scene Description segment file processing section 184 determines an access destination of the MPD file on the basis of the information acquired. The Scene Description segment file processing section 184 supplies the determined access destination to the media data segment file selection section 187.

The display control section 185 executes processing related to display control for the 6DoF content. For example, the display control section 185 supplies the Scene Description segment file processing section 184, the media data segment file selection section 187, the display information generation section 190, and the like with the information indicating the view-point position. The measurement section 186 measures the transmission band of a transmission path from the Web server 102 to the client apparatus 103 and supplies the results of the measurement to the media data segment file selection section 187.

The media data segment file selection section 187 executes processing related to selection from the media data segment files. For example, in the MPD file 122, the media data segment file selection section 187 selects the media data segment file to be reproduced, on the basis of the information supplied from the display control section 185 and indicating the view-point position, the information supplied from the measurement section 186 and indicating the transmission band, and the like. The media data segment file selection section 187 supplies information indicating the results of the selection to the media data segment file acquisition section 188.

The media data segment file acquisition section 188 executes processing related to acquisition of the media data segment files. For example, the media data segment file acquisition section 188 acquires information supplied from the media data segment file selection section 187 and indicating the results of the selection of the media data segment file. On the basis of the information, the media data segment file acquisition section 188 accesses the Web server 102, requests, to the Web server 102, the media data segment file selected by the media data segment file selection section 187, and acquires the media data segment file. The media data segment file acquisition section 188 supplies the media data segment file acquired to the decode processing section 189.

The decode processing section 189 acquires and decodes the media data segment file supplied from the media data segment file acquisition section 188. The decode processing section 189 supplies the decoded media data segment file to the display information generation section 190. The display information generation section 190 performs rendering on the basis of the media data segment file supplied from the decode processing section 189, generating an image for display. The display information generation section 190 supplies the image for display generated to the display section 191 and causes the display section 191 to display the image.

### <Flow of File Generation Processing>

Now, an example of a flow of file generation processing executed by the file generation apparatus 101 will be described with reference to a flowchart in FIG. 9. When the file generation processing is started, the MPD file generation section 164 of the file generation apparatus 101 generates an MPD file 122 in step S101.

In step S102, the Scene Description generation section 162 generates Scene Description data 121 including a link to the MPD file generated in step S101.

In step S103, the media data generation section 163 generates media data 123.

In step S104, the segment file generation section 165 uses the Scene Description data 121 generated in step S102 to generate Scene Description segment files. Additionally, the segment file generation section 165 uses the media data 123 generated in step S103 to generate media data segment files.

In step S105, the recording section 166 records the MPD file 122 generated in step S101. Additionally, in step S106, the recording section 166 records the segment files generated in step S104 (Scene Description segment files and media data segment files).

In step S107, the upload section 167 reads out the MPD file 122 recorded in step S105 and uploads the MPD file 122 to the Web server 102.

In step S108, the upload section 167 reads out the segment files recorded in step S106 (Scene Description segment files and media data segment files) and uploads the segment files to the Web server 102.

When the processing in step S108 is complete, the file generation processing ends.

### <Flow of Reproduction Processing>

Now, an example of a flow of reproduction processing executed by the client apparatus 103 will be described with reference to a flowchart in FIG. 10. When reproduction processing is started, the MPD file acquisition section 181 accesses, in step S121, the Web server 102 to acquire the MPD file 122.

In step S122, the MPD file processing section 182 parses the MPD file 122 acquired in step S121 to recognize that the Scene Description data 121 is to be acquired first and references the AdaptationSet in the Scene Description data 121 to acquire access information (URL (Uniform Resource Locator)) regarding the Scene Description data 121.

In step 123, the Scene Description segment file acquisition section 183 acquires, from the URL acquired in step S122, the Scene Description segment file corresponding to the current time.

In step S124, the Scene Description segment file processing section 184 acquires, from the display control section 185, the information indicating the view-point position.

In step S125, the Scene Description segment file processing section 184 parses the Scene Description data 121 acquired in step S123 to determine the access destination in the MPD file 122 on the basis of the view-point position indicated by the information acquired in step S124.

In step S126, the measurement section 186 measures the transmission band of the transmission path between the Web server 102 and the client apparatus 103. The media data segment file selection section 187 acquires the results of the measurement (in other words, the information indicating the transmission band).

In step S127, in the MPD file 122, the media data segment file selection section 187 selects the media data segment file on the basis of the information acquired in step S126 and indicating the transmission band.

In step S128, the media data segment file acquisition section 188 accesses the Web server 102 and acquires the media data segment file selected in step S127.

In step S129, the decode processing section 189 decodes the media data segment file acquired in step S128. Then, the display information generation section 190 uses the decoded media data segment file to perform rendering to generate an image for display.

When the processing in step S129 ends, the reproduction processing ends. By executing the processing of the steps as described above, the client apparatus 103 can improve the robustness of content reproduction.

### <3-2: Embodiment 1-1-1>

### <Configuration of Scene Description and MPD>

In the MPD, the AdaptationSet in the Scene Description data and the AdaptationSet of the bit rate variation in the media data referenced from the AdaptationSet in the Scene Description data may be signaled. In other words, for example, metadata may be generated, the metadata including access information for the AdaptationSet in the MPD (Media Presentation Description) used as a control file, the AdaptationSet corresponding to the Level of Detail of the three-dimensional object and including information related to a bit rate variation of a plurality of bit rates for the Level of Detail.

FIG. 11 depicts an example of the Scene Description data 121 in that case. FIG. 12 depicts an example of the MPD file 122 in that case. In FIG. 11 and FIG. 12, circled numbers indicate a correspondence relation among arrows in the figures. The MPD file 122 (FIG. 12) describes the AdaptationSet for indicating the Scene Description data 121 and the AdaptationSet indicating mesh data and texture data at each Level of Detail for each 3D object. For example, one AdaptationSet describes the bit rate variation for mesh data at a high Level of Detail AH regarding a 3D object A.

### <Enhancement of Signaling in MPD>

As depicted in FIG. 12, the MPD file 122 of the present embodiment indicates AdaptationSets in the Scene Description data 121 and AdaptatonSets in each pieces of the media data 123. In this configuration, the client apparatus 103 first acquires the MPD file 122 and analyzes the MPD file 122. At this time, the AdaptationSets in the Scene Description data 121 need to be processed first. However, existing signaling fails to allow determination of which of the AdapttionSets to be processed first.

Thus, the following three implementation methods will be described. (1) The signaling indicating the AdaptationSet to be processed first is provided, (2) the signaling indicating that the AdaptationSet is not to be processed first is provided, and (3) the signaling in (1) and the signaling in (2) are simultaneously provided.
(1) The signaling indicating the AdaptationSet to be processed first is provided.
   SupplementalProperty is utilized for the signaling indicating the AdaptationSet to be processed first. schemeIdUri is used to set InitialSelection as in the following example. A "value" value is not set.
   Example: <SupplementalProperty schemeIdUri="InitialSelection"/>
(2) The signaling indicating that the AdaptationSet is not to be processed first is provided.
   The AdapttionSet in each pieces of the media data that is not to be processed first is data referenced from the Scene Description data 121. The signaling indicates that the data is referenced from another piece of data and is not to be processed first. For example, as in the following example, EssentialProperty is set in the AdaptationSet in each piece of the media data, and the schemeIdUri in the EssentialProperty indicates ExternalReferencedData, and the "value" value indicates AdaptationSet@id indicating which of the data references the AdaptationSet.
   Example: <EssentialProperty schemeIdUri="ExternalReferencedData" value="AdaptationSet@id"/>
   The specification in the EssentialProperty prevents independent reproduction unless the existing client knows this Property. Additionally, a client knowing this Property recognizes that the data is externally referenced and thus avoids independent reproduction. In other words, the MPD file is backward compatible.
(3) The signaling in (1) and the signaling in (2) are simultaneously provided.
   The processing is achieved by simultaneously providing the signaling in (1) and the signaling in (2).

### <Modified Example>

(1) and (2) may be modified such that an attribute in the AdaptationSet is used for the signaling as in the following example.

Example: <AdaptationSet InitialSelection="TRUE"/>
Example: <AdaptationSet ExternalReferencedData="TRUE"/>

Additionally, in (2), the AdaptationSet may be changed to a different name ExternalReferencedAdaptationSet to indicate that the manner in which the AdaptationSet is utilized has been changed.

Further, the AdaptationSet to be processed first and the AdaptationSet not to be processed first may be simultaneously signaled in Preselection.
Preselection signals schemeIdURI="urn:mpeg:dash:preselection:2016" and value="tag, media component list" in the EssentialProperty or SupplementalProperty. A media component list allows signaling of plural media components via space delimiters, and the first media component corresponds to a main media component. The main media component is signaled using, for example, AdaptationSet@id. Preselection is assumed to be processed according to 1decode. However, Presentation is enhanced herein and enhanced to handle data subjected to simultaneous rendering.

In this case, the AdaptationSet@id in the Scene Description is indicated as the main media component, and the media data AdaptatioSet@ids referenced from the Scene Description are arranged as the second and subsequent media components in the media component list. In other words, the main media component is the AdaptationSet to be processed first, and the second and subsequent media components are each the AdaptationSet not to be processed first. In this technique, the EssentialProperty is used for signaling. This technique uses the schemeIdUri in the existing preselection, but another schemeIdUri may be used to achieve the signaling.

Alternatively, the AdaptationSet to be processed first and the AdaptationSet not to be processed first may be signaled in Role. For example, Role element is signaled in the AdaptationSet, and the value of the Role element is set. "urn:mpeg:dash:role:2018" is signaled in the SchemeIdUri of the Role. For the AdaptationSet to be processed first, value="initial" is specified as in the following example.
Example: <Role schemeIdUri="urn:mpeg:dash:role:2018" value="initial"/>

For the AdaptationSet not to be processed first, value=" ExternalReferencedData" is signaled as in the following example.
Example: <Role schemeIdUri="urn:mpeg:dash:role:2018" value="ExternalReferencedData"/>

### <Enhancement of Signaling of Scene Description>

As depicted in FIG. 11, the signaling is enhanced to allow access to the AdaptationSet in the MPD file 122 from the Bitwrapper node 15 and the MovieTexture node 16 corresponding to the node indicating the mesh and the node indicating texture, respectively, in the Scene Description 121.

The BitWrapper node 15 and the MovieTexture node 16 use URLs to signal access information for external media data. A structure example of the BitWrapper node 15 and the MovieTexture node 16 in MPEG-4 Scene Description (ISO/IEC 14496-11) is as depicted in FIG. 2. A field used to access external media data is a url field for both nodes. In the present embodiment, the syntax of the BitWrapper node 15 and the MovieTexture node 16 is not enhanced, and the notation of the url field in each node is enhanced.

In the present embodiment, the AdaptationSet@id is signaled using a URL parameter for the URL indicated by the url field in addition to the URL to the MPD file 122, leading to indication of media data at different Levels of Detail. Specifically, for example, a variable "AS" of the URL parameter indicating the AdaptationSet is used, and the value of the variable is used to signal AdaptationSet@id. For example, for indication of the AdaptationSet with AdaptationSet@id=1, a URL with the URL parameter is specified in the URL of the node as in the following example.
Example of the URL: http://www.6dofserver.com/6dof.mpd?AS=1

In the existing technique, the url is utilized to indicate one media data. However, the present technique allows a set of plural pieces of media data to be indicated. This allows the client to select the bit rate from the set of plural pieces of media data indicated.

FIG. 13 depicts an example of description of the URLs of the BitWrapper node 15 and the MovieTexture node 16 in the Scene Description data 121 in the example in FIG. 11, and FIG. 14 depicts an example of description of the MPD file 122 in the example in FIG. 12. In this case, the signaling of the MPD file 122 is enhanced using (2) described above. Such a description allows indication of a link from the URLs of the BitWrapper node 15 and the MovieTexture node 16 in the Scene Description data 121 to the AdaptationSet in the MPD file 122.

### <Modified Example>

Note that the enhancement may include, instead of the specification with the URL parameter, the addition, to the BitWrapper node 15 and the MovieTexture node 16 in the Scene Description data 121, of a field indicating AdaptationSet@id. In this case, the url field describes the access information for the MPD file 122.

Additionally, the example of enhancement of the BitWrapper node 15 and the MovieTexture node 16 has been illustrated, but a similar field may be provided in any other node as enhancement. In addition, instead of the url field, a listUrl field that indicates the URL indicating a list of the access information for the media data may be added to describe the URL of the MPD file 122. In this case, the URL with the URL parameter may be stored in the listUrl field, or the URL to the MPD file 122 may exclusively be indicated in the listUrl field, with the AdaptatonSet@id indicated in another field.

### <Flow of File Generation Processing>

Now, an example of a flow of file generation processing in this case will be described with reference to a flowchart in FIG. 16.

When the file generation processing is started, the MPD file generation section 164 of the file generation apparatus 101 generates, in step S141, an MPD file (MPD file as depicted in the example in FIG. 12 or FIG. 14) including the AdaptationSet in the Scene Description and the AdaptationSet at each Level of Detail including the Representation for each bit variation.

In step S142, the Scene Description generation section 162 generates Scene Description data (MPD file as depicted in the example in FIG. 11 or FIG. 13) including a link to the AdaptationSet in the MPD for each bit variation for the Level of Detail.

Processing in step S143 to step S148 is executed similarly to the processing in step S103 to step S108 (FIG. 9). When the processing in step S148 ends, the file generation processing ends.

The file generation processing executed as described above allows the file generation apparatus 101 to enable adaptive bit rate control (enables bit rate adaptation) at the time of distribution. Consequently, the file generation apparatus 101 can improve the robustness of content reproduction.

### <Flow of Reproduction Processing>

Now, an example of a flow of reproduction processing in this case will be described with reference to a flowchart in FIG. 17. When the reproduction processing is started, processing in step S161 to step S164 is executed similarly to processing in step S121 to step S124 (FIG. 10).

In step S165, the Scene Description segment file processing section 184 executes Scene Description processing to determine the access destination (AdaptationSet) in the MPD.

In step S166, the measurement section 186 measures the transmission band of the transmission path between the Web server 102 and the client apparatus 103. The media data segment file selection section 187 acquires the results of the measurement (in other words, information indicating the transmission band).

In step S167, the media data segment file selection section 187 selects the Representation in each of the AdaptationSets in the MPD file 122, the AdaptationSets corresponding to the desired Level of Detail for the respective 3D objects. At that time, the media data segment file selection section 187 selects the Representation such that the total of the bit rates for all the segment files to be acquired is smaller than the transmission band acquired in step S166.

In step S168, the media data segment file acquisition section 188 accesses the Web server 102 to acquire the media data segment files (mesh files and texture files for all the 3D objects) specified by the Representation selected in step S167.

In step S169, the decode processing section 189 decodes the media data segment files acquired in step S168. Then, the display information generation section 190 uses the decoded media data segment files to execute rendering processing to generate an image for display. When the processing in step S169 ends, the reproduction processing ends.

### <Flow of Secene Description Processing>

Now, an example of a flow of Scene Description processing executed in step S165 in FIG. 17 will be described with reference to a flowchart in FIG. 18.

When the Scene Description processing is started, the Scene Description segment file processing section 184 acquires, in step S181, the Group node 11 at the Root from the Scene Description data 121 and acquires all child nodes (Transform nodes 12).

In step S182, the Scene Description segment file processing section 184 determines whether or not the Group node 11 at the Root includes any unprocessed child node (Transform node 12). In a case where the Scene Description segment file processing section 184 determines that the Group node 11 includes an unprocessed child node, the processing proceeds to step S183.

In step S183, the Scene Description segment file processing section 184 selects the unprocessed Transform node 12 as a processing target and processes the Transform node 12 as the processing target. This processing determines the position and the size for rendering.

In step S184, the Scene Description segment file processing section 184 acquires, from the Scene Description data 121, the LOD nodes 31 corresponding to child nodes of the Transform node 12.

In step S185, the Scene Description segment file processing section 184 determines a distance between a central coordinate parameter for each of the LOD nodes 31 and the view-point position.

In step S186, the Scene Description segment file processing section 184 compares a distance parameter for each of the LOD nodes 31 with the determined distance to determine the child node to be processed.

In step S187, the Scene Description segment file processing section 184 acquires the child node determined and acquires the AdaptationSet in the MPD on the basis of the access information (for example, URLs) for the mesh files and the texture files.

When the processing in step S187 ends, the processing returns to step S182, and the subsequent processing is repeated. In other words, processing in step S182 to step S187 is executed for each Transform node 12.

In step S182, in a case where none of the Transform nodes are determined to be unprocessed, the processing proceeds to step S188. In step S188, the Scene Description segment file processing section 184 determines all the AdaptationSets to be utilized. When the processing in step S188 ends, the Scene Description processing ends, and the processing returns to FIG. 17.

### <Flow of Rendering Processing>

Now, an example of a flow of rendering processing executed in step S169 in FIG. 17 will be described with reference to a flowchart in FIG. 19.

When the rendering processing is started, the display information generation section 190 configures, in step S201, a scene using the data of the mesh files and the texture files for each 3D object acquired utilizing the information in the Scene Description data 121.

In step S202, the display information generation section 190 renders each 3D object in the scene on the basis of the view-point position, the line-of-sight direction, and the angle of view to generate an image for display. When step S202 ends, the rendering processing ends, and the processing returns to FIG. 17.

The processing of the steps executed as described above allows the client apparatus 103 to enable adaptive bit rate control (enables bit rate adaptation) at the time of distribution. Consequently, the file generation apparatus 101 can improve the robustness of content reproduction.

### <3-3: Embodiment 1-1-2>

### <Configuration of Scene Description and MPD)

The AdaptationSet in the MPD is configured as desired and the configuration is not limited to that in the example in Embodiment 1-1-1. For example, the mesh data regarding the same 3D object may be signaled in one AdaptationSet in the MPD. Similarly, the texture data regarding the same 3D object may be signaled in one AdaptationSet in the MPD. In other words, the bit rate variation for all Levels of Detail for one three-dimensional object may be included in one AdaptationSet for meshes and in one AdaptationSet for textures. Note that, in this case as well, MPD signaling is enhanced as in the case of Embodiment 1-1-1 described above. In other words, metadata that includes access information for the representation in the AdaptationSet corresponding to the three-dimensional object in the MPD as the control file and including information regarding a bitrate bit rate variation of a plurality of bit rates for the Level of Detail, may be generated.

FIG. 20 depicts an example of the Scene Description data 121 in this case. FIG. 21 depicts an example of the MPD file 122 in this case. In FIG. 20 and FIG. 21, circled numbers indicate a correspondence relation among arrows in the figures.

In this case, the MPD file 122 (FIG. 21) describes the AdaptationSet for the Scene Description data 121 and the AdaptationSets for the mesh data and for the texture data for each 3D object. For example, as depicted in FIG. 20 and FIG. 21, one AdaptationSet describes the bit rate variation for mesh data at the high Level of Detail AH, a medium Level of Detail AM, and a low Level of Detail AL for the 3D object A.

### <3-4: Embodiment 1-1-2-1>

The configuration of the MPD file 122 and the Scene Description data 121 as described above may be implemented by enhancing the Scene Description data 121. For example, metadata may be generated including access information including access information for the desired MPD, information specifying the desired AdaptationSet in the MPD, and information specifying the desired Representation in the AdaptationSet.

### <Signaling of Scene Description>

In the configuration described with reference to FIG. 20 and FIG. 21, the bit rate variations in the BitWrapper node 15 corresponding to a node indicating meshes in the Scene Description data 121 and the MovieTexture node 16 corresponding to a node indicating textures in the Scene Description data 121, the bit rate variations being included in the Levels of Detail, constitute several Representations in each AdaptationSet in the MPD file 122.

Thus, in the BitWrapper node 15 and the MovieTexture node 16 in the Scene Description data 121, the access information (for example, URLs) may be used to signal the Representations in the MPD file 122, which corresponds to the bit rate variation.

More specifically, Representation@id is indicated by "RS" corresponding to a variable of the URL parameter indicating the Representation and the value of the RS. In the BitWrapper node 15 and the MovieTexture node 16, the Representation@id of the number of bit rate variations can be described. For example, in a case where Representation@id=1, Representation@id=2, and Representation@id=3 indicate the bit rate variation for meshes included in a certain Level of Detail, a URL with the URL parameter as in the following example is described in the BitWrapper node 15 and the MovieTexture node 16 as access information.
Example of the URL: http://www.6dofserver.com/6dof.mpd?RS=1&RS=2&RS=3

FIG. 22 depicts an example of description of the URLs of the BitWrapper node 15 and the MovieTexture node 16 in the Scene Description data 121 in FIG. 20. Additionally, FIG. 23 depicts an example of description of the MPD file 122 in FIG. 21. In FIG. 22 and FIG. 23, circled numbers indicate a correspondence relation among arrows in the figures.

As depicted in these figures, in the BitWrapper node 15 and the MovieTexture node 16 in the Scene Description data 121, AHm-n or AHt-m (n and m are any natural numbers) is described as the value of the variable RS to allow the nodes to be linked to the Representation with Representationid with that value, the Representation being included in the AdaptationSet corresponding to the 3D object in the MPD file 122. In other words, the URL fields for the BitWrapper node 15 and the MovieTexture node 16 in the Scene Description data 121 can indicate links to Representations identical in number to the bit rate variations of the MPD file 122.

### <Modified Example>

Note that the URL parameter may be used to simultaneously signal the @id of the AdaptationSet. The manner of signaling is similar to the manner described above in Embodiment 1-1-1.

Alternatively, instead of the specification with the URL parameter, enhancement of a field indicating Representation@id may be performed on the BitWrapper node 15 and the MovieTexture node 16 in the Scene Description data 121, for example, as depicted in FIG. 24. In this case, the url field describes the access information for the MPD file 122.

Further, enhancement may be provided to add a field indicating the AdaptationSet@id. Additionally, the example of enhancement of the BitWrapper node 15 and the MovieTexture node 16 has been described. However, in other nodes, the field may be enhanced as is the case with the Bitwrapper node 15 and the MovieTexture node 16.

Additionally, instead of the url field, the listUrL field that indicates urls indicating a list of access information for the media data may be added, and the URL of the MPD may be described in the field. In this case, the URL with the URL parameter may be stored in the field, or the URL to the MPD file 122 may exclusively be indicated in the field, with the Representation@id stored in another field.

### <3-5: Embodiment 1-1-2-2>

Additionally, the MPD file 122 may also be enhanced. For example, in the MPD file 122, Representations with the same Levels of Detail may be grouped, and the group may be indicated by access information described in the BitWrapper node 15 and the MovieTexture node 16 in the Scene Description data 121. In other words, MPD that includes information that groups the same bit rate variations may be generated. Accordingly, compared to Embodiment 1-1-2-1, the URL parameter for the URL of the media data described in the Scene Description data 121 can be made constant regardless of the number of bit rates. Additionally, in a case where the bit rate variation is increased after creation of the Scene Description data 121, the signaling of the Scene Description data 121 can be prevented from being affected.

### <Signaling of MPD>

The Representations in the MPD file 122 are grouped, and signaling that indicates the bit rate variation utilized for the Level of Detail in the Scene Description data 121 is provided.

Accordingly, for the bit rate variation utilized for the Level of Detail, SupplementalProperty with the same "value" value is signaled in Representation as in the following example.
Example: <SupplementalProperty schemeIdUri="RepresentationGroup" value="1"/>

In the SupplementalProperty, the schemeIdUri is used to indicate RepresentationGroup, and the "value" value is used to indicate a group number. This indicates that the Representations included in the same AdaptationSet and having the same "value" value belong to the same group.

### <Modified Example>

Note that, in the above-described example, what Group the RepresentationGroup is unknown, and thus that the "value" value may be separated by a comma like "group number, group type," simultaneously signaling the type of the group. An example is illustrated below. In this example, "LOD" indicates a group of the Level of Detail.
Example: <SupplementalProperty schemeIdUri="RepresentationGroup" value="1, LOD"/>

### <Signaling of Scene Description>

Further, in the Scene Description data 121, the access information (URL) in the BitWrapper node 15 and the MovieTexture node 16 is used to indicate the group of Representations described above. However, in which AdaptationSet the group of Representations is included is unknown, and thus the AdaptationSet is simultaneously indicated.

A parameter indicating the AdaptationSet and a parameter indicating the RepresentationGroup are signaled in the URL parameter in the MPD file 122. The parameter indicating the AdaptationSet is the same as the corresponding parameter described above in Embodiment 1-1-1. For the parameter indicating the RepresentationGroup, the RepresentationGroup corresponding to a variable is provided, and for the value of the RepresentationGroup, the value of the RepresentationGroup in the MPD file 122 is signaled. An example of the URL is illustrated below.
Example of the URL: http://www.6dofserver.com/6dof.mpd?AS=1&ReplesentationGro up=1

FIG. 25 depicts an example of description of the URLs of the BitWrapper node 15 and the MovieTexture node 16 in the Scene Description data 121 in FIG. 20. Additionally, FIG. 26 depicts an example of description of the MPD file 122 in FIG. 21. In FIG. 25 and FIG. 26, circled numbers indicate a correspondence relation among arrows in the figures.

Such a description allows, from the URLs of the BitWrapper node 15 and the MovieTexture node 16 in the Scene Description data 121, the indication of access information for the AdaptationSet in the MPD file 122 and the RepresentationGroup indicating a set of Representations of the bit rate variation for the Level of Detail in the AdaptationSet.

### <Modified Example>

In the above description, the signaling is performed in each Representation but may be signaled in the AdaptationSet. In that case, for example, the schemeIdUri may be used to indicate the ReplesentationGroup. For grouping information, the RepresentationGroup is newly added to each group as an element of the SupplementalProperty. The RepresentationGroup includes ids (having the same meaning as that of the value of the RepresentationGroup) and a list of the ids of the Representations included in the group. An example is illustrated below.

<SupplementalProperty schemeIdUri="ReplesentationGroup">
<RepresentationGroup id=1 member="representaiton@id1 representation@id2..."/>
<RepresentationGroup id=2 member=" epresentaiton@id4 representation@id5..."/>
</SupplementalProperty>

FIG. 27 depicts an example of description of the MPD file 122 in this case. In the example in FIG. 27, the description as illustrated in the above-described example is provided in the MPD file 122, and RepresentationGroup id=1 is linked to the group of the bit rate variation for the high Level of Detail.

Note that, instead of the specification with the URL parameter for the url in the Scene Description data 121, enhancement of fields indicating the AdaptationSet@id and RepresentationGroup may be performed on the BitWrapper node 15 and the MovieTexture node 16, for example, as depicted in FIG. 28. In this case, the url field describes the access information for the MPD file 122.

Additionally, the example of enhancement of the BitWrapper node 15 and the MovieTexture node 16 has been illustrated, but a similar field may be provided in any other node as enhancement. Further, instead of the url field, the listUrl field that indicates the url indicating a list of the access information for the media data may be added to describe the URL of the MPD file 122.

### <3-6: Embodiment 1-1-3>

### <Scene Description Is Used as Start Point>

In the description of Embodiment 1-1-1 and Embodiment 1-1-2, the MPD file 122 is first acquired, the Scene Description data 121 is subsequently acquired, the appropriate configuration corresponding to the view-point is selected, and the bit rate is subsequently selected from the AdaptationSet in the MPD file 122. Specifically, the MPD file 122 is first acquired, and thus the MPD file 122 is a start point for the processing.

The start point for the processing may be the Scene Description data 121. In that case, the subsequent processing is similar to the corresponding processing described in Embodiment 1-1-1 or Embodiment 1-1-2. In other words, the Scene Description data 121 is first acquired, the appropriate configuration corresponding to the view-point is selected, the MPD file 122 is acquired, and the bit rate is selected from the AdaptationSet. In that case, for example, the following portion (that is, the AdaptationSet in the Scene Description data 121) of the MPD file 122 in FIG. 14 is unnecessary. In other words, MPD that includes no access information for metadata may be generated.

<AdaptationSet id="0">//Scene Description
<Representation id="sd"bandwidth="500000"><BaseURL>SD.mp4</BaseURL></Repr esentation>
</AdaptationSet>

This also leads to unnecessity of signaling of the "value" value of <EssentialProperty schemeIdUri="ExternalReferencedData"value="AdaptationSet@ id"/>, which is signaled in the AdaptationSet in each pieces of media data.

### <3-7: Embodiment 1-2>

### <Bit Rate Adaptation Is Implemented with Configuration Using Only Scene Description>

In the description of Embodiment 1-1, the bit rate adaptation is implemented using the Scene Description data 121 and the MPD file 122. However, the bit rate adaptation may be implemented by enhancing the Scene Description data 121. In other words, in this case, the MPD file 122 for DASH is not utilized. In other words, the metadata is spatial display control information relating to content and based on the view-point position, and spatial display control information that is based on the view-point position and that includes, as a node, information enabling the bit rate to be selected at the time of distribution of the content, may be generated.

### <Enhancement of Scene Description>

In a case of the existing Scene Description data 121, only one BitWrapper node 15 and one MovieTexture node 16 can be signaled at each Level of Detail for the 3D object as depicted in FIG. 5. In the existing Scene Description data 121 prevents a plurality of BitWrapper nodes 15 and MovieTexture nodes 16 from being signaled at each Level of Detail. In other words, no bit variation can be provided.

Thus, the Scene Description data 121 is enhanced such that selection can be made from a plurality of bit rates for the mesh data and for the texture data.

### <Distribution System>

As depicted in FIG. 29, a configuration of the distribution system 100 in this case is similar to the configuration in the example in FIG. 6. However, the file generation apparatus 101 generates Scene Description data 121 and media data 123, but not an MPD file 122. Consequently, the Web server 102 also does not supply the MPD file 122 to the client apparatus 103. The client apparatus 103 acquires the Scene Description data 121 from the Web server 102, and on the basis of the Scene Description data 121, acquires the media data from the Web server 102 and reproduces the media data.

### <File Generation Apparatus>

FIG. 30 depicts a main configuration example of the file generation apparatus 101 in this case. As depicted in FIG. 30, the file generation apparatus 101 in this case includes the control section 151 and the file generation section 152 as is the case with FIG. 7.

However, the file generation section 152 includes the data input section 161, the Scene Description generation section 162, the media data generation section 163, the segment file generation section 165, the recording section 166, and the upload section 167. In other words, compared to the configuration in FIG. 7, this configuration lacks the MPD file generation section 164.

The recording section 166 records, in the recording medium of the recording section 166, the Scene Description segment files and the media data segment files supplied from the segment file generation section 165. Additionally, at a predetermined timing or on the basis of a request from the user or the like, the recording section 166 reads out the segment files recorded in the recording medium and supplies the segment files to the upload section 167.

The upload section 167 acquires the Scene Description segment files and the media data segment files from the recording section 166 and uploads (transmits) the segment files to the Web server 102.

### <Client Apparatus>

FIG. 31 is a main configuration example of the client apparatus 103 in this case. As illustrated in FIG. 31, the client apparatus 103 in this case includes the control section 171 and the reproduction processing section 172 as is the case with FIG. 8.

However, the reproduction processing section 172 includes the Scene Description segment file acquisition section 183, the Scene Description segment file processing section 184, the display control section 185, the measurement section 186, the media data segment file acquisition section 188, the decode processing section 189, the display information generation section 190, and the display section 191. In other words, compared to the configuration in FIG. 8, this configuration lacks the MPD file acquisition section 181, the MPD file processing section 182, and the media data segment file selection section 187.

The Scene Description segment file acquisition section 183 accesses the Web server 102 to acquire the Scene Description segment files corresponding to the 6DoF content and the view-point position and supplies the Scene Description segment files to the Scene Description segment file processing section 184. In other words, the Scene Description segment file acquisition section 183 acquires the Scene Description segment files without the MPD file 122.

The Scene Description segment file processing section 184 selects the media data segment file to be reproduced on the basis of information such as the Scene Description segment files, the view-point position, and the transmission band. The Scene Description segment file processing section 184 supplies the media data segment file acquisition section 188 with the access destination of the media data segment file determined.

The media data segment file acquisition section 188 accesses the Web server 102, requests and acquires the media data segment file selected by the Scene Description segment file processing section 184, and supplies the media data segment file to the decode processing section 189.

### <Flow of File Generation Processing>

Now, an example of a flow of file generation processing will be described with reference to a flowchart in FIG. 32. When the file generation processing is started, the Scene Description generation section 162 of the file generation apparatus 101 generates, in step S221, Scene Description including a link to the media data for each bit variation for the Level of Detail.

Processing in step S222 to step S225 is executed similarly to the processing in step S103, step S104, step S106, and step S108. When the processing in step S108 is complete, the file generation processing ends.

### <Flow of Reproduction Processing>

Now, an example of a flow of reproduction processing in this case will be described with reference to a flowchart in FIG. 33. When the reproduction processing is started, the Scene Description segment file acquisition section 183 acquires, in step S241, Scene Description of the current time including a link to the media data for each bit variation for the Level of Detail.

In step S242, the Scene Description segment file processing section 184 acquires, from the display control section 185, information indicating the view-point position. In step S243, on the basis of the view-point position indicated by the information, the Scene Description segment file processing section 184 selects the Level of Detail.

In step S244, the measurement section 186 measures the transmission band of the transmission path between the Web server 102 and the client apparatus 103. The Scene Description segment file processing section 184 acquires results of the measurement (in other words, information indicating the transmission band).

In step S245, in the Scene Description segment file, the Scene Description segment file processing section 184 selects the node on the basis of the information acquired in step S244 and indicating the transmission band.

In step S246, the media data segment file acquisition section 188 accesses the Web server 102 and acquires a mesh file or a texture file for the node selected in step S245.

In step S247, the decode processing section 189 decodes the media data segment file acquired in step S246. Then, the display information generation section 190 performs rendering using the decoded media data segment file, generating an image for display.

When the processing in step S247 ends, the reproduction processing ends. The processing of the steps described above allows the client apparatus 103 to improve the robustness of content reproduction.

### <3-8: Embodiment 1-2-1>

### <New Node Is Defined>

In enhancement of the Scene Description data 121, with the existing nodes directly utilized without change, a new node may be added for bit rate adaptation. In other words, spatial display control information that is based on the view-point position and that includes a dedicated node expressing a bit rate variation of a plurality of bit rates for a three-dimensional object as a plurality of child nodes, may be generated.

### <Signaling of Scene Description>

For example, a ClientSelection node may be newly defined that indicates that the client can select from a plurality of nodes. The ClientSelection node is a node that can signal plural nodes and bit rates for data indicated by the respective nodes. FIG. 34 illustrates an example of the ClientSelection node.

As illustrated in FIG. 34, a ClientSelection node 301 includes a SelectionNode field indicating plural child nodes and a bit rate field indicating bit rates for the respective child nodes. In other words, the SelectionNode field describes a list of child nodes, and the bit rate field describes a list of bit rates of the respective nodes. The orders in the lists in both fields correspond to each other, and bit rate information of the n-th child node in the SelectionNode field is represented by the n-th piece of bit rate information in the bit rate field.

FIG. 35 illustrates an example of a scene graph of the Scene Description data 121 that allows selection from plural bit rates utilizing the ClientSelection node 301 as described above. FIG. 35 illustrates only a graph of the bit rate variation only for a high Level of Detail for a 3D object A. The graph applies to the other Levels of Detail and the other 3D objects, which are thus omitted.

In the mesh data for the high Level of Detail for the 3D object A in FIG. 35, a child node of the Shape node 13-1 is a ClientSelection node 301-1. The ClientSelection node 301-1 includes, as child nodes, BitWrapper nodes 15 for a bit rate variation including 17 Mbps, 15 Mbps, and 13 Mbps (BitWrapper node 15-1-1, BitWrapper node 15-1-2, and BitWrapper node 15-1-3). For the bit rate variation for the texture data, a child node of the Appearance node is ClientSelection node 301-2. The ClientSelection node 301-2 includes, as child nodes, MovieTexture nodes 16 for the bit rate variation including 17 Mbps, 15 Mbps, and 13 Mbps (MovieTexture node 16-1-1, MovieTexture node 16-1-2, and MovieTexture node 16-1-3).

As described above, the use of the ClientSelection node 301 allows a bit rate variation of a plurality of bit rates in the mesh data or the texture data to be expressed as child nodes of the ClientSelection node 301. Consequently, each of the child nodes can be used to describe access information for the media data for the corresponding bit rate variation. Thus, the use of the Scene Description data using the ClientSelection node 301 as described above enables adaptive bit rate control in distribution (bit rate adaptation in the distribution). In other words, for example, interruption of reproduction caused by a reduced transmission bandwidth can be suppressed, allowing the robustness of content reproduction to be improved.

### <Flow of File Generation Processing>

Now, an example of a flow of file generation processing in this case will be described with reference to a flowchart in FIG. 36.

When the file generation processing is started, the Scene Description generation section 162 of the file generation apparatus 101 generates, in step S261, Scene Description data 121 including the ClientSelection node 301 as described above.

Processing in step S262 to step S265 is executed similarly to the processing in step S222 to step S225. When the processing in step S265 ends, the file generation processing ends.

### <Flow of Reproduction Processing>

Now, an example of a flow of reproduction processing in this case will be described with reference to a flowchart in FIG. 37. When the reproduction processing is started, the Scene Description segment file acquisition section 183 acquires, in step S281, the Scene Description data 121 of the current time including the ClientSelection node 301. Processing in step S282 is executed similarly to the processing in step S242 (FIG. 33) .

In step S283, the Scene Description segment file processing section 184 executes Scene Description processing on the basis of information acquired in step S282, to determine a bit rate variation for the mesh data and the texture data.

Processing in step S284 is executed similarly to the processing in step S244 (FIG. 33).

In step S285, the Scene Description segment file processing section 184 selects, in the Scene Description segment file, a bit rate variation (child nodes of the ClientSelection node) for the mesh file and the texture file at the Level of Detail utilized. At that time, the Scene Description segment file processing section 184 selects the child nodes such that the total of the bit rates in all the segment files acquired is smaller than the transmission band acquired in step S284.

Processing in step S286 is executed similarly to the processing in step S246 (FIG. 33).

In step S287, the decode processing section 189 decodes the media data segment file acquired in step S286 (mesh file or texture file). Then, the display information generation section 190 executes rendering processing using the media data segment file decoded, generating an image for display. The rendering processing is executed as described with reference to a flowchart in FIG. 19. When the processing in step S287 ends, the reproduction processing ends.

The processing of the steps executed as described above allows the client apparatus 103 to improve the robustness of content reproduction.

### <Flow of Secene Description Processing>

Now, an example of a flow of Scene Description processing executed in step S283 in FIG. 37 will be described with reference to a flowchart in FIG. 38.

When the Scene Description processing is started, processing in step S301 to step S306 is executed similarly to the processing in step S181 to step S186.

In step S307, the Scene Description segment file processing section 184 acquires the child nodes determined and lists, from the ClientSelection node 301, a variation of nodes for the mesh file and the texture file.

When the processing in step S307 ends, the processing returns to step S302, and the subsequent processing is repeated. In other words, the processing in step S302 to step S307 is executed for each Transform node 12.

In step S302, in a case where none of the Transform nodes are determined to be unprocessed, the processing proceeds to step S308.

In step S308, the Scene Description segment file processing section 184 determines a variation of mesh files and texture files for all the Levels of Detail to be utilized. When the processing in step S308 ends, the Scene Description processing ends, and the processing returns to FIG. 37.

The processing of the steps executed as described above allows the client apparatus 103 to enable adaptive bit rate control (enables bit rate adaptation) at the time of distribution. Consequently, the file generation apparatus 101 can improve the robustness of content reproduction.

### <3-9: Embodiment 1-2-2>

### <Existing Node Is Enhanced>

Instead of defining a new node as described above, an existing node may be enhanced. For example, spatial display control information that is based on the view-point position and that includes a node in which a field expressing, as a plurality child nodes, a plurality of bit rates of a bit rate variation for a three-dimensional object is added, may be generated.

### <Signaling of Scene Description>

For example, enhancement may be made such that the existing BitWrapper node 15 and MovieTexture node 16 list plural pieces of access information to allow the bit rate to be specified for each piece of access information. FIG. 39 illustrates an example of the BitWrapper node 15 and the MovieTexture node 16 in that case. In this case, the BitWrapper node 15 includes an urllist field obtained by enhancing the url field and is adapted to specify plural mesh data files. The bit rate for the mesh data file indicated in each urllist is indicated in the bit rate field. The bit rate for a mesh data file with the n-th url indicated in the urllist field is indicated by the n-th piece of bit rate information in the bit rate field.

Similarly, the MovieTexture node 16 includes a urllist field obtained by enhancing the url field and is adapted to allow plural texture data files to be specified. The bit rate for a texture data file indicated in each urllist field is indicated in the bit rate field.

A scene graph of the above-described enhanced node is similar to the scene graph in FIG. 5. However, in this case, media data with different bit rates can be accessed from the BitWrapper node 15 and the MovieTexture node 16. Note that an example of enhancement of the BitWrapper node 15 and the MovieTexture node 16 has been described but that a similar field may be provided in any other node as enhancement.

### <4. Second Embodiment (Embodiment 2)>

### <Signaling for Uniformly Reducing Bit Rates>

Further, signaling that indicates that quality can be maintained by uniformly reducing the bit rates for all meshes and textures may be added. In other words, metadata that further includes information indicating that quality can be maintained by uniformly controlling the bit rates for all three-dimensional objects may be generated.

In a case where the bandwidth is insufficient, segment files with reduced bit rates for each of the meshes and textures need to be acquired. However, at this time, by signaling information indicating that quality can be maintained by uniformly reducing the bit rates for all meshes and textures, a reproduction side (client apparatus 103) can easily recognize how the bit rates of the 3D objects can be appropriately reduced. Consequently, on the basis of the information, the bit rates for all meshes and textures can uniformly be reduced in such a manner as to maintain the relativity of quality between 3D objects that is determined at the view-point position and that is to be maintained during display of 6DoF content. Consequently, possible degradation of quality of the 6DoF content can be suppressed.

### <Configuration Method for Bit Rate Adaptation for Meshes and Textures>

In the present embodiment, the bit rate adaptation is configured to satisfy the following two conditions.

(1) The number of bit rates in the bit rate variation is equal among the meshes and textures.
(2) A difference in quality between the bit rates in the bit rate variation is relatively the same as a difference in quality between the bit rates in other 3D objects.

For example, for the meshes, an encode parameter (number of quantization bits) is assumed to be used to create a bit rate variation (for example, in a case where a bit rate variation including three bit rates is created, three patterns of the number of quantization bits including 10, 8, and 6 are used to create a bit rate variation for any mesh). For the textures as well, an encode parameter (quantization parameter) is assumed to be used to create a bit rate variation.

### <4-1: Embodiment 2-1>

### <Addition of Signaling Indicating That Relative Quality Is Maintained in Order of Bit Rate>

As signaling indicating that quality can be maintained by uniformly reducing the bit rates for textures, signaling that indicates that the relative quality is maintained in order of the bit rate may be added.

### <4-2: Embodiment 2-1-1>

### <Configuration Using Scene Description and MPD Is Used for Implementation>

For example, signaling that indicates, using a configuration using an MPD file for DASH and Scene Description data, that the relative quality is maintained in order of the bit rate may be added.

In other words, in a system similar to the system in Embodiment 1-1, signaling that indicates that the relative quality is maintained in order of the bit rate may be added. In other words, the configuration of the distribution system 100 in this case is similar to the configuration in the example in FIG. 6, the configuration of the file generation apparatus 101 in this case is similar to the configuration in the example in FIG. 7, and the configuration of the client apparatus 103 in this case is similar to the configuration in the example in FIG. 8.

### <Flow of File Generation Processing>

An example of a flow of file generation processing in this case will be described with reference to a flowchart in FIG. 40. When the file generation processing is started, the MPD file generation section 164 of the file generation apparatus 101 generates, in step S321, an MPD file 122 including information indicating that acquisition in order of the bit rate maintains the relative quality between 3D objects.

Processing from step S322 to step S328 is executed similarly to the processing in step S102 to step S108 (FIG.9). The processing in step S328 ends, the file generation processing ends.

### <Flow of Reproduction Processing>

Now, an example of a flow of reproduction processing in this case will be described with reference to a flowchart in FIG. 41. When the reproduction processing is started, in step S341, the MPD file acquisition section 181 of the client apparatus 103 acquires the MPD file 122 including information indicating that acquisition in order of the bit rate maintains the relative quality between the 3D objects.

Processing in step S342 to step S346 is executed similarly to the processing in step S122 to step S126 (FIG. 10).

In step S347, the media data segment file selection section 187 selects, in the MPD file 122, selects the media data segment files on the basis of the transmission band and the information indicating that acquisition in order of the bit rate maintains the relative quality between the 3D objects.

Processing in step S348 and step S349 is executed similarly to the processing in step S128 and step S129 (FIG. 10). When the processing in step S349 ends, the reproduction processing ends.

The processing of the steps executed as described above enables reproduction based on the information indicating that acquisition in order of the bit rate maintains the relative quality between 3D objects. Thus, the bit rates for the meshes and textures for each 3D object can be uniformly reduced to suppress degradation of quality of 6DoF content. Consequently, the robustness of content reproduction can be improved.

### <4-3: Embodiment 2-1-1-1>

### <Enhancement of Only MPD>

In that case, for example, signaling indicating that, by enhancing only the MPD file, the relative quality is maintained in order of the bit rate may be added.

### <Signaling of MPD>

For example, quality correlation information that indicates, in AdaptationSets of all meshes and textures in the MPD file 122, that acquisition in order of the bit rate (Representation@bandwidth order) prevents a change in relative quality between the 3D objects, may be added.

Specifically, an id list of AdaptationSets is signaled in Period using SupplementalProperty and space delimiters, the AdaptationSets preventing, when acquired in order of the bit rate, a change in relative quality between the 3D objects. An example is illustrated below.
Example: <SupplementalProperty schemeIdUri="RelativeQualityIsEnsuredByBitrateOrder" value="as1@id as2@id ...">

A plurality of the SupplementalProperties may be signaled. For example, the SupplementalProperty may be applied to Audio rather than to 6DoF content.

FIG. 42 illustrates an example of the MPD file 122 in the present embodiment. This example includes three 3D objects, and each of the 3D objects includes three Levels of Detail of high, medium, and low. Further, a bit rate variation including three bit rates is provided for the meshes and for the textures at each Level of Detail.

For example, in a case where, in FIG. 42, as an appropriate Level of Detail, the high Level of Detail is selected for 3D object A (AdaptationSet@id=1 and 2), the medium Level of Detail is selected for 3D object B (AdaptationSet@id=9 and 10), and the medium Level of Detail is selected for 3D object C (AdaptationSet@id=15 and 16), respectively, selection of a combination of bit rates (combination of Representations) from the following three patterns enables display with the relative quality maintained.

Pattern 1:
   Representation@id=AHm-1, Representation@id=AHt-1, Representation@id=BMm-1, Representation@id=BMt-1, Representation@id=CMm-1, Representation@id=CMt-1
Pattern 2:
   Representation@id=AHm-2, Representation@id=AHt-2, Representation@id=BMm-2, Representation@id=BMt-2, Representation@id=CMm-2, Representation@id=CMt-2
Pattern 3:
   Representation@id=AHm-3, Representation@id=AHt-3, Representation@id=BMm-3, Representation@id=BMt-3, Representation@id=CMm-3, Representation@id=CMt-3

### <Modified Example>

In the example written in FIG. 42, signaling is provided in Period. However, signaling may be provided in AdaptationSet. However, in that case, no "value" value is specified, and the data indicates that AdaptationSets with this Property are AdaptationSets preventing, when acquired in order of the bit rate, a change in relative quality between the 3D objects. An example is illustrated below. Additionally, FIG. 43 illustrates an example of the MPD file 122.
Example: <SupplementalProperty schemeIdUri="RelativeQualityIsEnsuredByBitrateOrder">

Additionally, in consideration of similar utilization in Audio as well as in Video, a group number is specified as the "value" value to effect a uniform reduction for the same group number. For example, as in the following example, GroupId may be signaled at the head of the value.
Example: <SupplementalProperty schemeIdUri="RelativeQualityIsEnsuredByBitrateOrder" value="G roupId, as1@id as2@id ...">

Additionally, as in the following example, instead of the SupplementalProperty, @RelativeQualityIsEnsuredByBitrateOrder may be signaled as the Period or the Attribute of the AdaptationSet, and True/False or the group number may be signaled as the value.

Example: <Period RelativeQualityIsEnsuredByBitrateOrder="as1@id as2@id ...">
Example: <ApdationSet RelativeQualityIsEnsuredByBitrateOrder="True">

In all of Embodiments 1-1-1, Embodiments 1-1-2, and Embodiments 1-1-3 described above, the method described in the present embodiment can be applied. In a case where the present technique is applied to Embodiment 1-1-2, it is sufficient if the order of the bit rate is used for processing for the URL parameter or the data indicated in the RepresentationGroup in the MPD.

### <Flow of Reproduction Processing>

The file generation processing in this case is executed similarly to the file generation processing in the flowchart in FIG. 40. An example of a flow of the reproduction processing in this case will be described with reference to a flowchart in FIG. 44. When the reproduction processing is started, the MPD file acquisition section 181 acquires, in step S361, the MPD file 122 including information indicating that acquisition in order of the bit rate maintains the relative quality between the 3D objects.

Processing in step S362 to step S366 is executed similarly to processing in step S162 to step S166 (FIG. 17) .

In step S367, the media data segment file selection section 187 selects the Representation in each of the AdaptationSets in the MPD file 122 corresponding to the desired Level of Detail for each 3D object. At that time, the media data segment file selection section 187 selects the Representation with the same order of the bit rate such that the total of the bit rates for all segment files acquired is smaller than the transmission band acquired in step S366.

Processing in step S368 and step S369 is executed similarly to processing in step S168 and step S169 (FIG. 17). When the processing in step S369 ends, the reproduction processing ends.

The processing of the steps executed as described above enables reproduction based on information indicating that acquisition in order of the bit rate maintains the relative quality between the 3D objects. Thus, the bit rates for the meshes and the textures for each 3D object can be uniformly reduced to suppress degradation of quality of 6DoF content. Consequently, the robustness of content reproduction can be improved.

### <4-4: Embodiment 2-1-1-2>

### <Enhancement of Scene Description>

Instead of signaling in the MPD file 122 as in the method described in Embodiment 2-1-1-1, signaling may be provided in the Scene Description data 121.

### <Signaling of Scene Description>

The description of the url field in the BitWrapper node 15 and the MovieTexture node 16 in the Scene Description data 121 may be enhanced. For example, the URL parameter indicating that acquisition in order of the bit rate prevents a change in relative quality between the 3D objects is added to the URL. More specifically, for example, RelativeQualityIsEnsuredByBitrateOrder is added as a variable of the URL parameter. Provision of the URL parameter is assumed to indicate acquisition in order of the bit rate (Representation@bandwidth order) allows the relative quality between the 3D objects to be maintained. An example is illustrated below.
Example of the URL: http://www.6dofserver.com/6dof.mpd?AS=1&RelativeQualityIs EnsuredByBitrateOrder

FIG. 45 illustrates an example of the Scene Description data 121 in this example. As illustrated in FIG. 45, RelativeQualityIsEnsuredByBitrateOrder is added to the URL in the url field in the BitWrapper node 15 and the MovieTexture node 16 as a variable of the URL parameter.

Accordingly, in the Scene Description data 121, the information indicating that acquisition in order of the bit rate maintains the relative quality between the 3D objects can be signaled. Thus, the bit rates for the meshes and the textures for each 3D object can be uniformly reduced to suppress degradation of quality of 6DoF content. Consequently, the robustness of content reproduction can be improved.

The application to Embodiment 1-1-1 has been described. However, the present technique can similarly be applied to Embodiment 1-1-2 and Embodiment 1-1-3. In a case where the present technique is applied to Embodiment 1-1-2, it is sufficient if the order of the bit rate is used for processing for the URL parameter or the data indicated by the RepresentationGroup in the MPD.

### <Modified Example>

In the present enhancement as well, to indicate grouping acquired in order of the bit rate, the grouping number may be indicated as the value of the URL parameter as in the modified example of Embodiment 2-1-1.

### <4-5: Embodiment 2-1-2>

### <Configuration Using Only Scene Description Is Used for Implementation>

Note that, in a case where only the Scene Description is used as in Embodiment 1-2, signaling for a uniform reduction in bit rate may be added. In other words, in this case, the MPD file 122 for DASH is not utilized.

In other words, in a system similar to the system in Embodiment 1-2, signaling that indicates that the relative quality is maintained in order of the bit rate may be added. In other words, the configuration of the distribution system 100 in this case is similar to the configuration in the example in FIG. 29. The configuration of the file generation apparatus 101 is similar to the configuration in the example in FIG. 30. The configuration of the client apparatus 103 is similar to the configuration in the example in FIG. 31.

### <Flow of File Generation Processing>

An example of a flow of file generation processing in this case will be described with reference to a flowchart in FIG. 46. When the file generation processing is started, the Scene Description generation section 162 of the file generation apparatus 101 generates, in step S381, Scene Description data 121 including information indicating that acquisition in order of the bit rate maintains the relative quality between 3D objects.

Processing in step S382 to step S385 is executed similarly to the processing in step S222 to step S225 (FIG. 32). When the processing in step S385 ends, the file generation processing ends.

### <Flow of Reproduction Processing>

Now, an example of a flow of reproduction processing in this case will be described with reference to a flowchart in FIG. 47. When the reproduction processing is started, the Scene Description segment file acquisition section 183 of the client apparatus 103 acquires, in step S401, a Scene Description segment file including information of the current time indicating that acquisition in order of the bit rate maintains the relative quality between the 3D objects.

Processing in step S402 to step S404 is executed similarly to the processing in step S242 to step S244 (FIG. 33).

In step S405, the Scene Description segment file processing section 184 selects the node in the Scene Description segment file on the basis of the transmission band and the information indicating that acquisition in order of the bit rate maintains the relative quality between the 3D objects.

Processing in step S406 and step S407 is executed similarly to the processing in step S246 and step S247 (FIG. 33). when the processing in step S407 ends, the reproduction processing ends.

The processing of the steps executed as described above enables reproduction based on the information indicating that acquisition in order of the bit rate maintains the relative quality between the 3D objects. Thus, the bit rates for the meshes and the textures for each 3D object can be uniformly reduced to suppress degradation of quality of 6DoF content. Consequently, the robustness of content reproduction can be improved.

### <4-6: Embodiment 2-1-2-1>

### <New Node Is Defined>

For enhancement of the Scene Description data 121, with the existing nodes directly used without change, a new node may be added for bit rate adaptation.

### <Signaling of Scene Description>

For example, quality correlation information that indicates that, for all the meshes and textures, acquisition in order of the bit rate prevents a change in relative quality between the 3D objects may be added. More Specifically, the ClientSelection node 301 may additionally include a RelativeQualityIsEnsuredByBitrateOrderFlag field indicating that acquisition in order of the bit rate prevents a change in relative quality between the 3D objects. FIG. 48 illustrates an enhancement example of the ClientSelection node.

For the meshes and the textures including RelativeQualityIsEnsuredByBitrateOrderFlag of TRUE, when the bit rate is changed, the bit rate can be reduced with the relative quality between the 3D objects unchanged by making a simultaneous reduction in order of the bit rate indicated in the bit rate field.

### <Modified Example>

Note that, in the present enhancement, to indicate grouping for acquisition in order of the bit rate, RelativeQualityIsEnsuredByBitrateOrder may be used instead of the RelativeQualityIsEnsuredByBitrateOrderFlag, to provide signaling in an SFint type to indicate a grouping number.

### <4-7: Embodiment 2-1-2-2>

### <Existing Node Is Enhanced>

Instead of definition of a new node as described above, enhancement of existing nodes may be performed.

### <Signaling of Scene Description>

For example, the RelativeQualityIsEnsuredByBitrateOrderFlag field described above may be provided, as enhancement, in the BitWrapper node 15 and the MovieTexture node 16 enhanced in Embodiment 1-2-2. FIG. 49 illustrates an example of the BitWrapper node 15 and the MovieTexture node 16 in that case.

### <Modified Example>

In the present enhancement as well, to indicate grouping for acquisition in order of the bit rate, the RelativeQualityIsEnsuredByBitrateOrder may be used instead of the RelativeQualityIsEnsuredByBitrateOrderFlag, to provide signaling in the SFint type to indicate the grouping number.

Additionally, the enhancement example of the BitWrapper node 15 and the MovieTexture node 16 has been illustrated, but similar fields may be provided in any other nodes as enhancement.

### <5. Third Embodiment (Embodiment 3)>

### <Signaling Indicating Combination of Bit Rates to Be Acquired>

Further, variations of textures and meshes corresponding to the respective bit rates, quality correlation information that indicates which bit rates need to be simultaneously acquired in order to allow the relative quality relation to be maintained may be added. In other words, metadata that further includes information indicating the relative quality between the three-dimensional objects may be generated.

The number of bit rates in the bit rate variation and the quality of the bit rate variation may vary with 3D object. For example, the mesh data allows a plurality of bit rates to be created for a 3D object with a large number of vertexes (for example, a human being). However, for a 3D object with a small number of vertexes (for example, a box), even if a encode parameter is changed, the bit rate is not changed. Therefore, the same number of bit rates cannot be prepared.

In a case as described above, there has been a possibility that a uniform reduction in bit rate as in the second embodiment significantly disturbs the relative quality relation between the 3D objects determined at the view-point position. For some 3D objects, the lack of a bit rate variation prevents this situation from being dealt with. In that case, the absence of a file of bit rates that can be acquired may prevent the content from being reproduced.

As described above, the addition of the quality correlation information allows the bit rate to be controlled even in such a case to maintain the relative quality relation between the 3D objects. Consequently, the robustness of content reproduction can be improved.

### <5-1: Embodiment 3-1>

### <Signaling Indicating That Selection Utilizing Quality Ranking Also Allows Relative Quality to Be Maintained>

Quality ranking is signaled to the bit rate variations for the mesh and the texture at each Level of Detail for the three-dimensional object. Further, signaling that indicates that acquisition based on the above-described values allows the relative quality to be maintained may be provided. For example, as information indicating the relative quality between the three-dimensional objects, metadata that includes QualityRanking indicating the quality of the bit rates of the bit rate variation of the three-dimensional object in form of ranking, may be generated. At this time, encoding is performed in such a manner as to prevent the value of the QualityRanking from changing the relative quality. For example, encoding may be performed on the basis of the configuration method for bit rate adaptation in Embodiment 2 to determine the QualityRanking in order of the encode parameter, and data corresponding to bit rates with few changes may subsequently be omitted.

### <5-2: Embodiment 3-1-1>

### <Configuration Using Scene Description and MPD Is Used for Implementation>

For example, a configuration using an MPD file for DASH and Scene Description data may be used to signal the QualityRanking (quality correlation information). The QualityRanking uses Representation@QualityRanking in accordance with the existing DASH standard (ISO/IEC 23009-1).

In other words, in a system similar to the system in Embodiment 1-1, the QualityRanking may be signaled. In other words, the configuration of the distribution system 100 in this case is similar to the corresponding configuration in the example in FIG. 6, the configuration of the file generation apparatus 101 is similar to the corresponding configuration in the example in FIG. 7, and the configuration of the client apparatus 103 is similar to the corresponding configuration in the example in FIG. 8.

### <Flow of File Generation Processing>

An example of a flow of file generation processing in this case will be described with reference to a flowchart in FIG. 50. When the file generation processing is started, the MPD file generation section 164 of the file generation apparatus 101 generates, in step S421, an MPD file 122 including the QualityRanking.

Processing in step S422 to step S428 is executed similarly to the processing in step S102 to step S108 (FIG. 9). When the processing in step S328 ends, the file generation processing ends.

### <Flow of Reproduction Processing>

Now, an example of a flow of reproduction processing in this case will be described with reference to a flowchart in FIG. 51. When the reproduction processing is started, the MPD file acquisition section 181 of the client apparatus 103 acquires, in step S441, the MPD file 122 including the QualityRanking.

Processing in step S442 to step S446 is executed similarly to the processing in step S122 to step S126 (FIG. 10).

In step S447, the media data segment file selection section 187 selects the media data segment file in the MPD file 122 on the basis of the transmission band and the QualityRanking.

Processing in step S448 and step S449 is executed similarly to the processing in step S128 and step S129 (FIG. 10). When the processing in step S349 ends, the reproduction processing ends.

The processing of the steps executed as described above enables reproduction based on the QualityRanking, thus allowing the bit rates for the meshes and the textures for each 3D object to be reduced to suppress degradation of quality of 6DoF content. Consequently, the robustness of content reproduction can be improved.

### <5-3: Embodiment 3-1-1-1>

### <Enhancement of Only MPD>

In that case, for example, information that indicates that, by enhancing only the MPD file, the relative quality between the 3D objects is kept unchanged by acquisition in the QualityRanking order (Representation@QualityRanking) signaled in the Representation in the AdaptationSet for all of the meshes and the textures, may be added.

More specifically, an id list of AdaptationSets for which acquisition in the QualityRanking order prevents a change in relative quality between the 3D objects is signaled in the Period using the SupplementalProperty and space delimiters. An example of the signaling is illustrated below.
Example: <SupplementalProperty schemeIdUri="RelativeQualityIsEnsuredByQualityRanking" value="as1@id as2@id ...">

In a case where no Representations have the same QualityRanking, Representations that have close QualityRanking values may be selected. A plurality of the SupplementalProperties can be signaled. This applies to the case where the present embodiment is similarly applied to the Audio rather than to the 6DoF content, for example.

FIG. 52 illustrates an example of the MPD file 122 in this case. This example includes three 3D objects each including three Levels of Detail of high, medium, and low. Further, the meshes involve different bit rate variations, and the textures involve different bit rate variations.

In FIG. 52, in a case where, as an appropriate Level of Detail, the high Level of Detail (AdaptationSet@id=1 and 2) is selected for an 3D object A, the medium Level of Detail (AdaptationSet@id=9 and 10) is selected for an 3D object B, and the medium Level of Detail (AdaptationSet@id=15 and 16) is selected for an 3D object C, by selecting the combination of bit rates from the three patterns below with reference to the QualityRanking, display with the relative quality maintained can be provided.

Pattern 1:
   Representation@id=AHm-1, Representation@id=AHt-1, Representation@id=BMm-1, Representation@id=BMt-1, Representation@id=CMm-1, Representation@id=CMt-1
Pattern 2:
   Representation@id=AHm-2, Representation@id=AHt-2, Representation@id=BMm-3, Representation@id=BMt-3, Representation@id=CMm-1, Representation@id=CMt-2
Pattern 3:
   Representation@id=AHm-3, Representation@id=AHt-3, Representation@id=BMm-3, Representation@id=BMt-3, Representation@id=CMm-1, Representation@id=CMt-3

The present technique can be applied to any of Embodiment 1-1-1, Embodiment 1-1-2, and Embodiment 1-1-3. However, in Embodiment 1-1-2, the RepresentationGroup in which the QualityRanking does not start with 1 may be selected. However, the present technique can be applied to this case on the basis of the implementation of the client by using a difference in QualityRanking instead of the value of the QualityRanking.

### <Modified Exampled>

In the above-described example, the signaling is provided in the Period. However, the signaling may be provided in the AdaptationSet. However, in that case, the "value" value is not specified, and the signaling is provided such that the acquisition in the QualityRanking order using the AdaptationSet with this Property prevents a change in relative quality between the 3D objects. An example of the signaling is illustrated below. Additionally, FIG. 53 illustrates an example of the MPD file 122 in this example.
Example: <SupplementalProperty schemeIdUri="RelativeQualityIsEnsuredByQualityRanking">

Additionally, in consideration of similar utilization for the Audio as well as for the Video, a group number may be specified as a "value" value, and a uniform reduction may be made for the same group number. For example, the GroupId is signaled at the head of the value. An example of the signaling is illustrated below.
Example: <SupplementalProperty schemeIdUri=" RelativeQualityIsEnsuredByQualityRanking" value="G roupId, as1@id as2@id ...">

### <Other Modified Examples>

RelativeQualityIsEnsuredByQualityRanking may be added to the Attribute in the Period. Alternatively, RelativeQualityIsEnsuredByQualityRanking may be added to the Attribute in the AdaptationSet. An example of the addition is illustrated below.

Example: <Period RelativeQualityIsEnsuredByQualitRanking="1 2 3...17 18">
Example: <AdaptatonSet RelativeQualityIsEnsuredByQualitRanking="TRUE">

### <Flow of Reproduction Processing>

File generation processing in this case is executed similarly to processing in a flowchart in FIG. 50. A flow of reproduction processing in this case will be described with reference to a flowchart in FIG. 54. When the reproduction processing is started, the MPD file acquisition section 181 acquires, in step S461, the MPD file 122 including the QualityRanking.

Processing in step S462 to step S466 is executed similarly to the processing in step S162 to step S166 (FIG. 17).

In step S467, the media data segment file selection section 187 selects the Representations in each of the AdaptationSets in the MPD file 122 corresponding to the desired Level of Detail for each 3D object. At that time, the media data segment file selection section 187 selects, for the AdaptationSets indicated by the SupplementalProperties, the Representations including QualityRankings with the same value or close values, and selects combinations such that the total of the bit rates for all the segment files acquired is smaller than the transmission band.

Processing in step S468 and step S469 is executed similarly to the processing in step S168 and step S169 (FIG. 17). When the processing in step S469 ends, the reproduction processing ends.

The processing of the steps executed as described above enables reproduction based on the information indicating that acquisition in order of the bit rate maintains the relative quality between the 3D objects. Thus, the bit rates for the meshes and the textures for each 3D object can be uniformly reduced to suppress degradation of quality of 6DoF content. Consequently, the robustness of content reproduction can be improved.

In other words, when selecting the bit rate from the AdaptationSets for the mesh data and texture data regarding each 3D object, the client apparatus 103 sequentially selects combinations, first, a combination with a QualityRanking value of 1, then a combination with a QualityRanking value of 2, and so on. Thus, the client apparatus 103 can select data while preventing a change in relative quality in spite of bit rate adaptation. In a case where the value of the QualityRanking is not present, the Representations including the QualityRankings with close values may be utilized.

In the present embodiment, the QualityRanking may include only a certain number of ranks. In that case, the Quality can no longer be lowered, and data corresponding to the lowest quality needs to be continuously selected. However, the QualityRankings may be significantly different, preventing the relative quality from being maintained. To avoid that, a technique as described below may be allowed to be performed.

(1) The client apparatus 103 lowers the Quality at the time of display such that the quality is consistent with the other Qualities. For example, at the time of display, the client apparatus 103 applies a Gaussian blur filter only to the 3D object portion before display.
(2) In a case where the present technology is applied to Embodiment 1-1-1 and Embodiment 1-1-2, the client apparatus 103 causes the Web server 102 to create a bit rate with a low QualityRanking, and acquires the bit rate.

The client apparatus 103 requests, to the Web server 102, the name of the MPD file, the id of the AdaptationSet, and the QualityRanking to be created. According to the request, the Web server 102 creates a segment file with the specified QualityRanking for mesh data or texture data in the specified AdaptationSet. Then, the Web server 102 updates the MPD file 122 utilizing the mechanism of MPD update and transmits the MPD file 122 updated to the client apparatus 103. On the basis of the MPD file 122 newly acquired, the client apparatus 103 utilizes the quality ranking again to select a file to be acquired. In this case, a segment file for the QualityRanking that is not present in the server but that can be created may be signaled in the MPD in advance.

### <5-4: Embodiment 3-1-1-2>

### <Enhancement of Scene Description>

Instead of the signaling in the MPD file 122 as described in Embodiment 3-1-1-1, signaling in the Scene Description data 121 may be provided.

### <Signaling of Scene Description>

In that case, as is the case with Embodiment 2-1-1-2, the description of the url field in the BitWrapper node 15 and the MovieTexture node 16 in the Scene Description data 121 may be enhanced.

For example, as in an example illustrated below, the URL parameter of the URL indicating the mesh and the texture in the Scene Description data 121 may be used to indicate that the relative quality between the 3D objects is kept unchanged by acquisition in the QualityRanking order.
Example of the URL: http://www.6dofserver.com/6DoF.mpd? AS=1&RelativeQualityIsEnsuredByByQualityRanking

The description of the Scene Description data 121 in this case corresponds to the portion RelativeQualityIsEnsuredByBitrateOrder in the example in FIG. 45 that is replaced with RelativeQualityIsEnsuredByByQualityRanking.

The application to Embodiment 1-1-1 has been described. However, the present technique can also be applied to Embodiment 1-1-2 and Embodiment 1-1-3. Additionally, processing for the case where no bit rate variation corresponding to lower QualityRanking is present may be enabled.

### <Modified Example>

Additionally, grouping information may be added as in the modified example of Embodiment 3-1-1-1. For example, grouping information may be added to the value of the RelativeQualityIsEnsuredByQualityRanking of the URL parameter. An example of the addition is illustrated below.
Example of the URL: http://www.6dofserver.com/6DoF.mpd? AS=1&RelativeQualityIsEnsuredByQualityRanking=1

Instead of enhancing the URL parameter, the modified example may add a new field, for example, a field as illustrated below, to the BitWrapper node 15 and the MovieTexture node 16.
Example: field SFBool RelativeQualityIsEnsuredByQualityRankingFlag

### <5-5: Embodiment 3-1-2>

### <Configuration Using Only Scene Description Is Used for Implementation>

Note that signaling that indicates that, in a case where only the Scene Description is used as in Embodiment 1-2, the relative quality can be maintained by selection utilizing the quality ranking, may also be added. In other words, in this case, the MPD file 122 for DASH is not utilized. Note that, in the present embodiment, two enhancements which are (1) enhancement for signaling the quality ranking and (2) signaling indicating that acquisition in the QualityRanking order allows the relative quality to be maintained, are provided.

Additionally, in a system similar to the system in Embodiment 1-2, signaling that indicates that the relative quality can also be maintained by selection utilizing the quality ranking may be added. In other words, the configuration of the distribution system 100 in this case is similar to the corresponding configuration in the example in FIG. 29, the configuration of the file generation apparatus 101 is similar to the corresponding configuration in the example in FIG. 30, and the configuration of the client apparatus 103 is similar to the corresponding configuration in the example in FIG. 31.

### <Flow of File Generation Processing>

An example of a flow of file generation processing in this case will be described with reference to a flowchart in FIG. 55. When the file generation processing is started, the Scene Description generation section 162 of the file generation apparatus 101 generates, in step S481, Scene Description data 121 including the QualityRanking.

Processing in step S482 to step S485 is executed similarly to the processing in step S222 to step S225 (FIG. 32). When the processing in step S485 ends, the file generation processing ends.

### <Flow of Reproduction Processing>

A flow of reproduction processing in this case will be described with reference to a flowchart in FIG. 56. When the reproduction processing is started, the Scene Description segment file acquisition section 183 of the client apparatus 103 acquires, in step S501, a Scene Description segment file including the QualityRanking of the current time.

Processing in step S502 to step S504 is executed similarly to the processing in step S242 to step S244 (FIG. 33).

In step S505, the Scene Description segment file processing section 184 selects the node in the Scene Description segment file on the basis of the transmission band and the QualityRanking.

Processing in step S506 and step S507 is executed similarly to the processing in step S246 and step S247 (FIG. 33). When the processing in step S507 ends, the reproduction processing ends.

The processing of the steps executed as described above enables reproduction based on the QualityRanking, thus allowing the bit rates for the meshes and the textures for each 3D object to be reduced to suppress degradation of quality of 6DoF content. Consequently, the robustness of content reproduction can be improved.

### <5-6: Embodiment 3-1-2-1>

### <New Node Is Defined>

For enhancement of the Scene Description data 121, with the existing nodes directly utilized without change, a new node may be added for bit rate adaptation. For example, the ClientSelection node 301 described in Embodiment 1-2-1 may be enhanced.

FIG. 57 illustrates an example of enhancement of the ClientSelection node 301. For example, in the ClientSelection node 301, the ranking of quality of the child node indicated by the SelectionNode field is described in the QualityRanking field. QualityRanking[n] indicates the ranking of quality of SelectionNode[n].

Additionally, the mesh and the texture including RelativeQualityIsEnsuredByQualityRankingFlag of TRUE indicate that the bit rate can be changed with the relative quality between the 3D objects maintained by selecting the mesh and the texture with the same QualityRanking value.

### <Modified Example>

Additionally, grouping information may be signaled as in the modified example of Embodiment 3-1-1-1. In that case, the RelativeQualityIsEnsuredByQualityRankingFlag may be replaced as in an example illustrated below in which the resultant field includes grouping information.
field SFint32 RelativeQualityIsEnsuredByQualityRanking

### <5-7: Embodiment 3-1-2-2>

### <Existing Nodes Are Enhanced>

Instead of the definition of a new node as described above, enhancement of existing nodes may be performed.

### <Signaling of Scene Description>

For example, the QualityRanking field described above and the RelativeQualityIsEnsuredByQualityRankingFlag field may be provided, as enhancement, in the BitWrapper node 15 and the MovieTexture node 16 enhanced in Embodiment 1-2-2. FIG. 58 illustrates an example of the BitWrapper node 15 and the MovieTexture node 16 in that case.

### <Modified Example>

The grouping information may be allowed to be dealt with as in the modified example of Embodiment 3-1-2-1. Additionally, the enhancement example of the BitWrapper node 15 and the MovieTexture node 16 has been illustrated, but similar fields may be provided in any other nodes as enhancement.

### <5-8: Embodiment 3-2>

### <Quality Itself Is Signaled>

The Quality (for example, PSNR) of all the bit rates in the bit rate variation is signaled. In this case, the client apparatus 103 selects data that causes the same degree of changes in Quality. In other words, metadata that includes, as information indicating the relative quality between three-dimensional objects, the Quality value indicating, as values, the quality of each of the bit rates in the bit rate variation for the three-dimensional objects, may be generated.

### <5-9: Embodiment 3-2-1>

### <Configuration Using Scene Description and MPD Is Used for Implementation>

For example, the Quality of the bit rate variation may be signaled by a configuration using the MPD file for DASH and the Scene Description data.

### <Signaling of MPD>

For example, the Quality itself may be signaled in the Representation. For example, the type and the value of the Quality may be signaled in the Representation using the SupplementalProperty. An example of the signaling is illustrated below.
<SupplementalProperty schemeIdUri="QualityValue" value="type,value">

In this example, the type of the Quality is signaled by type, and the value of the Quality is signaled by value. For some types of Quality, the Quality value may change with time or with a position or a direction where the 3D object is viewed. In that case, it is sufficient if, in the present technique, a representative Quality value calculated on the basis of a particular time, view-point position, and line-of-sight direction is used. Additionally, it is sufficient if the type is indicated as in a table in FIG. 59.

By using the indicated type and "value" value to select the Representation causing the same degree of changes in Quality when the bit rates are reduced, the client apparatus 103 can select the bit rates with the relative quality maintained.

FIG. 60 illustrates an example of the MPD file 122 in this case. This example includes three 3D objects each including three Levels of Detail of high, medium, and low. Further, the meshes involve different bit rate variations, and the textures involve different bit rate variations.

It is assumed that, in the MPD file 122 illustrated in FIG. 60, as an appropriate Level of Detail, the high Level of Detail (AdaptationSet@id=1 and 2) is selected for the 3D object A, the medium Level of Detail (AdaptationSet@id=9 and 10) is selected for the 3D object B, and the medium Level of Detail (AdaptationSet@id=15 and 16) is selected for the 3D object C. For the combination of bit rates, with reference to the Value of the Quality, bit rates with the same numerical difference or close numerical differences from a bit rate with the highest Quality are selected. Then, the following three patterns correspond to combinations enabling display with the relative quality maintained.

Pattern 1:
   Representation@id=AHm-1, Representation@id=AHt-1, Representation@id=BMm-1, Representation@id=BMt-1, Representation@id=CMm-1, Representation@id=CMt-1
Pattern 2:
   Representation@id=AHm-2, Representation@id=AHt-2, Representation@id=BMm-3, Representation@id=BMt-3, Representation@id=CMm-1, Representation@id=CMt-2
Pattern 3:
   Representation@id=AHm-3, Representation@id=AHt-3, Representation@id=BMm-3, Representation@id=BMt-3, Representation@id=CMm-1, Representation@id=CMt-3

The technique of the present embodiment can be applied to any of Embodiment 1-1-1, Embodiment 1-1-2, and Embodiment 1-1-3.

In the technique of the present embodiment, the number of Quality values may be limited to a certain value. In that case, the Quality can no longer be lowered, and data corresponding to the lowest quality needs to be continuously selected. However, this disturbs the correlation of the Quality. To avoid that, a technique as described below may be allowed to be performed.

(1) The client lowers the Quality at the time of display such that the quality is consistent with the other Qualities. For example, at the time of display, the client applies a Gaussian blur filter only to the 3D object portion before display.
(2) In Embodiment 1-1-1 or Embodiment 1-1-2, the client apparatus 103 causes the Web server 102 to create a bit rate with low Quality and acquires the bit rate. The client apparatus 103 requests, to the Web server 102, the name of the MPD file, the id of the AdaptationSet, and the type and the value of the Quality to be created. According to the request, the Web server 102 creates a segment file corresponding to the type and the value of the specified Quality for mesh data or texture data in the specified AdaptationSet and arranges the segment file. Then, the Web server 102 updates the MPD file 122 utilizing the mechanism of MPD update and transmits the MPD file 122 updated to the client apparatus 103. On the basis of the MPD file newly acquired, the client apparatus 103 utilizes the Quality again to select a file to be acquired. In this case, a segment file for the type and the value of the Quality that is not present in the server but that can be created may be signaled in the MPD in advance.

### <Modified Example>

QualityValue may be added to the Attribute of the Representation. An example of the addition is illustrated below.
Example: <RepresentationAdaptatonSet QualityValue="1,41">

### <5-10: Embodiment 3-2-2>

### <Configuration Using Only Scene Description Is Used for Implementation>

Note that, in a case where only the Scene Description is used as in Embodiment 1-2, signaling of the Quality itself may be added. In other words, in this case, the MPD file 122 for DASH is not utilized.

### <5-11: Embodiment 3-2-2-1>

### <New Node Is Defined>

For enhancement of the Scene Description data 121, with the existing nodes directly utilized without change, a new node may be added for bit rate adaptation.

The present embodiment is implemented by enhancing the ClientSelection node 301 in Embodiment 1-2-1. FIG. 61 illustrates a configuration example of the ClientSelection node 301 in this case. The QualityValue field indicates the Quality itself of the child node indicated by the SelectionNode in the ClientSelection node 301. The QualityValue[n] indicates the Quality of the SelectionNode[n]. Further, the type of the Quality is indicated by the QualityType field. The same QualityType is used for all QualityValues. For the value of the QualityType field, values in a table 401 in FIG. 59 are utilized.

### <5-12: Embodiment 3-2-2-2>

### <Existing Nodes Are Enhanced>

Instead of defining a new node as described above, the present embodiment may enhance existing nodes. The present embodiment is a modified example of Embodiment 3-2-2-1. The QaulityValue field and the QualityType field are provided in the BitWrapper node 15 and the MovieTexture node 16 enhanced in Embodiment 1-2-2, as enhancement for implementation. FIG. 62 illustrates an example of the BitWrapper node 15 and the MovieTexture node 16 in that case.

Note that the enhancement example of the BitWrapper node 15 and the MovieTexture node 16 has been illustrated but that a similar fields may be provided in any other nodes as enhancement.

### <5-13: Embodiment 3-3>

### <Combination of Media Data to Be Simultaneously Reproduced Is Signaled>

Additionally, a combination of media data to be simultaneously reproduced may be signaled. In other words, metadata that includes, as information indicating the relative quality between three-dimensional objects, information indicating bit rate variations for three-dimensional objects that can be simultaneously reproduced, may be generated.

### <5-14: Embodiment 3-3-1>

### <Configuration Using Scene Description and MPD Is Used for Implementation>

For example, a configuration using the MPD file for DASH and the Scene Description data may be used to signal a combination of media data to be simultaneously reproduced.

### <Signaling of MPD>

For example, the grouping information indicating a combination allowing the relative quality to be maintained may be signaled.

When selecting the Representation from the AdaptationSet, the client apparatus 103 selects and reproduces the same Group. One Representation may belong to plural Groups. More specifically, a group number is indicated in each Representation using the SupplementalProperty, and the signaling indicates that when, on the basis of the group number, the same group number is selected, the relative quality between the 3D objects remains unchanged. The "value" value indicates the group number. Plural groups can be indicated using space delimiters. An example of the signaling is illustrated below.
Example: <SupplementalProperty schemeIdUri="KeepRelativeQualityConsiderationGroup" value="1...">

FIG. 63 is a diagram illustrating a description example of the MPD file 122 in that case. It is assumed that, in FIG. 63, as an appropriate Level of Detail, the high Level of Detail (AdaptationSet@id=1 and 2) is selected for the 3D object A, the medium Level of Detail (AdaptationSet@id=9 and 10) is selected for the 3D object B, and the medium Level of Detail (AdaptationSet@id=15 and 16) is selected for the 3D object C. The combination of bit rates allows the relative quality to be maintained by selecting Representations including KeepRelativeQualityConsiderationGroups with the same value. In this example, the following three patterns correspond to combinations enabling display with the relative quality maintained.

Pattern 1:
   Representation@id=AHm-1, Representation@id=AHt-1, Representation@id=BMm-1, Representation@id=BMt-1, Representation@id=CMm-1, Representation@id=CMt-1
Pattern 2:
   Representation@id=AHm-2, Representation@id=AHt-2, Representation@id=BMm-3, Representation@id=BMt-3, Representation@id=CMm-1, Representation@id=CMt-2
Pattern 3:
   Representation@id=AHm-3, Representation@id=AHt-3, Representation@id=BMm-3, Representation@id=BMt-3, Representation@id=CMm-1, Representation@id=CMt-3

In the present embodiment, the Quality is prevented from being set equal to or lower than the Quality of the Group with the largest numerical value. The present embodiment may allow, at that time, the Web server 102 to be caused to create Group corresponding to even lower Quality and allow the Group to be acquired. The client apparatus 103 requests, to the Web server 102, the name of the MPD file and a combination with even lower KeepReativeQualityGroup. According to the request, the Web server 102 creates media data corresponding to Quality lower than that of the Group including the KeepReativeQualityGroup with the largest numerical value, in other words, the lowest Quality of all the 3D objects, and arranges the media data. The Web server 102 updates the MPD file 122 and transmits the MPD file 122 updated to the client apparatus 103. On the basis of the MPD file 122 newly acquired, the client apparatus 103 utilize the KeepReativeQualityGroup again to select a file to be acquired. In this case, a segment file for the group with the Quality that is not present in the server but that can be created may be signaled in the MPD in advance.

### <Modified Example>

The KeepRelativeQualityGroup may be added to the Attribute of the Representation. An example of the addition is illustrated below.
Example: <AdaptatonSet KeepRelativeQualityGroup ="1">

Additionally, in consideration of similar utilization for the Audio as well as for the Video, an id further grouping KeepRelativeQualityGroup may be signaled as a "value" value. For example, the GroupId may be signaled at the head of the value. An example of the signaling is illustrated below.
Example: <SupplementalProperty schemeIdUri=" KeepRelativeQualityGroup"value="GroupId, as1@id as2@id ...">

### <5-15: Embodiment 3-3-2>

### <Configuration Using Only Scene Description Is Used for Implementation>

In the technique with only the Scene Description enhanced according to Embodiment 1-2, the Grouping information that indicates the combination allowing the relative quality to be maintained may be signaled.

### <5-16: Embodiment 3-3-2-1>

### <New Node Is Defined>

The ClientSelection node 301 in Embodiment 1-2-1 may be enhanced. FIG. 64 illustrates an example of the ClientSelection node 301 in this case. In FIG. 64, the Grouping information indicating the combination allowing the relative quality to be maintained may be signaled in the child node indicated by the SelectionNode in the ClientSelection node 301. More specifically, the KeepRelativeQualityConsiderationGroup may be set in the SelectionNode. The Group information regarding the group to which the SelectionNode[n] belongs is indicated in KeepRelativeQualityConsiderationGroup[n]. The Group indicates an integer value as characters, and plural groups are expressed using space delimiters.

### <Modified Example>

Additionally, the id further grouping KeepRelativeQualityGroup may be signaled as in the modified example of Embodiment 3-2-1. In that case, it is sufficient if a KeepRelativeQualityGroupId field as illustrated in the following example is added.
field SFint32 KeepRelativeQualityGroupId

### <5-17: Embodiment 3-3-2-2>

### <Existing Nodes Are Enhanced>

This embodiment is a modified example of Embodiment 3-3-2-1. The KeepRelativeQualityConsiderationGroup field may be provided, as enhancement, in the BitWrapper node 15 and the MovieTexture node 16 enhanced in Embodiment 1-2-2. FIG. 65 illustrates an example of the BitWrapper node 15 and the MovieTexture node 16 enhanced.

### <Modified Example>

Additionally, the KeepRelativeQualityGroupId field may be added as in Embodiment 3-3-2-1. In addition, the enhancement example of the BitWrapper node 15 and the MovieTexture node 16 has been described, but no such limitation is intended. Similar fields may be provided in any other node as enhancement.

### <6: Fourth Embodiment (Embodiment 4)>

### <Signaling for Switching Level of Detail for Bit Rate Selection>

Further, signaling that is used, after the bit rates are decreased down to the limit, to perform bit rate adaptation by reducing the Levels of Detail for one or more or all of the 3D objects from the Levels of Detail for the 3D objects determined depending on the view-point position, may be added.

Even in a case where the mesh and the texture with the lowest bit rates of all the 3D objects are selected, there has been a possibility that reproduction is interrupted in a case where the transmission band is narrower than the total bit rate.

By providing signaling for bit rate adaptation by reducing the Levels of Detail as described above, the Levels of Detail can be uniformly reduced, in a case as described above, to suppress degradation of quality of 6DoF content. Thus, the robustness of content reproduction can be improved.

### <6-1: Embodiment 4-1>

### <Signaling Indicating That Uniform Reduction in Levels of Detail Prevents Disturbance of Relative Relation>

For bit rate selection based on switching of the Levels of Detail, signaling that indicates that a uniform reduction in Levels of Detail prevents the relative relation from being disturbed may be provided. In other words, metadata that further includes information indicating that, in spite of a change in Levels of Detail for three-dimensional objects, the relative quality between the three-dimensional objects can be maintained, may be generated.

### <6-2: Embodiment 4-1-1>

### <Configuration Using Scene Description and MPD Is Used for Implementation>

For example, a configuration using the MPD file for DASH and the Scene Description data may be used to signal that a uniform reduction in Levels of Detail prevents the relative relation from being disturbed.

### <Signaling of MPD>

An embodiment based on Embodiment 1-1-1 is enabled to access the AdaptationSet in the MPD at each Level of Detail for the 3D object in the Scene Description. However, the MPD in the embodiment based on Embodiment 1-1-1 does not indicate to which 3D object with certain Level of Detail each AdaptationSet corresponds. It is duplication of effort (cumbersome and time-consuming work is needed) to acquire information from the Scene Description indicating which 3D object is at the certain Level of Detail, in order to switch the Level of Detail.

Thus, first, the MPD is configured to indicate which of the Levels of Detail is included in the same 3D object. In other words, the AdaptationSets (Levels of Detail) in the mesh for the same 3D object are grouped. Similarly, the AdaptationSets (Levels of Detail) in the texture for the same 3D object are grouped. Further, signaling that indicates that, in a case where the Levels of Detail are uniformly reduced, the relative display relation between the objects can be maintained as much as possible, is provided.

Specific signaling for implementing such a technique is such that, in the Period, the SupplementalProperty is signaled that indicates that, in a case where the Levels of Detail are uniformly reduced, the relative display relation between the objects can be maintained as much as possible and that the group with the Level of Detail at which the relative display relation can be maintained as much as possible is signaled.

The SupplementalProperty is used to signal, in the schemeIdUri, "LODRelativeQualityIsEnsuredByLODOrder" indicating that, in a case where the Levels of Detail are uniformly reduced, the relative display relation between the objects can be maintained as much as possible. Further, LODGroup is added to Element in the SupplementalProperty. The LODGroup is grouping information regarding the AdaptationSets for the meshes for the same 3D object or the textures for the same 3D object. The AdaptationSet@ids included in the group are signaled using member attribute in the LODGroup. The AdaptationSet@ids signaled are arranged in order of decreasing Level of Detail starting with the highest Level of Detail, indicating the order of reduction in Level of Detail. An example of the signaling is illustrated below.

Example:
<SupplementalProperty schemeIdUri="LODRelativeQualityIsEnsuredByLODOrder">
<LODGroup member="as@idl as@id2..."/>
<LODGroup member="as@id4 as@id5..."/>
</SupplementalProperty>

In a case of having difficulty in reducing the bit rates using the technique of the second embodiment or the third embodiment, the client selects, on the basis of the SupplementalProperty, a combination of AdaptationSets with the next lower Level of Detail and performs bit rate selection again using the technique of the second embodiment or the third embodiment. At that time, in a case where no lower Level of Detail is present, the data regarding the minimum bit rate for the lowest Level of Detail is used.

FIG. 66 illustrates an example of the MPD file 122 in this case. This example includes three 3D objects each including three Levels of Detail of high, medium, and low. The SupplementalProperty indicates a group of mesh data with different Levels of Detail for the 3D object and a group of texture data with different Levels of Detail for the 3D object.

In FIG. 66, as an appropriate Level of Detail, the high Level of Detail (AdaptationSet@id=1 and 2) is selected for the 3D object A, the medium Level of Detail (AdaptationSet@id=9 and 10) is selected for the 3D object B, and the medium Level of Detail (AdaptationSet@id=15 and 16) is selected for the 3D object C. In a case where even a reduction in bit rates within the combination leads to the total bit rate larger than the transmission band, the Level of Detail is changed. At this time, the next lower Level of Detail is selected for all the 3D objects with reference to the SupplementalProperty. Then, the following combinations result.

AdaptationSet@id=3 (mesh data for the medium Level of Detail for the 3D object A)
AdaptationSet@id=4 (texture data for the medium Level of Detail for the 3D object A)
AdaptationSet@id=11 (mesh data for the low Level of Detail for the 3D object B)
AdaptationSet@id=12 (texture data for the low Level of Detail for the 3D object B)
AdaptationSet@id=17 (mesh data for the low Level of Detail for the 3D object C)
AdaptationSet@id=18 (texture data for the low Level of Detail for the 3D object C)

The present technique can be applied to Embodiment 1-1-1. Note that, in a case where the present technique is applied to Embodiment 1-1-1-1, the application can be achieved by providing, in the AdaptationSet of Embodiment 1-1-2-2, signaling indicating the RepresentationGroups and using the SupplementalProperty to provide, in the AdaptationSet, signaling indicating that a uniform reduction in RepresentationGroups (in other words, Levels of Detail) allows the relative relation to be maintained as much as possible.

In a case where the present technique is applied to Embodiment 1-1-2-2, the application can be achieved by using the SupplementalProperty to provide, in the AdaptationSet, signaling indicating that a uniform reduction in RepresentationGroups (in other words, Levels of Detail) allows the relative relation to be maintained as much as possible.

### <Modified Example>

Additionally, signaling as described below may be performed.
(1) The group information regarding the meshes and the textures for the same 3D object is identified by the AdaptationSet@group, and the order of the Level of Detail is signaled in each AdaptationSet using the SupplementalProperty. Alternatively, the Attribute in the AdaptationSet is used for specification.
(2) The group information regarding the meshes and the textures for the same 3D object is identified by the AdaptationSet@group, and the order of the Level of Detail is acquired from the Scene Description.
(3) In the AdaptationSet, the AdaptationSet for the next higher Level of Detail and the AdaptationSet for the next lower Level of Detail are signaled. A description example of the signaling is illustrated below. Note that this signaling may be specified in the Attribute in the AdaptationSet.
   <SupplementalProperty schemeIdUri="LowLevelAdaptationSet" value="AdaptationSet@id">
   <SupplementalProperty schemeIdUri="HighLevelAdaptationSet" value="AdaptationSet@id">
(4) In (1) to (3) described above, the AdaptationSet is used to signal that a uniform reduction in Levels of Detail prevents the relative quality relation from being disturbed. More specifically, SupplementalProperty is used to provide, in the AdapttionSet, signaling indicating that, for this AdaptationSet, a uniform reduction in Levels of Detail allows the relative relation to be maintained as much as possible. An example of the signaling is illustrated below. Note that the signaling may be specified in the Attribute in the AdaptationSet.
   Example: <SupplementalProperty schemeIdUri="LODRelativeQualityIsEnsuredByLODOrder">

The present technique can be applied to Embodiment 1-1-1. Note that, in a case where the present technique is applied to Embodiment 1-1-2-1, the application can be achieved by providing, in the AdaptationSet of Embodiment 1-1-2-2, signaling indicating the RepresentationGroups and using the SupplementalProperty to provide, in the AdaptationSet, signaling indicating that a uniform reduction in RepresentationGroups (in other words, Levels of Detail) allows the relative relation to be maintained as much as possible.

Additionally, in a case where the present technique is applied to Embodiment 1-1-2-2, the application can be achieved by using the SupplementalProperty to provide, in the AdaptationSet, signaling indicating that a uniform reduction in RepresentationGroups (in other words, Levels of Detail) allows the relative relation to be maintained as much as possible.

### <Flow of Reproduction Processing>

An example of a flow of the reproduction processing in this case will be described with reference to a flowchart in FIG. 67. When the reproduction processing is started, the MPD file acquisition section 181 of the client apparatus 103 acquires, in step S521, the MPD file 122 including the QualityGroup information.

Processing in step S522 to step S526 is executed similarly to the processing in step S161 to step S166 (FIG. 17).

In step S527, the media data segment file selection section 187 determines whether or not any combination of bit rates that is smaller than the transmission band at the current Level of Detail can be selected. In a case where media data segment file selection section 187 determines that such a combination of bit rates can be selected, the processing proceeds to step S528.

In step S528, the media data segment file selection section 187 selects the Representation in each of the AdaptationSets in the MPD file 122 corresponding to the desired Level of Detail for each 3D object. At that time, the media data segment file selection section 187 selects the Representation such that the total of the bit rates for all the segment files to be acquired is smaller than the transmission band. When the processing in step S528 ends, the processing proceeds to step S530.

Additionally, in step S527, in a case where the media data segment file selection section 187 determines that no combination of bit rates that is smaller than the transmission band at the current Level of Detail can be selected, the processing proceeds to step S529.

In step S529, the media data segment file selection section 187 executes bit rate selection processing, reduces the Levels of Detail, and selects the bit rates. When the processing in step S529 ends, the processing proceeds to step S530.

Processing in step S530 and step S531 is executed similarly to the processing in step S168 and step S169 (FIG. 17). When the processing in step S531 ends, the reproduction processing ends.

### <Flow of Bit Rate Selection Processing>

Now, an example of a flow of the bit rate selection processing executed in step S529 in FIG. 67 will be described with reference to a flowchart in FIG. 68.

When the bit rate selection processing is started, the media data segment file selection section 187 determines, in step S551, whether or not all the AdaptationSets are at other than the lowest Level of Detail. In a case where the media data segment file selection section 187 determines the presence of AdaptationSet (3D object) not at the lowest Level of Detail (the Level of Detail can still be reduced), the processing proceeds to step S552.

In step S552, the media data segment file selection section 187 selects a combination of AdaptationSets with the Level of Detail decreasing one by one on the basis of the SupplementalProperty with the schemeIdUri indicating "LODRelativeQualityIsEnsuredByLODOrder."

In step S553, the media data segment file selection section 187 determines whether or not a combination of bit rates smaller than the transmission band at the current Level of Detail can be selected. In a case where the media data segment file selection section 187 determines the absence of a combinations of bit rates smaller than the transmission band at the current Level of Detail, the processing is returned to step S551, and the subsequent steps of processing are repeated. In other words, the processing in step S551 to step S553 is repeated until a combination of bit rates smaller than the transmission band is found or all of the 3D objects are at the lowest Level of Detail.

Then, in step S553, in a case where the media data segment file selection section 187 determines the presence of a combination of bit rates smaller than the transmission band at the current Level of Detail, the processing proceeds to step S554.

In step S554, the media data segment file selection section 187 selects the Representation in the AdaptationSet such that the total of bit rates is smaller than the transmission band. In other words, the "combination of bit rates smaller than the transmission band" detected in step S553 is selected. When the processing in step S554 ends, the bit rate selection processing ends, and the processing returns to FIG. 67.

Additionally, in step S551, in a case where the media data segment file selection section 187 determines that all the AdaptationSets (3D objects) are at the lowest Level of Detail and that the Level of Detail can no longer be reduced, the processing proceeds to step S555.

In step S555, the media data segment file selection section 187 selects the Representation such that the AdaptationSet selected corresponds to the lowest bit rate. When the processing in step S555 ends, the bit rate selection processing ends, and the processing returns to FIG. 67.

The processing of the steps executed as described above allows the Level of Detail to be reduced to control the bit rates to maintain the relative quality between the 3D objects. Consequently, the robustness of content reproduction can be improved.

Note that the number of Levels of Detail may be limited to a certain value. In that case, the Level of Detail can no longer be reduced, and the lowest bit rate for the lowest Level of Detail needs to be continuously selected. However, this disturbs the relative relation of the Level of Detail. To avoid that, a technique as described below may be allowed to be performed.

(1) The client lowers the Quality at the time of display such that the quality is consistent with the other Qualities. For example, at the time of display, the client applies a Gaussian blur filter only to the 3D object portion before display.
(2) In Embodiment 1-1-1 or Embodiment 1-1-2, the client apparatus 103 causes the Web server 102 to create even lower Level of Detail and acquires the Level of Detail. The client apparatus 103 requests, to the Web server 102, the name of the MPD file and the id of the AdaptationSet. According to the request, the Web server 102 creates a bit rate variation for mesh data or texture data for a Level of Detail even lower than that in the specified AdaptationSet and arranges the bit rate variation. Then, the Web server 102 updates the MPD file 122 utilizing the mechanism of MPD update and transmits the MPD file 122 updated to the client apparatus 103. On the basis of the MPD file 122 newly acquired, the client apparatus 103 selects the Levels of Detail again. In this case, a segment file for a Level of Detail that is not present in the server but that can be created may be signaled in the MPD and the Secene Description in advance.

### <6-3: Embodiment 4-1-2>

### <Configuration Using Only Scene Description Is Used for Implementation>

Note that signaling that indicates that, in a case where only the Scene Description is used as in Embodiment 1-2, a uniform reduction in Levels of Detail prevents the relative relation from being disturbed, may also be provided. In other words, in this case, the MPD file 122 for DASH is not utilized.

### <6-4: Embodiment 4-1-2-1>

### <New Node Is Defined>

For example, the ClientSelection node 301 in Embodiment 1-2-1 may be enhanced, and in the child node indicated by the SelectionNode in the ClientSelection node 301, flag information (Flag) that indicates that a uniform reduction in Levels of Detail allows the relative quality to be maintained may be signaled. More specifically, LODRelativeQualityIsEnsuredByLODOrderFlag may be added. FIG. 69 illustrates an example of the ClientSelection node 301 in this case.

### <6-5: Embodiment 4-1-2-2>

### <Existing Nodes Are Enhanced>

The present embodiment may enhance the existing nodes instead of defining a new node as described above. The LODRelativeQualityIsEnsuredByLODOrderFlag field may be provided, as enhancement, in the BitWrapper node 15 and the MovieTexture node 16 enhanced in Embodiment 1-2-2. FIG. 70 illustrates an example of the BitWrapper node 15 and the MovieTexture node 16 enhanced. In this case, the LODRelativeQualityIsEnsuredByLODOrderFlag field is provided, as enhancement, in the BitWrapper node 15 and the MovieTexture node 16.

### <Modified Example>

Note that the present technique relates to information related to the switching of the Level of Detail and thus that the LOD node 31 may be enhanced. FIG. 71 illustrates an example of the LOD node 31 enhanced. In this case, the LODRelativeQualityIsEnsuredByLODOrderFlag field is provided, as enhancement, in the LOD node 31.

Similarly, any other node may be enhanced. In this case, advantageously, the number of nodes signaled is reduced.

### <6-6: Embodiment 4-2>

### <Signaling Indicating That Level of Detail Can Be Changed on Basis of Quality>

When the Level of Detail is changed, signaling that indicates that the Level of Detail can be changed on the basis of the Quality may be provided. In other words, metadata that includes information indicating that, in spite of a change in the Levels of Detail for three-dimensional objects based on information indicating the relative quality between the three-dimensional objects, the relative quality between the three-dimensional objects can be maintained, may be generated.

### <6-7: Embodiment 4-2-1>

### <Configuration Using Scene Description and MPD Is Used for Implementation>

For example, a configuration using the MPD file for DASH and the Scene Description data may be used to signal that the Level of Detail can be changed on the basis of the Quality.

### <Signaling of MPD>

As is the case with Embodiment 4-1-1, signaling that indicates that AdaptationSets for meshes for different Levels of Detail for the 3D object or textures for the same 3D object may be grouped and that the Level of Detail may be changed with reference to the Quality, may be provided.

For example, the SupplementalProperty is used to signal, in schemeIdUri, "LODRelativeQualityIsEnsuredByQualityValue" indicating that the relative display relation of each object can be maintained as much as possible by using the value of the Quality as a reference in a case where the Level of Detail is reduced. Further, the LODGroup is added to the Element in the SupplementalProperty. The LODGroup is grouping information regarding the AdaptationSets for the meshes for the same 3D object or the textures for the same 3D object. The AdaptationSet@ids included in the group are signaled using the member attribute in the LODGroup. The AdaptationSet@ids signaled are arranged in order of decreasing Level of Detail starting with the highest Level of Detail, indicating the order of reduction in Level of Detail. An example of the signaling is illustrated below. Note that the technique illustrated in Embodiment 3-2-1 is used for signaling of the Quality value.

Example:
<SupplementalProperty schemeIdUri= LODRelativeQualityIsEnsuredByQualityValue">
<LODGroup member="as@id1 as@id2..."/>
<LODGroup member="as@id4 as@id5..."/>
</SupplementalProperty>

The client apparatus 103 also adapts the implementation of the client apparatus 103 of Embodiment 3-2-1 to reduction of the Level of Detail, to enable acquisition of a combination with the relative quality maintained.

An example of actual signaling corresponds to the MPD file 122 illustrated in FIG. 60 of Embodiment 3-2-1 and to which the schemeIdUri in the SupplementalProperty in the MPD file 122 illustrated in FIG. 66 changed to the LODRelativeQualityIsEnsuredByQualityValue is added.

Note that the present technique can be applied to Embodiment 1-1-1. Additionally, the present technique can also be applied to Embodiment 1-1-2 by using a configuration in which the LODGroup includes one AdaptatonSet@id as the member and in which the QualityRanking is indicated in order of the RepresentationGroup in the AdaptatonSet@id.

### <Modified Example>

An example of another signaling method will be described below.
(1) The group information regarding the meshes and the textures for the same 3D object is identified by the AdaptationSet@group, and the order of the Level of Detail is signaled in each AdaptationSet using the SupplementalProperty. Signaling may also be provided in the Attribute in the AdaptationSet.
(2) The group information regarding the meshes and the textures for the same 3D object is identified by the AdaptationSet@group, and the order of the Level of Detail is acquired from the Scene Description.
(3) In the AdaptationSet, the AdaptationSet for the next higher Level of Detail and the AdaptationSet for the next lower Level of Detail are signaled. An example of the signaling is illustrated below. Note that signaling may also be provided in the Attribute in the AdaptationSet.
   <SupplementalProperty schemeIdUri="LowLevelAdaptationSet" value="AdaptationSet@id">
   <SupplementalProperty schemeIdUri="HighLevelAdaptationSet" value="AdaptationSet@id">
(4) In (1) to (3), in the AdaptationSet, signaling that indicates that a uniform reduction in Levels of Detail prevents the relative relation from being disturbed, is provided. More specifically, the SupplementalProperty is used to provide, in the AdapttionSet, signaling indicating that, for this AdaptationSet, the Level of Detail may be reduced on the basis of the Quality value. An example of the signaling is illustrated below. Note that the signaling may also be provided in the Attribute in the AdaptationSet.
   Example:
   <SupplementalProperty schemeIdUri=" LODRelativeQualityIsEnsuredByQualityValue">
(5) Instead of the Quality itself, the QualityRanking may be used. In that case, the QualityRanking is assigned to the overall meshes or textures for the 3D object (the QualityRanking exceeds the Levels of Detail (exceeds the AdaptationSets).

Note that the number of Levels of Detail may be limited to a certain value. In that case, the Level of Detail can no longer be reduced, and the lowest bit rate for the lowest Level of Detail needs to be continuously selected. However, this disturbs the relative relation of the Level of Detail. To avoid that, a technique as described below may be allowed to be performed.

(1) The client apparatus 103 lowers the Quality at the time of display such that the quality is consistent with the other Qualities. For example, at the time of display, the client apparatus 103 applies a Gaussian blur filter only to the 3D object portion before display.
(2) In Embodiment 1-1-1 or Embodiment 1-1-2, the client apparatus 103 causes the Web server 102 to create even lower Level of Detail and acquires the Level of Detail. The client apparatus 103 requests, to the Web server 102, the name of the MPD file and the id of the AdaptationSet. According to the request, the Web server 102 creates a bit rate variation for mesh data or texture data for a Level of Detail even lower than that in the specified AdaptationSet specified and arranges the bit rate variation. Then, the Web server 102 updates the MPD file 122 utilizing the mechanism of MPD update and transmits the MPD file 122 updated to the client apparatus 103. On the basis of the MPD file 122 newly acquired, the client apparatus 103 selects the Levels of Detail again. In this case, a segment file for a Level of Detail that is not present in the server but that can be created may be signaled in the MPD and the Secene Description in advance.

### <6-8: Embodiment 4-2-2>

### <Configuration Using Only Scene Description Is Used for Implementation>

Note that signaling that indicates that, in a case where only the Scene Description is used as in Embodiment 1-2, the Level of Detail can be changed on the basis of the Quality, may be added. In other words, in this case, the MPD file 122 for DASH is not utilized.

### <6-9: Embodiment 4-2-2-1>

### <New Node Is Defined>

For example, the ClientSelection node 301 in Embodiment 3-2-2-1 may be enhanced to implement the signaling of the present technique. FIG. 72 illustrates an example of the ClientSelection node 301 in this case. As illustrated in FIG. 72, in the ClientSelection node 301, Flag that indicates that, for the child node indicated by the SelectionNode, the Levels of detail may be selected on the basis of the Quality value, is signaled. More specifically, the LODRelativeQualityIsEnsuredByQualityValue is added.

### <Modified Example>

For example, instead of the Quality itself, the QualityRanking may be used. In that case, the QualityRanking is assigned to the overall meshes or textures for the 3D object, as described in Embodiment 4-2-1. For the signaling of the QualityRanking, the technique described in Embodiment 3-1-2-1 is applied, and it is sufficient to the add, to the QualityRanking, the LODRelativeQualityIsEnsuredByQualityRanking field indicating that relative display relation between the objects can be maintained as much as possible.

### <6-10: Embodiment 4-2-2-2>

### <Existing Nodes Are Enhanced>

Note that the LODRelativeQualityIsEnsuredByLODOrderFlag field described above may be provided, as enhancement, in the BitWrapper node 15 and the MovieTexture node 16 enhanced in Embodiment 3-2-2-2. FIG. 73 illustrates an example of the BitWrapper node 15 and the MovieTexture node 16 in that case. As illustrated in FIG. 73, in this case, the LODRelativeQualityIsEnsuredByLODOrderFlag field described above is added to both the BitWrapper node 15 and the MovieTexture node 16.

### <Modified Example>

Note that, instead of the Quality itself, the QualityRanking may be used. In that case, the QualityRanking is assigned for all the meshes or textures for the 3D object, as described above in Embodiment 4-2-1. The signaling of the QualityRanking may be performed as is the case with Embodiment 3-1-2-2. By adding the LODRelativeQualityIsEnsuredByQualityRanking field to the QualityRanking, the present technique can be applied.

The present technique relates to information related to the switching of the Level of Detail, and thus the LOD node 31 may be enhanced. However, the signaling of the Quality value is needed, and thus there is a need for the signaling of the ClientSelection node 301 enhanced in Embodiment 3-2-2-1 or the signaling of the BitWrapper node 15 and the MovieTexture node 16 enhanced in Embodiment 3-2-2-2. FIG. 74 illustrates an enhancement example of the LOD node 31. In this case, advantageously, fewer nodes are signaled. Additionally, any other node may be similarly enhanced.

### <6-11: Embodiment 4-3>

### <QualityRanking Is Signaled in Level of Detail>

The QualityRanking may also be signaled in the Level of Detail, and the client apparatus 103 may switch the Level of Detail on the basis of the QualityRanking.

### <6-12: Embodiment 4-3-1>

### <Configuration Using Scene Description and MPD Is Used for Implementation>

For example, a configuration using the MPD file for DASH and the Scene Description data may be used to signal the QualityRanking in the Level of Detail.

### <Signaling of MPD>

As is the case with Embodiment 4-1-1, signaling is provided in the Period. For example, in Embodiment 4-1-1, the QualityRanking is added to the attribute in the LODGroup. The correlation of quality can be maintained by indicating an LODRelativeQualityIsEnsuredByLODQualityRanking for the SupplementalProperty to allow the Level of Detail to be selected while preventing disturbance of the relative relation of the QualityRanking set for each Level of Detail. An example of the signaling is illustrated below. Note that the QualityRanking for member[n] is QualityRanking[n].

Example:
<SupplementalProperty schemeIdUri="LODRelativeQualityIsEnsuredByLODQualityRanking">
<LODGroup member="as@id1 as@id2..." QualityRanking="1 2..." />
<LODGroup member="as@id4 as@id5..." QualityRanking="1 2..." />
</SupplementalProperty>

The present technique can be applied, for example, to Embodiment 1-1-1. Note that the present technique can also be applied to Embodiment 1-1-2 by using a configuration in which the LODGroup includes one AdaptatonSet@id as the member and in which the QualityRanking is indicated in order of the RepresentationGroup in the AdaptatonSet@id.

### <Modified Example>

Note that the signaling method is not limited to the above-described example. For example, a method as described below may be used.
(1) The group information regarding the meshes and the textures for the same 3D object is identified by the AdaptationSet@group, and the QualityRanking for the Level of Detail is signaled in each AdaptationSet using the SupplementalProperty. Signaling may also be provided in the Attribute in the AdaptationSet.
(2) In the AdaptationSet, the AdaptationSet for the next higher Level of Detail and the AdaptationSet for the next lower Level of Detail are signaled. An example of the signaling is illustrated below. Note that signaling may also be provided in the Attribute in the AdaptationSet.
   <SupplementalProperty schemeIdUri="LowLevelAdaptationSet" value="AdaptationSet@id">
   <SupplementalProperty schemeIdUri="HighLevelAdaptationSet" value="AdaptationSet@id">
(3) In (1) and (2), in the AdaptationSet, signaling that indicates that selection based on the QualityRanking for the Level of Detail prevents the relative relation from being disturbed, is provided. More specifically, the SupplementalProperty is used to provide, in the AdapttionSet, signaling indicating that, for this AdaptationSet, a reduction in Levels of Detail based on the QualityRanking value allows the relative quality relation to be maintained. An example of the signaling is illustrated below. Note that the signaling may also be provided in the Attribute in the AdaptationSet.

Example:
<SupplementalProperty schemeIdUri=" LODRelativeQualityIsEnsuredByLODQualityRanking">

### <6-13: Embodiment 4-3-2>

### <Configuration Using Only Scene Description Is Used for Implementation>

Note that, in a case where only the Scene Description is used as in Embodiment 1-2, the QualityRanking may be signaled in the Level of Detail. In other words, in this case, the MPD file 122 for DASH is not utilized.

### <6-14: Embodiment 4-3-2-1>

### <New Node Is Defined>

For enhancement of the Scene Description data 121, with the existing nodes directly utilized without change, a new node may be added for bit rate adaptation. For example, the ClientSelection node 301 described in Embodiment 1-2-1 may be enhanced.

FIG. 75 illustrates an enhancement example of the ClientSelection node 301. For example, in the ClientSelection node 301, Flag is signaled in the SelectionNode field, the Flag indicating that a uniform reduction in Levels of Detail allows the relative quality to be maintained. More specifically, the LODRelativeQualityIsEnsuredByLODQualityRanking field is added, and LODQualityRanking is set.

### <6-15: Embodiment 4-3-2-2>

### <Existing Nodes Are Enhanced>

Instead of defining a new node as described above, the present embodiment may enhance existing nodes. For example, the LODRelativeQualityIsEnsuredByLODQualityRanking field may be provided, as enhancement, in the BitWrapper node 15 and the MovieTexture node 16 in Embodiment 1-2-2. This corresponds to replacement of the LODRelativeQualityIsEnsuredByLODOrderFlag field in the BitWrapper node 15 and the MovieTexture node 16 in FIG. 70 with the LODRelativeQualityIsEnsuredByLODQualityRanking field in the ClientSelection node 301 in FIG. 75.

### <Modified Example>

The present technique relates to information related to the switching of the Level of Detail, and thus the LOD node 31 may be enhanced. In this case, advantageously, fewer nodes are signaled. This corresponds to replacement of the LODRelativeQualityIsEnsuredByLODOrderFlag field in the LOD node 31 illustrated in FIG. 71 with the LODRelativeQualityIsEnsuredByLODQualityRanking field in FIG. 75. Needless to say, any other node may be enhanced.

### <7. Fifth Embodiment (Embodiment 5)>

### <Signaling Indicating Intent of Content Author or Like>

Further, importance information regarding a 3D object intended by a content author may be signaled. Note that, for example, regardless of whether or not the flag information (flag) of the fourth embodiment is present, the client may select whether or not to use this technique. Additionally, whether the importance is valid or invalid may be allowed to be set by the level of the Level of Detail.

For example, in a case where a scene includes a mixture of a 3D object intended by a content author to be important and a 3D object intended by the content author not to be important, reducing the Level of Detail regardless of that information may prevent the user from viewing scenes reflecting the intent of the content author or the like.

Thus, by signaling importance information regarding the 3D object intended by the content author, reducing the Level of Detail for the important 3D object can be suppressed in the case as described above. This allows the user to view scenes reflecting the intent of the content author or the like.

### <7-1: Embodiment 5-1>

### <Signaling of Importance (Numerical Value)>

For example, as the signaling of the importance of 3D objects, how important each 3D object is in a scene may be numerically indicated. In other words, metadata that further includes information indicating the importance of the three-dimensional object may be generated.

### <7-2: Embodiment 5-1-1>

### <Configuration Using Scene Description and MPD Is Used for Implementation>

For example, a configuration using the MPD file for DASH and the Scene Description data may be used to signal the importance of the 3D object.

### <7-3: Embodiment 5-1-1-1>

### <Enhancement of MPD>

In AdaptationSets for the mesh and the texture for each 3D object, a value indicating the importance of the 3D object is signaled. The importance, for example, increases with decreasing value of the importance. Needless to say, the importance is not limited to this example and may increase consistently with value of the importance, for example.

More specifically, Important3Dobject attribute may be added to the LODGroup in the SupplementalProperty of the fourth embodiment, and the "value" value may be used to signal the importance information. The LODGroup for the mesh for the 3D object needs to have the same value as that of the LODGroup for the texture for the 3D object. An example of the addition is illustrated below.
<LODGroup member="1 3 5" Important3Dobject="1"/>

FIG. 76 illustrates an example of the MPD file 122 in this case. This example includes three 3D objects each including three Levels of Detail of high, medium, and low. The importance information is signaled in each AdaptationSet as a value of the Important3Dobject attribute. For example, the 3D object A has an importance of 1 and the 3D objects B and C have an importance of 2.

In a case where, in the MPD file 122 in FIG. 76, as an appropriate Level of Detail, the high Level of Detail (AdaptationSet@id=1 and 2) is selected for the 3D object A, the medium Level of Detail (AdaptationSet@id=9 and 10) is selected for the 3D object B, and the medium Level of Detail (AdaptationSet@id=15 and 16) is selected for the 3D object C, the Levels of Detail are changed when even a reduction in bit rates within this combination leads to the total bit rate being larger than the transmission band. At that time, with reference to the SupplementalProperty, first, for a large "value" value of the Important3Dobject, the next lower Level of Detail is selected for all the 3D objects. In other words, the Level of Detail for the 3D objects B and C having a Value of 2 is reduced by one, setting the low Level of Detail (AdaptationSet@id=11 and 12) for the 3D object B and the low Level of Detail (AdaptationSet@id=17 and 18) for the 3D object C. Then, a bit rate is selected from them. In a case where even this selection is insufficient, the Level of Detail for the 3D object A, which is a 3D object having a value of 1, is reduced by one to select the medium Level of Detail (AdaptationSet@id=3 and 4), and the bit rate is reduced.

### <Modified Example>

In this case, all the Levels of Detail included in the LODGroup have the same importance. The importance may be to be changed depending on the Level of Detail (for example, the importance is set high for the high Level of Detail and set lower for the other Levels of Detail). In that case, the values may be specified for the respective Levels of Detail using comma delimitation. An example of the specification is illustrated below.
<LODGroup member="1 3 5" Important3Dobject="1,2,2"/>

Additionally, signaling may be provided only in some 3D objects. In that case, no values are set. Levels of Detail provided with no signaling may be treated as having no importance, in other words, as having a low importance. An example of the signaling is illustrated below.
<LODGroup member="1 3 5" Important3Dobject="1,,"/>

Besides, in a case where signaling is provided in units of AdaptationSets as in the other signaling examples in Embodiment 4-1-1, the Important3Dobject may also be signaled in the AdaptationSet. In that case, the SupplementalProperty may also be used to exclusively signal the Important3DObject.

Additionally, whether or not the Level of Detail is important may simply be indicated. At that time, flag information (flag) indicating, as 1 or 0, whether or not the Level of Detail is important may be allowed to be specified for each Level of Detail.

The importance information may be allowed to be utilized in selecting the bit rates within the Level of Detail as well as in switching the Level of Detail.

### [Flow of Bit Rate Selection Processing>

The client apparatus 103 determines, on the basis of the importance of the 3D object, at which Level of Detail the bit rate starts to be increased or reduced. For example, in a case where the transmission band is insufficient, the Levels of Detail are sequentially reduced starting with the Level of Detail with the lowest importance. Regardless of whether or not the fourth embodiment is applied, the client apparatus 103 may control the switching of the Level of Detail only on the basis of this value.

Note that, in this case, the reproduction processing is executed as described with reference to the flowchart in FIG. 67. With reference to a flowchart in FIG. 77, an example of a flow of the bit rate selection processing executed in step S529 will be described.

When the bit rate selection processing is started, the media data segment file selection section 187 determines, in step S571, whether or not all the AdaptationSets are at other than the lowest Level of Detail. In a case where the media data segment file selection section 187 determines the presence of AdaptationSet (3D object) not at the lowest Level of Detail (the Level of Detail can still be reduced), the processing proceeds to step S572.

In step S572, the media data segment file selection section 187 acquires the maximum value of the Important3Dobject from the SupplementalProperty with the schemeIdUri being "LODRelativeQualityIsEnsuredByLODOrder" and sets the maximum value as a variable a.

In step S573, the media data segment file selection section 187 determines whether or not the variable a is 0. In a case where the media data segment file selection section 187 determines that the variable a is 0 (a = 0), the processing returns to step S571, and the subsequent steps of processing are repeated.

In other words, the processing in step S571 to step S573 is repeated until all the AdaptationSets are determined to be at the lowest Level of Detail or the variable a is determined not to be 0. Then, in step S573, in a case where the variable a is determined not to be 0, the processing proceeds to step S574.

In step S574, the media data segment file selection section 187 selects from the AdaptationSets for the LODGroup with the Improtant3Dobject being a, the selected AdaptationSet having the next lower Level of Detail.

In step S575, the media data segment file selection section 187 determines whether or not the transmission band can be reduced by reselecting the bit rates only for the AdaptationSet with the Level of Detail changed. In a case where the media data segment file selection section 187 determines that the bit rates are prevented from allowing the transmission band to be reduced, the processing proceeds to step S576.

In step S576, the value of the variable a is reduced by one (one is subtracted from the variable a). When the processing in step S576 ends, the processing returns to step S573, and the subsequent steps of processing are repeated.

In other words, the processing in step S573 to step S576 is repeated until the variable a is determined to be 0 or the bit rates are determined to allow the transmission band to be reduced. Then, in step S575, in a case where the bit rates are determined to allow the transmission band to be reduced, the processing proceeds to step S577.

In step S577, the media data segment file selection section 187 selects the Representation allowing the transmission band to be reduced. When the processing in step S577 ends, the bit rate selection processing ends, and the processing returns to the reproduction processing.

Additionally, in step S571, in a case where the media data segment file selection section 187 determines that all the AdaptationSets are at the lowest Level of Detail and that the Level of Detail can no longer be reduced, the processing proceeds to step S578.

In step S578, the media data segment file selection section 187 selects the Representation such that the AdaptationSet selected correspond to the lowest bit rate. When the processing in step S578 ends, the bit rate selection processing ends, and the processing returns to the reproduction processing.

In other words, the processing is executed in the order in which the Level of Detail for a 3D object with a low importance is reduced by one, then the Level of Detail for a 3D object with the next lower importance is reduced by one, and so on. Accordingly, reproduction reflecting the importance intended by the content author or the like can be executed.

Note that the processing may be executed in the order in which the Level of Detail for a 3D object with a low importance is reduced to as low importance as possible, then the Level of Detail for the 3D object with the next lower importance is reduced to as low importance as possible, and so on.

### <7-4: Embodiment 5-1-2>

### <Configuration Using Only Scene Description Is Used for Implementation>

Note that, in a case where only the Scene Description is used as in Embodiment 1-2, the importance information regarding the 3D object intended by the content author may be signaled. In other words, in this case, the MPD file 122 for DASH is not utilized.

### <7-5: Embodiment 5-1-2-1>

### <New Node Is Defined>

For example, the ClientSelection node 301 of Embodiment 1-2-1 may be enhanced to signal the importance information regarding the 3D object. More specifically, the Important3Dobject may be added. The importance increases with decreasing value of the importance. However, 0, also corresponding to an initial value in a case where a field is not provided, is assumed not to set importance for the 3D object. Needless to say, any expression method for the importance is employed and is not limit to this example.

FIG. 78 illustrates an example of the ClientSelection node 301 in this case. As illustrated in FIG. 78, Important3Dobject field setting the importance of the 3D object is added to the ClientSelection node 301 in this case.

### <7-6: Embodiment 5-1-2-2>

### <Existing Nodes Are Enhanced>

Instead of defining a new node as described above, the present embodiment may enhance existing nodes. The Important3Dobject field may be provided, as enhancement, in the BitWrapper node 15 and the MovieTexture node 16 enhanced in Embodiment 1-2-2. FIG. 79 illustrates an example of the BitWrapper node 15 and the MovieTexture node 16 enhanced. In this case, the Important3Dobject field is added to the BitWrapper node 15 and the MovieTexture node 16.

### <Modified Example>

Note that, in a case where the importance is determined for each 3D object, the Transform node 12 may be enhanced. FIG. 80 is a diagram illustrating an example of the Transform node 12 enhanced. As illustrated in FIG. 80, Important3Dobject field is added to the Transform node 12 in this case. This advantageously leads to fewer nodes being signaled. Note that, in this example, the Transform node 12 is enhanced but that any other node may be newly defined or any other node (for example, the Shape node 13 or the like) may be enhanced.

### <8: Sixth Embodiment (Embodiment 6)>

### <Implementation Method for Maintaining Level of Detail for 3D Object of Interest to User>

Further, a 3D object of interest to the user may be allowed to be identified, and the Level of Detail for the 3D object may be allowed to be maintained.

### <8-1: Embodiment 6-1>

### <Implementation Example of Client Apparatus 103>

With an insufficient transmission band, the client apparatus 103 may apply the following rules to select the bit rates. In other words, metadata that further includes information specifying the importance of the three-dimensional object of interest may be generated.

(1) A point of interest to the user is acquired.
(2) The 3D object located at the point of interest is determined from position information in the Scene Description.
(3) The 3D object of interest is assumed to have an importance of 1. The other 3D objects are assumed to have an importance of 2.
(4) Then, an algorithm similar to the algorithm in the fifth embodiment is used to select the bit rates.

### <Flow of Bit Rate Selection Processing>

In this case, the reproduction processing is executed as described with reference to the flowchart in FIG. 67. With reference to a flowchart in FIG. 81, an example of a flow of the bit rate selection processing executed in step S529 in this case will be described.

When the bit rate selection processing is started, the media data segment file selection section 187 determines, in step S591, whether or not all the AdaptationSets are at other than the lowest Level of Detail. In a case where the media data segment file selection section 187 determines the presence of AdaptationSet (3D object) not at the lowest Level of Detail (the Level of Detail can still be reduced), the processing proceeds to step S592.

In step S592, the media data segment file selection section 187 acquires the maximum value of the Important3Dobject from the SupplementalProperty with the schemeIdUri being "LODRelativeQualityIsEnsuredByLODOrder" and sets the maximum value as the variable a.

In step S593, the media data segment file selection section 187 determines the 3D object of interest to the user from the position, the line-of-sight direction, and the like of the user and from the position information regarding each 3D object described in the Scene Description data 121.

In step S594, the media data segment file selection section 187 sets, to 1, the importance of the 3D object of interest to the user detected in step S593, and sets, to 2, the importance of the other 3D objects, that is, the 3D objects not of interest to the user. Further, the variable a = 2.

Processing in step S595 to step S600 is executed similarly to the processing in step S573 to step S578 (FIG. 77).

When the processing in step S599 or step S600 ends, the bit rate selection processing ends, and the processing returns to the reproduction processing.

The bit rate selection processing executed as described above allows the 3D object of interest to the user to be identified and allows prevention of a reduction in the Level of Detail for the 3D object. Consequently, degradation of quality of 6DoF content, based on the subjective view of the user, can be suppressed.

### <Modified Example>

Note that a 3D object of interest may have an importance of 1, 3D objects that are not of interest but are being displayed may have an importance of 2, and the other 3D objects may have an importance of 3. The Level of Detail may be sequentially reduced starting with the 3D objects not being displayed.

Additionally, the assignment of the importance may be subdivided, and for the 3D objects that are not of interest but are being displayed, the importance may be varied between 3D objects being displayed and located close to the 3D object of interest and 3D objects being displayed but not located close to the 3D object of interest (different degrees of importance are assigned to these 3D objects).

Further, after the Level of Detail for the 3D objects not of interest is reduced down to the lowest level, the Level of Detail for the 3D object of interest may be reduced.

Additionally, when a selection is made from the bit rates for the Level of Detail, the bit rate may be reduced starting with the 3D objects not of interest.

### <9: Seventh Embodiment (Embodiment 7)>

### <Signaling in Case Where One Body in 3D Space Includes 3D Objects for Plural Portions>

The first embodiment corresponds to a case where each body present in the 3D space is assumed as a 3D object. In a case where a body includes 3D objects for plural portions as well, bit rate adaptation may be allowed to be performed for each Level of Detail, as is the case in the first embodiment.

For example, it is assumed that, as illustrated in FIG. 82, a cylindrical body A is divided into four portions including a 3D object A1, a 3D object A2, a 3D object A3, and a 3D object A4. In this case, each of the 3D objects includes mesh data and texture data.

### <9-1: Embodiment 7-1>

### <3D Objects for Respective Portions Are Signaled in Scene Description>

Such 3D objects for all portions are signaled in the Scene Description. For example, in the technique described in Embodiment 1, 3D objects for the respective portions are signaled in the Scene Description. Accordingly, implementation using the same enhancement as that in the technique described in Embodiment 1 is made possible.

For example, enhancement in Embodiment 1-1-1 using a configuration of the Scene Description and the MPD can be applied. In a case where Embodiment 1-1-1 is applied to the example in which the body A is divided into the four 3D objects as illustrated in FIG. 82, the Scene Description data 121 has, for example, a configuration as illustrated in FIG. 83. In FIG. 83, for the 3D object A2 to the 3D object A4, the LoD node and the subordinate configuration are similar to the corresponding configuration for the 3D object A1, and thus description of the configuration is omitted.

As illustrated in FIG. 83, application of the enhancement in Embodiment 1-1-1 allows signaling, as individual 3D objects, of the 3D object A1 to the 3D object A4 corresponding to portions of the body A.

Needless to say, not only the technique described in Embodiment 1-1-1 but also the techniques described in in all the subordinate embodiments of Embodiment 1-1 (Embodiment 1-1-1, Embodiment 1-1-2, Embodiment 1-1-2-1, Embodiment 1-1-2-2, and Embodiment 1-1-3) can be applied to 3D objects resulting from division as in the example in FIG. 82.

For example, the enhancement in Embodiment 1-2-1 using only the Scene Description may be applied. In a case where Embodiment 1-2-1 is applied to the example in which the body A is divided into the four 3D objects as illustrated in FIG. 82, the Scene Description data 121 has, for example, a configuration as illustrated in FIG. 84. In FIG. 84, for the 3D object A2 to the 3D object A4, the LoD node and the subordinate configuration are similar to the corresponding configuration for the 3D object A1, and thus description of the configuration is omitted. Additionally, the Shape node and the subordinate configuration at a medium Level of Detail AIM for the 3D object A1 are similar to the corresponding configuration at a high Level of Detail A1H for the 3D object A1, and thus description of the configuration is omitted. Similarly, the Shape node and the subordinate configuration at a low Level of Detail A1L for the 3D object A1 are similar to the corresponding configuration at the high Level of Detail A1H for the 3D object A1, and thus description of the configuration is omitted.

As illustrated in FIG. 84, the enhancement in Embodiment 1-2-1 can be applied to signal, as individual 3D objects, the 3D object A1 to the 3D object A4 corresponding to portions of the body A. This allows each of the 3D object A1 to the 3D object A4 to be individually accessed.

Needless to say, not only the technique described in Embodiment 1-2-1 but also the techniques described in all the subordinate embodiments of Embodiment 1-2 (Embodiment 1-2-1 and Embodiment 1-2-2) can be applied to the 3D objects resulting from division as in the example in FIG. 82.

As described above, the techniques for applying Embodiment 1 signals the 3D objects for the respective portions in the Scene Description to allow the 3D objects to be individually accessed. However, this technique fails to allow determination of whether or not the 3D objects originally constitute one body.

### <9-2: Embodiment 7-2>

### <Signaling Whole Body in Scene Description and Signaling That Body Includes Plural 3D Objects>

Thus, information indicating the presence of one body may exclusively be signaled in the Scene Description, and further signaling may be provided to allow access to plural pieces of media data and texture data in the MPD.

For example, as illustrated in FIG. 85, only information regarding the whole body A is signaled in the Scene Description data 121. Then, in the access information in the BitWrapper node and the MovieTexture node for the body A, plural pieces of mesh data or texture data in the MPD file 122 for DASH are signaled to allow all pieces of the mesh data and the texture data to be utilized.

### <9-3: Embodiment 7-2-1>

### <Case Where AdaptationSet Is Provided for Each of Levels of Detail for 3D Objects for Respective Portions>

As in the examples illustrated in FIG. 12 and FIG. 13, a configuration providing AdaptationSet for each Level of Detail may be used to express a body including plural 3D objects. In this case, to indicate that the body includes plural 3D objects, plural AdaptationSets need to be signaled from the access information in the BitWrapper node 15 and the MovieTexture node 16 in the Scene Description data 121.

### <9-4: Embodiment 7-2-1-1>

### <URL Query Is Enhanced to Signal Plural AdaptationSets>

Enhancement may be provided to allow access, from the BitWrapper node including the access information for the mesh data regarding the body in the Scene Description or the MovieTexture node including the access information for the texture data, to the AdaptationSets for the mesh data or the texture data in plural portions of the MPD file, to indicate that the AdaptationSets need to be simultaneously utilized.

The BitWrapper node and the MovieTexture node use URLs to signal access information for external media data. A structure example of the BitWrapper node and the MovieTexture node in MPEG-4 Scene Description (ISO/IEC 14496-11) is as illustrated in FIG. 2. A field used for accessing the external media data is the url field for both nodes. In the present embodiment, the syntax for the BitWrapper node and the MovieTexture node is not enhanced, and a notation method for each url field is enhanced.

In the present embodiment, the URL indicated by the url field and the URL to the MPD file are signaled and plural AdaptationSet@ids are signaled using the URL parameter, indicating that the URLs and the AdaptationSet@ids need to be simultaneously utilized. Specifically, for example, a variable "requiredASList" of the URL parameter representing the AdaptationSet is used to signal, using the value of the variable and semicolon delimiters, AdaptationSet@ids for the texture data or the mesh data regarding the partial 3D objects constituting the body. For example, in a case where the body A includes AdaptationSet@id=1, 2, 3, 4, a URL with the URL parameter is specified in the URL of the node as in the following example.
Example of the URL: http://www.6dofserver.com/6dof.mpd?requiredASList=1;2;3;4

### <9-5: Embodiment 7-2-1-2>

### <Nodes in Scene Description Are Enhanced>

Enhancement may be provided to add, to the BitWrapper node or the MovieTexture node in the Scene Description data, a field indicating the AdaptationSet@ids for the texture data or the mesh data regarding plural partial 3D objects constituting the body. In this case, the url field describes the access information for the MPD file.

For example, as illustrated in FIG. 86, a new field RequiredAdaptationSetIds is added to the BitWrapper node 15 and the MovieTexture node 16 in the Scene Description data and used to store, as an array of strings, the @ids of the AdaptationSets required to constitute the body.

Additionally, the enhancement example of the BitWrapper node and the MovieTexture node has been described, but similar fields may be provided in any other nodes as enhancement.

### <9-6: Embodiment 7-2-1-3>

### <Signaling Is Provided Using MPD Enhancement + URL Query or Node Enhancement>

In the MPD, identifiers may be signaled to allow identification of AdaptationSets for partial 3D objects constituting one body, and the identifiers may be signaled from the Scene Description.

For example, an id indicating mesh data regarding a certain body may be signaled in the AdaptationSet. In this case, the id is varied depending on each texture and mesh and on each Level of Detail.

For example, the SupplementalProperty description is signaled in the AdaptationSet, and the schemeIdUri is used to signal "ObjectPartsId." This indicates that one body is indicated by AdaptationSets corresponding to portions of the 3D object and including the same "value" value. The "value" contains a value for identification.
Example: <SupplementalProperty schemeIdUri="ObjectPartsID" value="1">

Further, FIG. 87 illustrates the MPD in which the body A includes four partial 3D objects. In this example, only the mesh data is illustrated.

### <Modified Example>

The Period may be used to signal a group of the partial 3D objects constituting the body. For example, the schemeIdUri is used to indicate ObjectPartsGroup. The grouping information newly adds OPG for each group as an element of the SupplementalProperty. The OPG includes an id (the same meaning as that of the value in the ObjectPartsId) and a list of the ids of the AdaptationSets included in the group.

FIG. 88 illustrates an example of this signaling. In FIG. 88, the mesh data regarding the body A includes four AdaptationSets, and the member of the OPG links the four AdaptationSets@id together.

### <Signaling of the Scene Description>

As the access information in the BitWrapper node and the MovieTexture node in the Scene Description, the value of the ObjectPartsID in the MPD or the value of the id of the OPG element may be indicated.

For example, in the Url field in the BitWrapper node and the MovieTexture node, the URL query is used to indicate the value in the URL of the MPD. A variable "ObjectPartId" of the URL parameter is used to indicate the ObjectPartsID in the MPD or the id of the OPG element using the value of the variable. In the example in FIG. 87 or FIG. 88, a URL with the URL parameter is specified as the URL of the node as in the example below.
Example of the URL: http://www.6dofserver.com/6dof.mpd?ObjectPartId=1

Another signaling corresponds to a technique for adding, to the BitWrapper node and the MovieTexture node, a field indicating the ObjectPartId. As illustrated in FIG. 89, the ObjectPartId is added, and the value of the ObjectPartId is used to indicate the ObjectPartId in the MPD or the id of the OPG element.

Additionally, the enhancement example of the BitWrapper node and the MovieTexture node has been described above, but similar fields may be provided in any other nodes as enhancement.

### <9-7: Embodiment 7-2-2>

### <One AdaptationSet Is Provided Regardless of Levels of Detail for 3D Objects for Respective Portions>

As illustrated in FIG. 21 and FIG. 22, a body may include plural 3D objects in a configuration in which one AdaptationSet is used to signal the 3D object for the same portion regardless of the Level of Detail.

In this case, to indicate that the body A includes plural 3D objects, plural AdaptationSets and plural Representations for each of the AdaptationSets need to be signaled from the access information in the BitWrapper node and the MovieTexture node in the Scene Description.

### <9-8: Embodiment 7-2-2-1>

### <Enhancement Is Provided Using URL Query>

The Scene Description provides signaling for each body, and thus AdaptationSets for the 3D objects for all the portions and Representations for the bit rate variation for the appropriate LOD, which are included in the AdaptationSets, need to be indicated from the BitWrapper node corresponding to a node indicating the mesh in the Scene Description data and the MovieTexture node corresponding to a node indicating the texture.

Thus, the access information (for example, URLs) for the BitWrapper node and the MovieTexture node in the Scene Description data is enhanced.

More specifically, the AdaptationSet@ids for the 3D objects for all the portions and the Representation@ids utilized in the AdaptationSet@ids are indicated by the AdaptationSets and a variable "requiredASRSList" of the URL parameter representing the Representations included in the AdaptationSets, and the value of the variable.

For example, the variable "requiredASRSList" of the URL parameter is used to indicate, using the value of the variable, the texture data or the mesh data regarding the partial 3D objects constituting the body. As the value, the AdaptationSet@ids are delimited by colons and followed by the Representation@ids that are utilized being delimited by colons. Further, for signaling of plural AdaptationSets, the AdaptationSets are delimited by semicolons for signaling. For example, in a case where the body A includes AdaptationSet@id=1, 2, 3, 4, AdaptationSet@id=1 utilizes Representation@id=11,12, AdaptationSet@id=2 utilizes Representation@id=21,22, AdaptationSet@id=3 utilizes Representation@id=31,32, and AdaptationSet@id=4 utilizes Representation@id=41,42, a URL with the URL parameter is specified as the URL of the node.
http://www.6dofserver.com/6dof.mpd?requiredASRSList=1:11, 12;2:21,22;3:31,32;4:41,42

### <9-9: Embodiment 7-2-2-2>

### <Nodes in Scene Description Are Enhanced>

Enhancement may be provided to add, to the BitWrapper node and the MovieTexture node in the Scene Description data, a field indicating plural AdaptationSet@ids constituting the body and Representation@ids for the bit rate variation. In this case, the url field describes the access information for the MPD file.

As illustrated in FIG. 90, the requiredASRSList field is added to the BitWrapper node 15 and the MovieTexture node 16 in the Scene Description data. As the value of the field, plural strings that include AdaptationSet@ids delimited by colons and followed by Representation@ids delimited by commas, are stored. This is a structure utilized in Embodiment 7-2-2-1.

Additionally, the enhancement example of the BitWrapper node and the MovieTexture node has been described above, but similar fields may be provided in any other nodes as enhancement.

### <9-10: Embodiment 7-2-2-3>

### <Signaling Is Provided Using MPD Enhancement + URL Query or Node Enhancement>

The RepresentationGroup of Embodiment 1-1-2-2 may be used to provide enhancement for allowing a plurality of 3D objects to be signaled from the Scene Description.

Additionally, in the Scene Description data, a plurality of groups of Representations of Embodiment 1-1-2-2 is indicated in the access information (URL) in the BitWrapper node and the MovieTexture node.

A plurality of parameters indicating AdaptationSets and a plurality of parameters indicating Representationgroups are signaled in the URL parameter in the MPD file. For example, the requiredASRGList is used as the URL parameter, and as the value, the AdaptationSet@id is indicated, with the ids in the RepresentationGroup indicated using colons. To indicate the 3D objects for a plurality of portions, semicolons are used for delimitation. An example of the URL is illustrated below.
Example of the URL: http://www.6dofserver.com/6dof.mpd?requiredASRGList =1:1;2:1;3:1;4:1

As a modified example, the BitWrapper node or the MovieTexture node may be enhanced. As in the enhancement in Embodiment 7-2-2-2, the requiredASRGList described above is added as the BitWrapper node or the MovieTexture node.

Additionally, in a modified example, the ObjectPartId of Embodiment 7-2-1-3 may be signaled in the Representation. At this time, the different LODs are assigned the respective ids. Accordingly, signaling similar to the signaling in Embodiment 7-2-1-3 can be provided. For signaling in the Period as in Embodiment 7-2-1-3, the SupplementalProperty as described below may be added. OPGmember element is newly added to the OPG element, and AdaptationSet@ids for the respective partial 3D objects and Representation@ids for the bit rate variation are signaled in ASId and RSId.
<SupplementalProperty schemeIdUri="ObjectPartsGoup" >
<OPG id="1">//Group of meshes for partial 3D objects constituting the body A
<OPGmember ASid="1" RSid="11,12">
<OPGmember ASid="2" RSid="21,22">
<OPGmember ASid="3" RSid="31,32">
<OPGmember ASid="4" RSid="41,42">
</OPG>
<OPG id="2">// Group of textures for partial 3D objects constituting the body A
//The rest is Omitted.
</SupplementalProperty>

### <10. Supplementary Feature>

### <Conclusion>

The technique of each of the embodiments described above can be combined with or selectively used along with the technique of another embodiment as appropriate.

Application of the present disclosure as described above enables bit rate adaptation in the distribution of 6DoF content, allowing suppression of interrupted reproduction in a case where the transmission band is limited. Specifically, the robustness of content reproduction can be improved.

Additionally, the client apparatus 103 enables bit rate selection with the relative quality between the 3D objects maintained.

Further, a combination of 3D objects that corresponds to a bit rate even lower than the lowest bit rate based on a combination of 3D objects determined by the view-point position can be selected, enabling uninterrupted reproduction even with a narrower transmission band.

Additionally, the client apparatus 103 can reduce the Levels of detail for the 3D objects in the order intended by the content author or the like, allowing display of scenes reflecting the intent of the content author or the like.

Further, the present disclosure is useful for algorithm selection in which the bit rate for each object is increased (reduced) when the band changes.

Additionally, the client can reduce the overall bit rate with the Level of Detail for the 3D object of interest to the user maintained as much as possible. The Level of Detail for the 3D object of interest can be maintained.

### <Computer>

The series of steps of processing described above can be caused to be executed by hardware or by software. In a case where the series of steps of processing is executed by software, a program constituting the software is installed in a computer. In this regard, the computer includes a computer integrated into dedicated hardware, a computer that can perform various functions when various programs are installed in the computer, for example, a general-purpose personal computer, or the like.

FIG. 91 is a block diagram illustrating a configuration example of hardware of the computer executing the series of steps of processing described above according to programs.

In a computer 900 illustrated in FIG. 91, a CPU (Central Processing Unit) 901, a ROM (Read Only Memory) 902, and a RAM (Random Access Memory) 903 are mutually connected via a bus 904.

An input/output interface 910 is also connected to the bus 904. An input section 911, an output section 912, a storage section 913, a communication section 914, and a drive 915 are connected to the input/output interface 910.

The input section 911 includes, for example, a keyboard, a mouse, a microphone, a touch panel, an input terminal, and the like. The output section 912 includes, for example, a display, a speaker, an output terminal, and the like. The storage section 913 includes, for example, a hard disk, a RAM disk, a nonvolatile memory, and the like. The communication section 914 includes, for example, a network interface. The drive 915 drives a removable medium 921 such as a magnetic disk, an optical disc, a magneto-optical disk, or a semiconductor memory.

In the computer configured as described above, the above-described series of steps of processing is executed by the CPU 901 by loading a program stored in the storage section 913, into the RAM 903 via the input/output interface 910 and the bus 904 and executing the program, for example. The RAM 903 also stores, as appropriate, data required for the CPU 901 to execute various types of processing.

The program executed by the computer (CPU 901) can be recorded in a removable medium 921 used as a package medium or the like and can then be applied. In that case, by mounting the removable medium 921 in the drive 915, the program can be installed in the storage section 913 via the input/output interface 910.

Additionally, the program can be provided via a wired or wireless transmission medium such as a local area network, the Internet, or digital satellite broadcasting. In that case, the program can be received by the communication section 914 and installed in the storage section 913.

Besides, the program can be installed in the ROM 902 or the storage section 913 in advance.

### <Application Target of Present Technology>

The present technology can be applied to any image encoding and decoding scheme. In other words, any specifications can be used for various types of processing related to image encoding and decoding, such as transformation (inverse transformation), quantization (inverse quantization), encoding (decoding), and prediction as long as the specifications are not inconsistent with the present technology described above, and the specifications are not limited to the examples described above. Additionally, part of the processing may be omitted as long as the omission is not inconsistent with the present technology described above.

An image processing apparatus, an image encoding apparatus, and an image decoding apparatus according to the embodiments described above may be applied to various kinds of electronic equipment, for example, a transmitter and a receiver (for example, a television receiver and a cellular phone) in satellite broadcasting, wired broadcasting such as cable TV, distribution on the Internet, and distribution to terminals by cellular communication, or an apparatus (for example, a hard disk recorder or a camera) recording images in media such as an optical disc, a magnetic disk, and a flash memory and reproducing the images from these recording media.

Additionally, the present technology can be implemented as any configuration mounted in an apparatus constituting any apparatus or system, for example, a processor (for example, a video processor) used as a system LSI (Large Scale Integration) or the like, a module (for example, a video module) using a plurality of processors or the like, a unit (for example, a video unit) using a plurality of modules or the like, a set (for example, a video set) corresponding to the unit to which any other function is further added (that is, a configuration corresponding to a part of the apparatus).

Further, the present technology can also be applied to a network system including a plurality of apparatuses. For example, the present technology can be applied to a cloud service providing services related to images (moving images) to any terminal such as a computer, AV (Audio Visual) equipment, a portable information processing terminal, and an IoT (Internet of Things) device.

Note that a system, an apparatus, a processing section, and the like to which the present technology is applied can be utilized in any fields, for example, traffic, medical care, crime prevention, agriculture, livestock industry, mining industry, beauty care, factories, home electrical appliances, meteorology, nature monitoring, and the like. Additionally, the system, the apparatus, the processing section, and the like can be applied for any use.

The present technology can be applied to, for example, a system and a device used to provide content for viewing and the like. Additionally, the present technology can be applied to, for example, a system and a device used for traffic, specifically, administration of traffic situation, automatic operation control, and the like. Further, the present technology can be applied to, for example, a system and a device used for security. Additionally, the present technology can be applied to, for example, a system or a device used for automatic control of a machine or the like. Further, the present technology can be applied to, for example, a system or a device used for agriculture or livestock industry. Additionally, the present technology can be applied to, for example, a system or a device monitoring the state of nature such as volcanoes, forests, or seas, wildlife, or the like. Further, the present technology can be applied to, for example, a system and a device used for sports.

### <Miscellaneous>

Note that the "flag" as used herein refers to information for identifying plural states and includes information enabling three or more states to be identified as well as information used to identify two states of true (1) or false (0). Consequently, the values that may be taken by the "flag" may be, for example, two values of 1/0 or three or more values. In other words, any number of bits constitute the "flag," and one or more bits may constitute the flag. Additionally, the identification information (including flags) is assumed to be not only in a form in which the bit stream includes the identification information but also in a form in which a bit stream includes information regarding a difference of the identification information from information corresponding to a certain reference, and thus, the "flag" and "identification information" as used herein include not only that information but also difference information with respect to information corresponding to a reference.

Additionally, various pieces of information (metadata and the like) regarding encoded data (bit stream) may be transmitted or recorded in any form as long as the information is associated with the encoded data. Here, the term "associate" means that, for example, when one of the data is processed, the other data may be utilized (linked). In other words, data associated with each other may be integrated into one piece of data or used as individual pieces of data. For example, information associated with encoded data (image) may be transmitted on a transmission path different from the transmission path on which the encoded data (images) is transmitted. Additionally, for example, the information associated with the encoded data (image) may be recorded in a recording medium different from the recording medium (or in another recording area in the same recording medium) in which the encoded data (image) is recorded. Note that this "association" covers a part of data instead of the entire data. For example, an image and information corresponding to the image may be associated with each other in any units such as units of plural frames, one frame, or a part of the frame.

Note that the terms such as "synthesize," "multiplex," "add," "integrate," "include," "store," "put into," "plug into," and "insert" mean that plural things are integrated into one, for example, encoded data and metadata are integrated into one piece of data, and mean one method for the "association" described above.

Additionally, the embodiment of the present technology is not limited to the embodiments described above, and various changes may be made to the embodiments without departing from the spirits of the present technology.

Additionally, for example, a configuration described as one apparatus (or processing section) may be divided and configured into plural apparatuses (or processing sections). In contrast, a configuration described as plural apparatuses (or processing sections) may be integrated and configured into one apparatus (processing section). Additionally, needless to say, components other than those described above may be added to the configuration of each apparatus (or each processing section). Further, a part of the configuration of a certain apparatus (or processing section) may be included into the configuration of another apparatus (or another processing section) as long as the configuration and operation of the system as a whole remain substantially the same.

Note that the system as used herein means a set of plural components (apparatuses, modules (parts), and the like) regardless of whether or not all the components are located in the same housing. Consequently, plural apparatuses housed in different housings and connected via a network and one apparatus with plural modules housed in one housing are both systems.

Additionally, for example, the present technology can take a configuration of cloud computing in which one function is shared and cooperatively processed by plural apparatuses via a network.

Additionally, for example, the above-described program can be executed in any apparatus. In that case, it is sufficient if the apparatus includes required functions (functional blocks and the like) and be allowed to be able to obtain required information.

Additionally, for example, the steps described with reference to the above-described flowcharts can be executed by one apparatus and can also be shared by plural apparatuses for execution. Further, in a case where one step includes plural sub-steps of processing, the plural sub-steps of processing included in the one step can be executed by one apparatus and can also be shared by plural apparatuses for execution. In other words, the plural sub-steps of processing included in the one step can be executed as processing in plural steps. In contrast, the processing described as plural steps can be integrated into one step for execution.

Note that, for the program executed by the computer, processing in steps describing the program may be executed on a time-series basis along the order described herein or executed in parallel or individually at required timings such as when the program is invoked. In other words, the steps of processing may be executed in an order different from the order described above unless the different order leads to inconsistency. Further, the processing in the steps describing the program may be executed in parallel with or in combination with processing by another program.

Note that the plural present technologies described herein can be dependently and unitarily executed unless the execution leads to inconsistency. Needless to say, any of the plural present technologies can be executed together. For example, a part or all of the present technology described in one of the embodiments can be combined with a part or all of the present technology described in another embodiment. Additionally, a part or all of any of the present technologies described above can be executed along with another technology not described above.

Note that the present technology can take the configurations described below.
(1) An information processing apparatus including:
   a generation section that generates metadata regarding content expressing a three-dimensional object in a three-dimensional space and enabling a line-of-sight direction and a view-point position to be freely set at a time of reproduction, the metadata including information enabling a bit rate to be selected at a time of distribution of the content.
(2) The information processing apparatus according to (1), in which the generation section generates the metadata including, as the information, access information for a control file controlling reproduction of the content.
(3) The information processing apparatus according to (2), in which
   the control file includes an MPD (Media Presentation Description), and
   the generation section generates the metadata including access information for an AdaptationSet, the AdaptationSet corresponding to a Level of Detail for the three-dimensional object in the MPD and including information related to a bit rate variation of a plurality of bit rates for the Level of Detail.
(4) The information processing apparatus according to (2) or (3), in which
   the control file includes an MPD (Media Presentation Description), and
   the generation section generates the metadata including access information for a representation corresponding to a Level of Detail for the three-dimensional object in an AdaptationSet corresponding to the three-dimensional object in the MPD, the representation including information related to a bit rate variation of a plurality of bit rates for the Level of Detail.
(5) The information processing apparatus according to (4), in which the generation section generates the metadata including the access information including access information for the MPD desired, information specifying an AdaptationSet desired in the MPD, and information specifying a Representation desired in the AdaptationSet.
(6) The information processing apparatus according to (4) or (5), in which the generation section generates the MPD including information used to group identical bit rate variations.
(7) The information processing apparatus according to any one of (2) to (6), in which the generation section generates the MPD including no access information for the metadata.
(8) The information processing apparatus according to any one of (1) to (7), in which
   the metadata is spatial display control information regarding the content and based on a view-point position, and
   the generation section generates spatial display control information based on the view-point position and including, as a node, information enabling a bit rate to be selected at a time of distribution of the content.
(9) The information processing apparatus according to (8), in which the generation section generates spatial display control information based on the view-point position and including a dedicated node expressing a bit rate variation of a plurality of bit rates for the three-dimensional object as a plurality of child nodes.
(10) The information processing apparatus according to (8) or (9), in which the generation section generates spatial display control information based on the view-point position and including a node including an added field expressing a bit rate variation of a plurality of bit rates for the three-dimensional object as a plurality of child nodes.
(11) The information processing apparatus according to any one of (1) to (10), in which the generation section generates the metadata further including information indicating that uniform control of bit rates for all three-dimensional objects enables quality to be maintained.
(12) The information processing apparatus according to any one of (1) to (11), in which the generation section generates the metadata further including information indicating relative quality between the three-dimensional objects.
(13) The information processing apparatus according to (12), in which the generation section generates the metadata including, as the information indicating the relative quality between the three-dimensional objects, a QualityRanking indicating quality of each bit rate variation for the three-dimensional objects in form of ranking.
(14) The information processing apparatus according to (12) or (13), in which the generation section generates the metadata including, as the information indicating the relative quality between the three-dimensional objects, a Quality value indicating, as a value, quality of each bit rate variation for the three-dimensional objects
(15) The information processing apparatus according to any one of (12) to (14), in which the generation section generates the metadata including, as the information indicating the relative quality between the three-dimensional objects, information indicating each bit rate variation for the three-dimensional objects enabled to be simultaneously reproduced.
(16) The information processing apparatus according to any one of (1) to (15), in which the generation section generates the metadata further including information indicating that, in spite of a change in Levels of Detail for the three-dimensional objects, the relative quality between the three-dimensional objects is enabled to be maintained.
(17) The information processing apparatus according to any one of (1) to (16), in which the generation section generates the metadata further including information indicating that, in spite of a change in Levels of Detail for the three-dimensional objects based on information indicating relative quality between the three-dimensional objects, the relative quality between the three-dimensional objects is enabled to be maintained.
(18) The information processing apparatus according to any one of (1) to (17), in which the generation section generates the metadata further including information indicating importance of the three-dimensional object.
(19) The information processing apparatus according to any one of (1) to (18), in which the generation section generates the metadata further including information specifying importance of a three-dimensional object of interest.
(20) An information processing method including:
   generating metadata regarding content expressing a three-dimensional object in a three-dimensional space and enabling a line-of-sight direction and a view-point position to be freely set at a time of reproduction, the metadata including information enabling a bit rate to be selected at a time of distribution of the content.

### [Reference Signs List]

100: Distribution system
101: File generation apparatus
102: Web server
103: Client apparatus
151: Control section
152: File generation section
161: Data input section
162: Scene Description generation section
163: Media data generation section
164: MPD file generation section
165: Segment file generation section
166: Recording section
167: Upload section
171: Control section
172: Reproduction processing section
181: MPD file acquisition section
182: MPD file processing section
183: Secene Description segment file acquisition section
184: Scene Description segment file processing section
185: Display control section
186: Measurement section
187: Media data segment file selection section
188: Media data segment file acquisition section
189: Decode processing section
190: Display information generation section
191: Display section

## Claims

1. An information processing apparatus comprising:
a generation section that generates metadata regarding content expressing a three-dimensional object in a three-dimensional space and enabling a line-of-sight direction and a view-point position to be freely set at a time of reproduction, the metadata including information enabling a bit rate to be selected at a time of distribution of the content.

2. The information processing apparatus according to claim 1, wherein the generation section generates the metadata including, as the information, access information for a control file controlling reproduction of the content.

3. The information processing apparatus according to claim 2, wherein
the control file includes an MPD (Media Presentation Description), and
the generation section generates the metadata including access information for an AdaptationSet, the AdaptationSet corresponding to a Level of Detail for the three-dimensional object in the MPD and including information related to a bit rate variation of a plurality of bit rates for the Level of Detail.

4. The information processing apparatus according to claim 2, wherein
the control file includes an MPD (Media Presentation Description), and
the generation section generates the metadata including access information for a representation corresponding to a Level of Detail for the three-dimensional object in an AdaptationSet corresponding to the three-dimensional object in the MPD, the representation including information related to a bit rate variation of a plurality of bit rates for the Level of Detail.

5. The information processing apparatus according to claim 4, wherein the generation section generates the metadata including the access information including access information for the MPD desired, information specifying an AdaptationSet desired in the MPD, and information specifying a Representation desired in the AdaptationSet.

6. The information processing apparatus according to claim 4, wherein the generation section generates the MPD including information used to group identical bit rate variations.

7. The information processing apparatus according to claim 2, wherein the generation section generates the MPD including no access information for the metadata.

8. The information processing apparatus according to claim 1, wherein
the metadata is spatial display control information regarding the content and based on a view-point position, and
the generation section generates spatial display control information based on the view-point position and including, as a node, information enabling a bit rate to be selected at a time of distribution of the content.

9. The information processing apparatus according to claim 8, wherein the generation section generates spatial display control information based on the view-point position and including a dedicated node expressing a bit rate variation of a plurality of bit rates for the three-dimensional object as a plurality of child nodes.

10. The information processing apparatus according to claim 8, wherein the generation section generates spatial display control information based on the view-point position and including a node including an added field expressing a bit rate variation of a plurality of bit rates for the three-dimensional object as a plurality of child nodes.

11. The information processing apparatus according to claim 1, wherein the generation section generates the metadata further including information indicating that uniform control of bit rates for all three-dimensional objects enables quality to be maintained.

12. The information processing apparatus according to claim 1, wherein the generation section generates the metadata further including information indicating relative quality between the three-dimensional objects.

13. The information processing apparatus according to claim 12, wherein the generation section generates the metadata including, as the information indicating the relative quality between the three-dimensional objects, a QualityRanking indicating quality of each bit rate variation for the three-dimensional objects in form of ranking.

14. The information processing apparatus according to claim 12, wherein the generation section generates the metadata including, as the information indicating the relative quality between the three-dimensional objects, a Quality value indicating, as a value, quality of each bit rate variation for the three-dimensional objects.

15. The information processing apparatus according to claim 12, wherein the generation section generates the metadata including, as the information indicating the relative quality between the three-dimensional objects, information indicating each bit rate variation for the three-dimensional objects enabled to be simultaneously reproduced.

16. The information processing apparatus according to claim 1, wherein the generation section generates the metadata further including information indicating that, in spite of a change in Levels of Detail for the three-dimensional objects, the relative quality between the three-dimensional objects is enabled to be maintained.

17. The information processing apparatus according to claim 1, wherein the generation section generates the metadata further including information indicating that, in spite of a change in Levels of Detail for the three-dimensional objects based on information indicating relative quality between the three-dimensional objects, the relative quality between the three-dimensional objects is enabled to be maintained.

18. The information processing apparatus according to claim 1, wherein the generation section generates the metadata further including information indicating importance of the three-dimensional object.

19. The information processing apparatus according to claim 1, wherein the generation section generates the metadata further including information specifying importance of a three-dimensional object of interest.

20. An information processing method comprising:
generating metadata regarding content expressing a three-dimensional object in a three-dimensional space and enabling a line-of-sight direction and a view-point position to be freely set at a time of reproduction, the metadata including information enabling a bit rate to be selected at a time of distribution of the content.
